# EUROPÄISCHE PATENTSCHRIFT

(11) **EP 4 201 376 B1**
(45) Veröffentlichungstag und Bekanntmachung des Hinweises auf die Patenterteilung: **13.05.2026**
(21) Anmeldenummer: 22211201.3
(22) Anmeldetag: 11.10.2018
(51) Int. Cl.: A61C 17/22

(54) **ELEKTRISCHES ZAHNBÜRSTENHANDTEIL UND ELEKTRISCHE ZAHNBÜRSTE**
ELECTRIC TOOTHBRUSH HANDPIECE AND ELECTRIC TOOTHBRUSH
PARTIE MANUELLE DE BROSSE À DENTS ÉLECTRIQUE ET BROSSE À DENTS ÉLECTRIQUE

(30) Priorität: 11.10.2017 EP 17195869
(43) Veröffentlichungstag der Anmeldung: 28.06.2023
(62) Teilanmeldung aus: 18785952.5
(73) Patentinhaber: Trisa Holding AG, 6234 Triengen (CH)
(72) Erfinder: Zwimpfer, Martin, 6004 Luzern (CH); Kirchhofer, Pierre Fredy, 6205 Eich (CH); Fischer, Herbert, 5057 Reitnau (CH)
(74) Vertreter: Daub, Thomas

(56) Entgegenhaltungen:
- WO-A1-2014/037856
- WO-A1-2015/159250
- WO-A1-2017/008038
- WO-A1-90/09123
- CN-B- 105 411 712
- CN-U- 201 676 306
- CN-U- 206 198 074

## Beschreibung

### Stand der Technik

Die Erfindung betrifft ein elektrisches Zahnbürstenhandteil und eine elektrische Zahnbürste mit dem elektrischen Zahnbürstenhandteil und mit einer Aufsteckbürste. Es sind bereits Aufsteckbürsten für ein Zahnbürstenhandteil, elektrische Zahnbürstenhandteile und elektrische Zahnbürsten vorgeschlagen worden, wie beispielsweise in der CN 201966781 U, der DE 10 2012 006 723 A1, der EP 0 893 106 A2, der EP 2 234 561 B1, der US 9,237,943 B2, der US 2002/056402 A1 und der WO 95/33419 A1.

Aus der US 2011/0107536 A1 ist bereits eine Aufsteckbürste für ein Zahnbürstenhandteil, mit einem Kopfabschnitt, der einen Bürstenkopf umfasst, mit einem Aufsteckabschnitt, der eine Schnittstellenaufnahme umfasst und mit einem zwischen dem Kopfabschnitt und dem Aufsteckabschnitt angeordneten Halsabschnitt, bekannt.

Aus der JP 2012-165954 A ist bereits ein elektrisches Zahnbürstenhandteil mit zumindest einer Schnittstelle zu einer Kopplung mit einer Aufsteckbürste, mit zumindest einem Gehäuse, mit zumindest einer in dem Gehäuse aufgenommenen Antriebseinheit zu einem Antrieb der Schnittstelle und mit zumindest einem Energiespeicher zu einer Versorgung der Antriebseinheit mit Energie, bekannt.

Aus der CN 206 198 074 U ist bereits ein elektrisches Zahnbürstenhandteil mit zumindest einem Gehäuse mit zumindest einer in dem Gehäuse aufgenommenen Antriebseinheit, mit einem Energiespeicher zu einer Versorgung der Antriebseinheit mit Energie und mit einer Platine bekannt, wobei das elektrische Zahnbürstenhandteil eine erste Rahmeneinheit umfasst, an welcher die Platine und der Energiespeicher angeordnet ist, und wobei das elektrische Zahnbürstenhandteil eine von der ersten Rahmeneinheit getrennt ausgebildete zweite Rahmeneinheit umfasst, an welcher die Antriebseinheit angeordnet ist.

WO 2015/159250 A1 offenbart ein elektrisches Zahnbürstenhandteil mit einer Schnittstelle zu einer Kopplung mit einer Aufsteckbürste, und mit einer, in einem Gehäuse angeordneten, festen, einstückig ausgeführten Rahmeneinheit, welche eine Antriebseinheit und einen Energiespeicher in entsprechenden Aufnahmebereichen aufnimmt, wobei sich die Rahmeneinheit axial über die gesamte Antriebseinheit und den gesamten Energiespeicher erstreckt, und wobei eine Ladespule um Verbindungslaschen an der Außenseite des proximal Endes der Rahmeneinheit angebracht ist und durch eine Brückenfeder in elastischem Druckkontakt mit der Rahmeneinheit steht.

Die Aufgabe der Erfindung besteht insbesondere darin, vorteilhafte Eigenschaften hinsichtlich einer variablen und/oder leicht zu montierenden und/oder vorteilhaft kompakten Ausgestaltung und/oder einer effizienten Bewegungsübertragung vom Antrieb auf die Aufsteckbürste und/oder einer kostengünstigen Herstellbarkeit und/oder hohe Reinigungsleistung bei geringem Verletzungspotential zu erzielen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem elektrischen Zahnbürstenhandteil mit zumindest einer Schnittstelle zu einer Kopplung mit einer Aufsteckbürste mit zumindest einem Gehäuse, mit zumindest einer in dem Gehäuse aufgenommenen Antriebseinheit zu einem Antrieb der Schnittstelle und mit zumindest einem Energiespeicher zu einer Versorgung der Antriebseinheit mit Energie,
und mit einer, in dem Gehäuse angeordneten, festen, einstückig ausgeführten Rahmeneinheit, welche die Antriebseinheit und den Energiespeicher aufnimmt, wobei die Rahmeneinheit mehrere Aufnahmebereiche zumindest für die Antriebseinheit und den Energiespeicher ausbildet, welche, sowohl in einem montierten Zustand, als auch in einem unmontierten Zustand der Rahmeneinheit, definiert relativ zueinander positioniert sind, wobei sich die Rahmeneinheit axial über die gesamte Antriebseinheit und den gesamten Energiespeicher erstreckt,
wobei zumindest eine Ladespule zu einem Aufladen des Energiespeichers in der festen Rahmeneinheit aufgenommen ist, wobei ein komprimierbares Längenausgleichselement zu einem Längenausgleich zum Auffangen von Toleranzen zwischen der Ladespule und der Rahmeneinheit angebracht ist.

Bevorzugt ist die Antriebseinheit insbesondere von einem Motor gebildet. Ferner ist der Energiespeicher insbesondere von einem Akkumulator gebildet. Grundsätzlich wäre jedoch auch eine andere, einem Fachmann als sinnvoll erscheinende Ausgestaltung des Energiespeichers denkbar, wie beispielsweise als Batterie. Vorzugsweise ist die Rahmeneinheit insbesondere sowohl zu einer Aufnahme einer einzelnen Energiespeicherzelle, wie insbesondere einer AA-Energiespeicherzelle, als auch zu einer Aufnahme von drei Energiespeicherzellen gleichzeitig, insbesondere von drei AAA-Energiespeicherzellen, vorgesehen. Bevorzugt ist für drei Energiespeicherzellen ein Rahmen vorgesehen, welcher die drei Energiespeicherzellen aufnimmt und in einen Aufnahmebereich der Rahmeneinheit für die einzelne Energiespeicherzelle passt.

Unter einem "Gehäuse" soll in diesem Zusammenhang insbesondere eine schützende Außenhülle des Zahnbürstenhandteils verstanden werden. Vorzugsweise umgibt das Gehäuse einen wesentlichen Teil des Zahnbürstenhandteils. Bevorzugt weist das Gehäuse zudem einen Griffbereich auf. Vorzugsweise bildet das Gehäuse einen Griff des Zahnbürstenhandteils aus. Das Gehäuse ist vorzugsweise von einem Kunststoffgehäuse gebildet. Grundsätzlich wäre jedoch auch ein anderes, einem Fachmann als sinnvoll erscheinendes Material denkbar. Ferner kann das Gehäuse sowohl einstückig, als auch insbesondere zweischalig ausgeführt sein. Vorzugsweise weist das Gehäuse zumindest aus einer Hartkomponente bestehende Bauteile, welche eine strukturtragende Funktion aufweisen, auf. Besonders bevorzugt besteht das Gehäuse insbesondere aus Hartkomponenten und Weichkomponenten, wobei mittels den Weichkomponenten insbesondere Griffflächen und Schaltflächen ausgebildet sind. Vorzugsweise bilden die Weichkomponenten eine Umspritzung der Hartkomponenten aus. Ferner soll in diesem Zusammenhang unter einer "festen Rahmeneinheit" insbesondere eine eine Stützstruktur ausbildende Einheit verstanden werden, die einstückig ausgeführt ist und/oder zumindest lediglich aus fest miteinander verbundenen Teilen besteht. Die feste Rahmeneinheit ist insbesondere von mehreren voneinander getrennten Einzelrahmen verschieden. Vorzugsweise bildet die Rahmeneinheit mehrere Aufnahmebereiche aus, insbesondere zumindest für die Antriebseinheit und den Energiespeicher, welche, insbesondere sowohl in einem montierten Zustand, als auch in einem unmontierten Zustand der Rahmeneinheit, definiert relativ zueinander positioniert sind. Die feste Rahmeneinheit ist insbesondere zu einer Ausbildung eines vorgefertigten Moduls vorgesehen, welches an einem Stück in das Gehäuse eingebaut/eingebracht werden kann.

Durch die erfindungsgemäße Ausgestaltung des elektrischen Zahnbürstenhandteils kann insbesondere eine vorteilhafte Montage des Zahnbürstenhandteils erreicht werden. Vorzugsweise kann durch die Rahmeneinheit insbesondere eine Vormontage der Bauteil in die Rahmeneinheit erreicht werden. Hierdurch kann insbesondere die Rahmeneinheit vollständig vormontiert in das Gehäuse eingesetzt werden, wodurch Montagefehler vermieden werden können. Vorzugsweise kann eine Verkabelung des elektrischen Zahnbürstenhandteils, insbesondere zumindest der Antriebseinheit und des Energiespeichers, vorzugsweise vollständig, außerhalb des Gehäuses erfolgen.

Wie oben definiert, weist das erfindungsgemäße elektrische Zahnbürstennhandteil zumindest eine Ladespule zu einem Aufladen des Energiespeichers auf, welche in der festen

Rahmeneinheit aufgenommen ist. Alternativ jedoch nicht erfindungsgemäß kann eine separate Rahmeneinheit der Ladespule gebildet werden, welche sich an die Rahmeneinheit montieren lässt. Die Montage kann hierbei ein Anstecken, Anschrauben, Ankleben etc. sein. Diese nicht erfindungsgemäße separate Rahmeneinheit der Ladespule trägt in sich die Ladespule sowie ein Ausgleichselement, welches von der Ladespule gegen den Energiespeicher gedrückt wird. Damit werden Längentoleranzen ausgeglichen und Stöße, beispielsweise wenn die Zahnbürste fallen gelassen wird, aufgefangen. Vorzugsweise weist die Rahmeneinheit einen Aufnahmebereich zu einer positionsfesten Aufnahme der Ladespule, insbesondere zumindest relativ zu dem Energiespeicher und/oder der Antriebseinheit, auf. Dadurch kann insbesondere eine vorteilhaft genaue Ausrichtung der Bauteile des Zahnbürstenhandteils relativ zueinander realisiert werden. Ferner kann dadurch eine vorteilhaft einfache Montage erreicht werden. Es kann insbesondere erreicht werden, dass die Rahmeneinheit vollständig vormontiert in das Gehäuse eingesetzt werden kann. Unter einer "Ladespule" soll in diesem Zusammenhang insbesondere eine Induktionsspule zu einer kabellosen Energieübertragung verstanden werden. Vorzugsweise wird in die Ladespule in einem Ladezustand mittels eines sich ändernden Magnetfelds eine Spannung induziert, mittels welcher der Energiespeicher geladen werden kann.

Es wird ferner vorgeschlagen, dass das elektrische Zahnbürstenhandteil eine Leiterplatte zu einer Steuerung der Antriebseinheit aufweist, welche zumindest teilweise formschlüssig durch die Rahmeneinheit aufgenommen ist und sich zumindest über einen Großteil einer axialen Erstreckung der Rahmeneinheit erstreckt. Vorzugsweise erstreckt sich die Leiterplatte über zumindest 50%, vorzugsweise über zumindest 70% und besonders bevorzugt über zumindest 90% einer axialen Erstreckung der Rahmeneinheit. Vorzugsweise weist die Rahmeneinheit eine axiale Erstreckung von zumindest 130 mm, vorzugsweise von zumindest 140 mm und bevorzugt von maximal 200 mm und besonders bevorzugt von maximal 170 mm auf. Ferner weist die Rahmeneinheit insbesondere eine Breite von zumindest 10 mm, vorzugsweise von zumindest 13 mm und bevorzugt von maximal 30 mm, besonders bevorzugt von maximal 25 mm auf. Zudem weist die Rahmeneinheit ferner insbesondere eine Höhe von zumindest 15 mm, vorzugsweise von zumindest 18 mm und bevorzugt von maximal 35 mm, besonders bevorzugt von maximal 28 mm auf. Bevorzugt ist die Leiterplatte insbesondere mittels Halteklammern der Rahmeneinheit formschlüssig an der Rahmeneinheit gehalten. Besonders bevorzugt ist die Leiterplatte von einer Printplatte gebildet. Es wäre jedoch auch eine andere, einem Fachmann als sinnvoll erscheinende Ausgestaltung der Leiterplatte denkbar. Vorzugsweise bildet die Leiterplatte eine Steuer- und/oder Regeleinheit und/oder eine Bedieneinheit des Zahnbürstenhandteils aus. Die Leiterplatte ist insbesondere zu einer Verbindung und Steuerung der elektrischen Funktionselemente des Zahnbürstenhandteils vorgesehen. Dadurch kann insbesondere eine großflächige Leiterplatte bereitgestellt werden. Hierdurch kann insbesondere eine vorteilhafte Anbindung an die Leiterplatte ermöglicht werden. Vorzugsweise kann dadurch insbesondere eine vollständige Integration der elektrisch funktionellen Teile in die Rahmeneinheit erreicht werden. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit zumindest einer elektronischen Schaltung verstanden werden, welche vorzugsweise aus Spannungs- und Vergleichsregelbausteinen besteht. Grundsätzlich kann die Steuerelektronik jedoch auch komplexer aufgebaut sein, wie insbesondere durch die Nutzung einer Prozessoreinheit und einer Speichereinheit sowie mit einem in der Speichereinheit gespeicherten Betriebsprogramm.

Vorzugsweise weist die Rahmeneinheit zu einer formschlüssigen Aufnahme der Leiterplatte zumindest zwei hakenförmige Formschlusselemente auf, welche dazu vorgesehen sind, die Leiterplatte in einem montierten Zustand teilweise zu übergreifen. Besonders bevorzugt weist die Leiterplatte für eine Montage an einer Außenkante zu den Formschlusselementen korrespondierende Ausnehmungen auf, über welche die Leiterplatte zu einer Montage an den Formschlusselementen vorbei in eine Endlage bewegt werden kann. Vorzugsweise wird die Leiterplatte bei einer Montage zu einer Endlage versetzt auf die Rahmeneinheit aufgesetzt, wobei die Leiterplatte mittels der Ausnehmungen an den Formschlusselementen vorbeigeführt werden kann. Anschließend wird die Leiterplatte insbesondere unter die Formschlusselemente geschoben und dadurch fixiert. Bevorzugt dienen die Formschlusselemente zusätzlich als Niederhalter, welche die Leiterplatte kraftschlüssig halten.

Es wird weiter vorgeschlagen, dass die Antriebseinheit zumindest einen Rotor aufweist, der zumindest ein einstückig ausgeführtes Käfigelement umfasst, welches zumindest einen Aufnahmebereich zu einer Aufnahme von zumindest einem Magneten aufweist. Vorzugsweise umfasst das Käfigelement zumindest zwei Aufnahmebereiche, die jeweils zu einer Aufnahme eines Magneten vorgesehen sind. Bevorzugt sind die Magneten jeweils von einem Permanentmagneten gebildet. Grundsätzlich wäre jedoch auch eine andere, einem Fachmann als sinnvoll erscheinende Ausgestaltung des Magneten denkbar. Bevorzugt ist der Rotor insbesondere zu einer Durchführung einer oszillierenden Bewegung vorgesehen. Besonders bevorzugt ist der Rotor insbesondere mit der Schnittstelle, vorzugsweise mit einer Achse der Schnittstelle gekoppelt, welche zu einer Übertragung einer Antriebsbewegung auf eine Aufsteckbürste vorgesehen ist. Dadurch kann insbesondere ein vorteilhafter Rotor bereitgestellt werden. Vorzugsweise kann dadurch insbesondere ein Rotor bereitgestellt werden, der zu einer direkten Aufnahme des zumindest einen Magneten vorgesehen ist. Hierdurch kann insbesondere eine Anzahl an Bauteilen vorteilhaft gering gehalten werden. Unter einem "Käfigelement" soll in diesem Zusammenhang insbesondere ein Element verstanden werden, welches zu einer umgreifenden Aufnahme des zumindest einen Magneten vorgesehen ist. Vorzugsweise bildet das Käfigelement insbesondere einen Aufnahmebereich aus, welcher in zumindest einer Ebene vollständig materiell von dem Käfigelement umschlossen ist.

Zudem wird vorgeschlagen, dass das Käfigelement einen, zumindest einen Aufnahmebereich für den zumindest einen Magneten umfassenden Grundkörper und auf beiden Seiten des Grundkörpers angeordnete Achsfortsätze aufweist, die eine Rotationsachse des Rotors ausbilden. Vorzugsweise umfasst der Grundkörper zumindest zwei nebeneinander angeordnete Aufnahmebereiche. Bevorzugt dienen die Achsfortsätze insbesondere zu einer Lagerung des Käfigelements in der Rahmeneinheit. Vorzugsweise ist der Grundkörper des Käfigelements über die Achsfortsätze drehbar an der Rahmeneinheit gelagert. Besonders bevorzugt dient zumindest einer der Achsfortsätze zudem zu einer Übertragung einer Antriebsbewegung des Grundkörpers auf die Schnittstelle. Vorzugsweise ist einer der Achsfortsätze direkt mit einer Achse der Schnittstelle gekoppelt. Dadurch kann insbesondere eine vorteilhafte Lagerung des Käfigelements erreicht werden. Ferner kann insbesondere eine Anzahl von Bauteilen gering gehalten werden. Es kann ferner eine vorteilhaft einfache und schnelle Montage des Zahnbürstenhandteils erreicht werden. Unter einer "Achse der Schnittstelle" soll in diesem Zusammenhang insbesondere eine aus einem Gehäuse des Zahnbürstenhandteils ragende Welle verstanden werden, welche zu einer direkten Übertragung einer Antriebsbewegung der Antriebseinheit des Zahnbürstenhandteils auf die Aufsteckbürste vorgesehen ist. Vorzugsweise ist die Achse der Schnittstelle insbesondere von einer Metallwelle gebildet. Grundsätzlich wäre jedoch auch eine andere, einem Fachmann als sinnvoll erscheinende Ausgestaltung der Achse denkbar. Das Käfigelement ist vorzugsweise aus einer Hartkomponente gebildet.

Ferner wird vorgeschlagen, dass der Rotor zumindest eine metallische Abdeckung aufweist, welche zu einer Verschließung des Aufnahmebereichs des Käfigelements vorgesehen ist. Vorzugsweise ist der Aufnahmebereich des Käfigelements zu zumindest einer Seite, vorzugsweise zu zumindest zwei gegenüberliegenden Seiten, hin geöffnet. Bevorzugt weist der Rotor insbesondere zwei Abdeckungen auf, die von gegenüberliegenden Seiten mit dem Grundkörper des Käfigelements verbunden werden und die geöffneten Seiten der Aufnahmebereiche verdecken. Besonders bevorzugt sind die Abdeckungen mit dem Käfigelement verschraubt oder verklebt. Des Weiteren können die Abdeckungen mit Geometrischen Elementen fixiert werden. Beispielsweise mit einer Einfahrgeometrie an einem Ende und mit einem oder mehreren hakenförmigen Formschlusselementen an den anderen Seiten. Die Fixierung mit den hakenförmigen Formschlusselementen kann auch nur an dem der Einfahrgeometrie gegenüberliegenden Ende passieren, wenn die Abdeckungen in einer Mulde zu liegen kommen, die die seitliche Verschiebung durch ihre Seitenwände unterbindet. Dadurch kann insbesondere eine vorteilhaft sichere Aufnahme des zumindest einen Magnets erreicht werden. Vorzugsweise kann dadurch insbesondere eine vorteilhaft positionsgenaue Aufnahme des Magneten und eine bessere Verteilung des Magnetfelds erreicht werden. Ferner kann eine vorteilhaft einfache und leichte Montage des Zahnbürstenhandteils erreicht werden.

Des Weiteren wird vorgeschlagen, dass die Antriebseinheit zumindest eine Rückstellfeder aufweist, welche mit einem ersten Ende drehfest mit einem ersten Achsfortsatz des Rotors gekoppelt ist und mit einem zweiten Ende über ein Fixierelement variabel drehfest an der Rahmeneinheit fixiert ist. Vorzugsweise greift die Rückstellfeder mit einem ersten Ende in eine radial durch eine Drehachse des Rotors verlaufende Nut des ersten Achsfortsatzes des Käfigelements ein. Bevorzugt ist die Rückstellfeder insbesondere von einer Schraubenfeder gebildet. Es wäre jedoch auch eine andere, einem Fachmann als sinnvoll erscheinende Ausgestaltung der Rückstellfeder denkbar, wie beispielsweise als Spiralfeder oder Blattfeder. Dadurch kann insbesondere vorteilhaft eine selbstständige Rückstellung des Rotors erreicht werden. Es kann insbesondere erreicht werden, dass die Achse der Schnittstelle jeweils immer in derselben Stellung stehen bleibt. Hierdurch kann eine einfache, immergleiche Montage der Aufsteckbürste erreicht werden, wodurch ein hoher Komfort erreicht werden kann. Ferner kann vorteilhaft eine Rückstellposition optimal eingestellt werden. Produktionsunterschiede können dadurch vorteilhaft ausgeglichen werden. Des Weiteren kann eine Nachstellung der Ausgangslage realisiert werden. Hierdurch kann insbesondere eine verbesserte Positionierung des Rotors in einer Ruhelage erreicht werden. Ferner kann eine vorteilhaft ruhig laufende Antriebseinheit bereitgestellt werden. Unter einer "Rückstellfeder" soll in diesem Zusammenhang insbesondere ein Federelement verstanden werden, welches dazu vorgesehen ist, den Rotor nach einer Verdrehung in eine definierte Ausgangslage zurück zu bewegen. Vorzugsweise ist das Federelement zudem zu einer Dämpfung der oszillierenden Bewegung des Rotors vorgesehen. Insbesondere ist die Rückstellfeder dazu vorgesehen, die Achse der Schnittstelle nach einem Abschalten der Antriebseinheit in eine Ausgangslage zu bewegen. Ferner soll in diesem Zusammenhang unter einem "Fixierelement" insbesondere ein Element verstanden werden, welches dazu vorgesehen ist, ein Ende der Rückstellfeder gegenüber einem festen Bauteil, wie insbesondere der Rahmeneinheit, zu fixieren, insbesondere zu verklemmen. Vorzugsweise ist das Fixierelement insbesondere dazu vorgesehen das zweite Ende der Rückstellfeder durch ein Andrücken des Endes gegen die Rahmeneinheit zu fixieren. Bevorzugt kann das zweite Ende der Rückstellfeder in verschiedenen Positionen fixiert werden. Dabei soll darunter, dass "die Rückstellfeder variabel drehfest an der Rahmeneinheit fixiert ist" insbesondere verstanden werden, dass die Rückstellfeder variabel drehfest zumindest hinsichtlich einer Drehlage an der Rahmeneinheit fixiert ist. Vorzugsweise soll darunter insbesondere verstanden werden, dass die Rückstellfeder, insbesondere mittels des Fixierelements, in verschiedenen Drehlagen relativ zu der Rahmeneinheit drehfest an der Rahmeneinheit fixierbar ausgeführt ist. Insbesondere kann mittels des Fixierelements eine gesamte Drehlage der Rückstellfeder relativ zu der Rahmeneinheit eingestellt werden. Es kann insbesondere indirekt eine Ausgangslage des Rotors relativ zu der Rahmeneinheit eingestellt werden. Ferner soll dabei unter einem "Federelement" insbesondere ein makroskopisches Element verstanden werden, das zumindest eine Erstreckung und/oder eine relative Drehlage der Enden aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung und/oder der relativen Drehlage abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden.

Alternativ wird des Weiteren vorgeschlagen, dass die Antriebseinheit eine zweiteilig aufgebaute Rückstelleinheit aufweist, welche zu einer Rückstellung eines Rotors in eine Ausgangslage vorgesehen ist. Vorzugsweise ist die Rückstelleinheit dazu vorgesehen bei einer Auslenkung aus der Ausgangslage heraus dem Rotor eine Rückstellkraft entgegenzuwirken. Vorzugsweise ist die Rückstelleinheit dazu vorgesehen, den Rotor nach einer Verdrehung in eine definierte Ausgangslage zurück zu bewegen. Vorzugsweise wird vorgeschlagen, dass die Rückstelleinheit drehfest mit einem ersten Achsfortsatz des Rotors gekoppelt ist und sich elastisch an der Rahmeneinheit abstützt. Ferner wird vorgeschlagen, dass die Rückstelleinheit einen Wellenflügel aufweist, welcher direkt, insbesondere axial, an einem ersten Achsfortsatz des Rotors montiert ist. Die Rückstelleinheit, insbesondere. der Wellenflügel der Rückstelleinheit, ist mit seiner Öffnung insbesondere auf einem ersten Achsfortsatz des Rotors aufgesteckt und damit mit diesem gekoppelt. Vorzugsweise weist der Wellenflügel zwei senkrecht zu einer Rotationsachse verlaufende, gegenüberliegende Flügel auf, die insbesondere jeweils von einem rechteckigen Fortsatz gebildet sind. Die Flügel sind insbesondere jeweils mit einem Durchgangsloch ausgestattet. Die senkrecht zum Achsfortsatz liegenden Flügel sind vorzugsweise über ein Feder- und Dämpfelement an der Rahmeneinheit fixiert. Vorzugsweise wird vorgeschlagen, dass die Rückstelleinheit ein elastisches Feder- und Dämpfungselement aufweist, welches zwischen dem Wellenflügel und der Rahmeneinheit angeordnet ist. Die Rückstelleinheit besteht insbesondere aus dem Wellenflügel und dem Feder- und Dämpfungselement. Vorzugsweise greift der Wellenflügel mit seiner Öffnung in eine im Querschnitt schwalbenschwanzförmige Geometrie des ersten Achsfortsatzes des Käfigelements ein. Die Rückstellung ist bevorzugt über das Feder- und Dämpfungselement gebildet, welches durch Durchgangs- oder Sacklöcher in die Flügel des Wellenflügels eingreift und andererseits auf dem Rahmenelement aufliegt. Die Elastizität des Feder- und Dämpfungselements bringt die gewünschte Rückstellung bzw. Federung. Das elastische Feder- und Dämpfungselement ist insbesondere bei einer Auslenkung des Wellenflügels, insbesondere zumindest in Umfangsrichtung, aus einer Ruheposition, zu einer Erzeugung einer Rückstellkraft vorgesehen. Unter einem "Wellenflügel" soll in diesem Zusammenhang insbesondere ein Wellenaufsatz verstanden werden, welcher insbesondere zu einer drehfesten Kopplung mit einer Welle, insbesondere dem Rotor der Antriebseinheit, vorgesehen ist. Vorzugsweise weist der Wellenflügel einen zumindest im Wesentlichen rotationssymmetrischen Grundkörper auf, an welchem gegenüberliegende Flügel angeordnet sind, welche zu einem Abstützen des Grundkörpers vorgesehen sind. Vorzugsweise ist der Wellenflügel zumindest teilweise zu einer Durchführung einer Drehbewegung vorgesehen. Unter einer "Feder- und Dämpfungselement" soll in diesem Zusammenhang insbesondere ein elastisches Element verstanden werden, welches dazu vorgesehen ist, den Rotor nach einer Verdrehung in eine definierte Ausgangslage zurück zu bewegen. Vorzugsweise ist das elastische Element zudem zu einer Dämpfung der oszillierenden Bewegung des Rotors vorgesehen. Insbesondere ist das Feder- und Dämpfungselement dazu vorgesehen, die Achse der Schnittstelle nach einem Abschalten der Antriebseinheit in eine Ausgangslage zu bewegen. Dadurch kann insbesondere vorteilhaft eine selbstständige Rückstellung des Rotors erreicht werden. Es kann insbesondere erreicht werden, dass die Achse der Schnittstelle jeweils immer in derselben Stellung stehen bleibt. Hierdurch kann eine einfache, immergleiche Montage der Aufsteckbürste erreicht werden, wodurch ein hoher Komfort erreicht werden kann. Vorzugsweise ist das Feder- und Dämpfungselement zudem zu einer Dämpfung der oszillierenden Bewegung des Rotors vorgesehen. Insbesondere ist die Rückstelleinheit dazu vorgesehen, die Achse der Schnittstelle nach einem Abschalten der Antriebseinheit in eine Ausgangslage zu bewegen. Mit dieser Anordnung ist die Ausrichtung der Drehlage nicht möglich.

Ferner wird vorgeschlagen, dass das elastische Feder- und Dämpfungselement fest mit dem Wellenflügel verbunden ist. Vorzugsweise ist das elastische Feder- und Dämpfungselement über eine Steckverbindung fest mit dem Wellenflügel verbunden. Das elastische Feder- und Dämpfungselement und der Wellenflügel bilden die Rückstelleinheit aus, wobei die Rückstelleinheit insbesondere lediglich an der Rahmeneinheit anliegt. Der Wellenflügel liegt insbesondere über das Feder- und Dämpfungselement an der Rahmeneinheit an. Des Weiteren wird vorgeschlagen, dass das elastische Feder- und Dämpfungselement in einem montierten Zustand gegenüber der Rahmeneinheit eine Vorspannung aufweist, wobei die Rahmeneinheit eine Auflagefläche für das Feder- und Dämpfungselement ausbildet. Vorzugsweise besteht das elastische Feder- und Dämpfungselement zumindest teilweise aus einer Weichkomponente, insbesondere aus Silikon, während der Wellenflügel aus einer Hartkomponente besteht. Vorzugsweise wird vorgeschlagen, dass das elastische Feder- und Dämpfungselement zumindest teilweise aus einer Weichkomponente, insbesondere aus Silikon, mit einer Shore A Härte von 25 Shore A bis 75 Shore A, vorzugsweise von 35 Shore A bis 65 Shore A besteht. Ferner wird vorgeschlagen, dass das elastische Feder- und Dämpfungselement dazu vorgesehen ist, eine Verdrehung des Wellenflügels auf einen Rotationswinkel von 2° bis 10° vorzugsweise von 3° bis 7° zu begrenzen. Dadurch kann insbesondere vorteilhaft eine selbstständige Rückstellung des Rotors erreicht werden. Ferner kann eine Anzahl von Bauteilen für eine Rückstellung sowie ein Montageaufwand gering gehalten werden.

Der Wellenflügel weist in seiner Draufsicht insbesondere eine Kreuzform auf. Im Zentrum weist der Wellenflügel insbesondere einen zumindest annähernd zylindrischen Grundkörper auf, der in axialer Richtung mit einem Sackloch mit einer Drehmitnahmekontur ausgestattet ist. Das Sackloch mit der Drehmitnahmekontur dient insbesondere zu einer drehfesten Aufnahme des Achsfortsatzes des Rotors. In axialer Richtung, dem Sackloch entgegengesetzt, ist an dem Grundkörper vorzugsweise ein Fortsatz gebildet, der im montierten Zustand die axiale Verschiebung innerhalb der Baugruppe unterbindet. Vorzugsweise ist zur Sicherung des Wellenflügels auf dem Achsfortsatz des Rotors zudem eine Rastvorrichtung vorgesehen. Der Fortsatz des Wellenflügels hat bevorzugt einen Durchmesser von 1.5 mm bis 5 mm vorzugsweise von 2.5 mm bis 3.5 mm. Die Länge des Fortsatzes beträgt insbesondere 1.5 mm bis 5 mm vorzugsweise von 2.5 mm bis 3.5 mm. Das Sackloch des Wellenflügels hat bevorzugt eine Tiefe von 7 mm bis 14 mm vorzugsweise von 9 mm bis 12 mm. Die Breite des Wellenflügels, über die Flügel gemessen, beträgt insbesondere zwischen 14 mm und 22 mm vorzugsweise zwischen 17 mm und 19 mm. Der Außendurchmesser des zylindrischen Körpers des Wellenflügels beträgt vorteilhaft zwischen 7 mm und 11 mm vorzugsweise zwischen 8 mm und 10 mm.

Das Feder- und Dämpfungselement ist im Querschnitt insbesondere als halbkreisförmiges Element mit seitlichen Flanschen geformt. Auf der Unterseite hat das Element an den Flanschen bevorzugt zwei Fortsätze, die im montierten Zustand auf der Rahmeneinheit aufliegen. Auf der Oberseite sind vorzugsweise ebenfalls Fortsätze vorgesehen, welche an den Flanschen, angrenzend an die Geometrie, für die Aufnahme des Wellenflügels ausgebildet sind. Diese Fortsätze sind vorzugsweise dazu vorgesehen in die Durchgangslöcher des Wellenflügels montiert zu werden und die beiden Teile zusammenzuhalten. Die Fortsätze haben vorzugsweise Hinterschnitte, die dies bewerkstelligen. Die Innengeometrie des Feder- und Dämpfungselements ist insbesondere an die Außengeometrie des Wellenflügels angepasst. Die Geometrie ist so gewählt, dass die nötige Teil-Rotation des Wellenflügels möglich ist. Das Feder- und Dämpfungselement hat insbesondere eine Länge von 4 mm bis 8 mm vorzugsweise von 5 bis 6.5 mm. Die Breite senkrecht dazu beträgt insbesondere zwischen 14 mm und 22 mm vorzugsweise zwischen 17 mm und 19 mm. Die Höhe - von der Rundung zum Fortsatz - beträgt insbesondere zwischen 6 mm und 11 mm vorzugsweise zwischen 7.5 mm und 9.5 mm. Die Fortsätze der Unterseite haben vorteilhaft eine Höhe von 1 mm bis 3 mm vorzugsweise von 1.2 mm bis 1.8 mm. Die Fortsätze 162b, 162b' der Oberseite haben bevorzugt eine Höhe von 1.5 mm bis 4 mm vorzugsweise von 2 mm bis 3.5 mm. Der Innendurchmesser am Feder- und Dämpfungselement 148b beträgt vorteilhaft zwischen 7 mm und 11 mm vorzugsweise zwischen 8 mm und 10 mm.Es wird ferner vorgeschlagen, dass die Antriebseinheit von einem Schwingankermotor gebildet ist. Vorzugsweise wird der Schwingankermotor sinusförmig angesteuert. Hierdurch kann insbesondere eine verbesserte Bewegung des Rotors der Antriebseinheit erreicht werden. Es kann insbesondere eine vorteilhaft ruhige Bewegung des Rotors erreicht werden. Ferner können Geräusche der Antriebseinheit zuverlässig vermieden werden. Unter einem "Schwingankermotor" soll in diesem Zusammenhang insbesondere ein Antrieb verstanden werden, welcher zu einer elektromagnetischen Erzeugung einer Schwingungsbewegung, insbesondere Oszillationsbewegung, vorgesehen ist. Der Antrieb umfasst insbesondere einen positionsfesten Eisenkern mit einer Erregerspule und einen beweglichen Rotor, welcher zumindest einen Magneten umfasst. Vorzugsweise ist der Rotor durch eine Rückstellfeder in Ruhelage gehalten.

Es wird weiter vorgeschlagen, dass die Antriebseinheit zumindest einen Stator aufweist, der einen einstückig ausgeführten Träger, ein in den Träger eingesetztes Blechpaket und eine das Blechpaket umgreifende Spule aufweist. Vorzugsweise bildet das Blechpaket einen Eisenkern des Stators aus, während die Spule eine Erregerspule des Stators ausbildet. Bevorzugt wird die Spule des Stators während eines Betriebs sinusförmig angesteuert. Besonders bevorzugt sind die Spule und das Blechpaket kontaktlos. Vorzugsweise ist der Stator insbesondere von einem vorgefertigten Modul gebildet, welches in einem Stück eingesetzt werden kann. Dadurch kann insbesondere ein vorteilhaft kompakter und leicht zu montierender Stator bereitgestellt werden. Es kann insbesondere eine Anzahl an Bauteilen gering gehalten werden. Ferner kann dadurch insbesondere ein vorteilhaft modularer Stator bereitgestellt werden. Unter einem "Blechpaket" soll in diesem Zusammenhang insbesondere ein Paket aus mehreren miteinander verbundenen und/oder aneinander anliegenden Blechteilen verstanden werden. Vorzugsweise weisen die Blechteile jeweils dieselbe Form auf und sind in derselben Ausrichtung dicht an dicht zu einem Paket verbunden.

Zudem wird vorgeschlagen, dass der Träger der Antriebseinheit direkt mit der Rahmeneinheit verbunden ist und einen Rotor der Antriebseinheit von zumindest einer Seite abdeckt. Vorzugsweise ist der Träger der Antriebseinheit direkt an die Rahmeneinheit angeschraubt. Es wäre jedoch auch eine andere, einem Fachmann als sinnvoll erscheinende Art der Verbindung denkbar. Bevorzugt ist der Rotor der Antriebseinheit insbesondere in einem Aufnahmebereich der Rahmeneinheit aufgenommen, wobei der Aufnahmebereich vorzugsweise zu einer, bevorzugt zu zumindest zwei Seiten hin, geöffnet ist. Der Träger ist insbesondere dazu vorgesehen, zumindest eine geöffnete Seite des Aufnahmebereichs der Rahmeneinheit zu verschließen. Vorzugsweise wird der Rotor der Antriebseinheit in einem montierten Zustand zumindest teilweise von dem Blechpaket des Stators umgriffen. Dadurch kann insbesondere ein vorteilhaft leicht zu montierendes Zahnbürstenhandteil bereitgestellt werden. Es kann insbesondere eine vorteilhaft einfache und zuverlässige Ausrichtung des Stators gegenüber dem Rotor während einer Montage erreicht werden. Hierdurch können insbesondere Montagefehler vermieden werden.

Ferner wird vorgeschlagen, dass das elektrische Zahnbürstenhandteil zumindest ein Anschlagselement aufweist, welches dazu vorgesehen ist, eine Verdrehung eines Rotors der Antriebseinheit aus einer Ausgangslage heraus zu begrenzen. Vorzugsweise ist das Anschlagselement dazu vorgesehen, eine oszillierende Bewegung des Rotors zu begrenzen. Bevorzugt dient das Anschlagselement insbesondere zu einer Bereitstellung einer immergleichen Bewegung des Rotors. Vorzugsweise ist das Anschlagselement insbesondere von einem mechanischen Anschlag gebildet, an welchen der Rotor bei einer Bewegung bei Erreichen einer Endlage mechanisch anschlägt. Hierdurch kann eine Bewegung des Rotors gezielt begrenzt werden. Es kann insbesondere gezielt eine Bewegung des Rotors definiert begrenzt werden. Insbesondere kann dadurch eine Beschädigung der Rückstellfeder, insbesondere durch Überbelastung und/oder Überdrehung, verhindert werden. Ferner kann ein manuelles Überdrehen des Rotors, beispielsweise durch einen Bediener, durch Verdrehen der Aufsteckbürste, vermieden werden. Es kann insbesondere eine Beschädigung des Zahnbürstenhandteils gezielt vermieden werden.

Des Weiteren wird vorgeschlagen, dass das zumindest eine Anschlagselement von einem fest mit dem Rotor der Antriebseinheit verbundenen Stift gebildet ist, welcher mit einem Ende elastisch an der Rahmeneinheit gelagerter ist. Vorzugsweise ist der Stift radial in eine Öffnung des Rotors, insbesondere des Achsfortsatzes, besonders bevorzugt des zweiten Achsfortsatzes, eingesteckt. Bevorzugt ist der Stift positionsfest an dem Rotor angeordnet und ragt insbesondere radial aus dem Rotor. Besonders bevorzugt ist der Stift mit einem von dem Rotor angewandten Ende über eine elastische Muffe, insbesondere über eine Gummimuffe, in der Rahmeneinheit gelagert. Hierdurch kann ein vorteilhaft einfaches Anschlagselement realisiert werden. Es kann insbesondere ein vorteilhaft kompaktes Anschlagselement bereitgestellt werden.

Des Weiteren wird vorgeschlagen, ein Anschlagselement direkt in den Wellenflügel integriert zu gestalten. Die Flügel des Wellenflügels liegen über dem Feder- und Dämpfungselement, welches seinerseits an der Rahmeneinheit anliegt. Durch diese Anordnung wird die Bewegung des Flügels des Wellenflügels begrenzt, was einer Begrenzung der Bewegung des Rotors entspricht, da der Rotor direkt mit dem Wellenflügel verbunden ist bzw. der Wellenflügel auf den Rotor aufgesteckt ist.

Es wird ferner vorgeschlagen, dass das elektrische Zahnbürstenhandteil zumindest eine Rotorabdeckung aufweist, welche fest mit der Rahmeneinheit verbunden ist und zusammen mit der Rahmeneinheit zu einer Lagerung und/oder Fixierung eines Rotors der Antriebseinheit vorgesehen ist. Vorzugsweise ist der Rotor der Antriebseinheit insbesondere in einem Aufnahmebereich der Rahmeneinheit aufgenommen, wobei der Aufnahmebereich vorzugsweise zu einer, vorzugsweise zu zumindest zwei, Seiten hin geöffnet ist. Bevorzugt wird zumindest eine geöffnete Seite des Aufnahmebereichs der Rahmeneinheit von einem Träger der Antriebseinheit verschlossen, wobei die Rotorabdeckung insbesondere die zweite geöffnete Seite verschließt. Vorzugsweise ist die Rotorabdeckung mit der Rahmeneinheit verschraubt. Es wäre jedoch auch eine andere, einem Fachmann als sinnvoll erscheinende Art der Verbindung denkbar. Besonders bevorzugt bilden sowohl die Rotorabdeckung als auch die Rahmeneinheit zumindest eine halbkreisförmige Achsaufnahme zu einer Aufnahme von zumindest einem Achsfortsatz des Rotors auf. Bevorzugt ist der Rotor direkt zwischen der Rahmeneinheit und der Rotorabdeckung gelagert. Hierdurch kann eine vorteilhaft einfache und schnelle Montage erreicht werden. Es kann insbesondere eine vorteilhafte Abdeckung und Lagerung des Rotors bereitgestellt werden. Ferner kann insbesondere ein vorteilhaft schneller und positionsgenauer Einbau des Rotors gewährleistet werden. Vorzugsweise dienen die Rotorabdeckung und die Rahmeneinheit zudem zu einer Lagerung und/oder Abdichtung der Achse der Schnittstelle. Die Achse ist vorzugsweise über eine Dichtung in einer Achsaufnahme gelagert, die sich aus einer halbkreisförmigen Achsaufnahme der Rahmeneinheit und einer halbkreisförmigen Achsaufnahme der Rotorabdeckung zusammensetzt.

Es wird weiter vorgeschlagen, dass das zumindest eine Anschlagselement einstückig mit der Rotorabdeckung ausgeführt ist. Vorzugsweise bildet das Anschlagselement einen einstückig mit der Rotorabdeckung ausgebildeten Fortsatz aus, welcher dem Rotor zugewandt ist. Bevorzugt ist die Form des Fortsatzes dabei an die Endlagen des Rotors angepasst. Vorzugsweise ist das Anschlagselements insbesondere von einer Ausformung in der Rotorabdeckung gebildet. Dadurch kann ein vorteilhaft einfaches Anschlagselement realisiert werden. Es kann insbesondere ein vorteilhaft leicht zu montierendes Anschlagselement bereitgestellt werden. Ferner kann insbesondere ein vorteilhaft robustes und leicht herzustellendes Anschlagselement bereitgestellt werden. Vorzugsweise kann insbesondere auf ein separates Anschlagselement verzichtet werden. Es muss insbesondere lediglich eine Form der Rotorabdeckung angepasst werden.

Das Handteil bzw. die Achse 110 wird in zumindest einem Betriebszustand mit einer Frequenz von 200 Hz bis 320 Hz vorzugsweise von 240 Hz bis 280 Hz betrieben. Der Auslenkwinkel der Achse 110 pro Seite der Nullstellung liegt insbesondere in einem Bereich von 2,5° bis 9° vorzugsweise von 4° bis 7°.

Zudem geht die Erfindung aus von einem Verfahren zur Herstellung des elektrischen Zahnbürstenhandteils.

Ferner geht die Erfindung aus von einer elektrischen Zahnbürste mit dem elektrischen Zahnbürstenhandteil und mit der Aufsteckbürste.

Die Begriffe "axial" und "radial" sind in diesem Zusammenhang insbesondere auf eine Haupterstreckungsachse der Aufsteckbürste und/oder des elektrischen Zahnbürstenhandteils bezogen, sodass der Ausdruck "axial" insbesondere eine Richtung bezeichnet, die parallel oder koaxial zu einer der Haupterstreckungsachsen verläuft. Ferner bezeichnet der Ausdruck "radial" im Folgenden insbesondere eine Richtung, die senkrecht zu einer der Haupterstreckungsachsen verläuft. Vorzugsweise verläuft die Haupterstreckungsachse der Aufsteckbürste parallel zu der Haupterstreckungsachse des elektrischen Zahnbürstenhandteils. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt, und insbesondere einen geometrischen Mittelpunkt des Objekts schneidet.

Ferner sollen die Begriffe "Oberseite" oder "Vorderseite" der Zahnbürste in diesem Zusammenhang insbesondere als jene Seite der Zahnbürste verstanden werden, auf welcher der Daumen aufgelegt wird. Die Ober - oder Vorderseite ist normalerweise auch jene Seite, auf welche das Borstenfeld, insbesondere des Bürstenkopfes der Aufsteckbürste, gerichtet ist. Als "Unterseite" oder "Rückseite" der Zahnbürste soll insbesondere jene Seite verstanden werden, die dem Borstenfeld des Bürstenkopfs abgewandt ist. Des Weiteren sind die Begriffe "linke Seite" und "rechte Seite" jeweils auf eine Betrachtung der Vorderseite bezogen. Als "Unterseite des Kopfplättchens" wird jene Seite bezeichnet, welche in die Ausnehmung des Grundkörpers gelegt wird und in Richtung Unterseite der Zahnbürste zeigt. Entsprechend zeigt die "Oberseite des Kopfplättchens" in Richtung der Oberseite der Zahnbürste.

Das erfindungsgemäße elektrische Zahnbürstenhandteil, die elektrische Zahnbürste sowie das Verfahren sollen hierbei nicht auf die oben beschriebene Anwendung und Ausführungsform beschränkt sein. Insbesondere können das erfindungsgemäße elektrische Zahnbürstenhandteil, die elektrische Zahnbürste sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele dargestellt. Die Zeichnungen, die Beschreibung und die Ansprüche enthalten zahlreiche Merkmale in Kombination. Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden, ohne den Rahmen dieser Erfindung zu verlassen.

Die in den Figuren 1 bis 39 sowie den Figuren 45 bis 52 gezeigten Aufsteckbürsten sind nicht erfindungsgemäß und dienen lediglich der Veranschaulichung. Die Figuren 53-59 zeigen ein alternatives Zahnbürstenhandteil, welches nicht Teil der beanspruchten Erfindung ist.

### Es zeigen:

- Fig. 1: eine Aufsteckbürste mit einem Bürstenkopf und mit einer Schnittstellenaufnahme in einer ersten 3D-Ansicht,
- Fig. 2: die Aufsteckbürste mit der Schnittstellenaufnahme in einer zweiten 3D-Ansicht,
- Fig. 3: die Aufsteckbürste in einer dritten 3D-Ansicht,
- Fig. 4: die Aufsteckbürste mit dem Bürstenkopf in einer Draufsicht von vorne,
- Fig. 5: die Aufsteckbürste mit dem Bürstenkopf in einer Draufsicht von der Seite,
- Fig. 6: die Aufsteckbürste in einer Draufsicht von hinten,
- Fig. 7: die Aufsteckbürste in einer Draufsicht entlang einer Längsachse auf die Schnittstellenaufnahme,
- Fig. 8: die Aufsteckbürste in einer Draufsicht entlang einer Längsachse auf den Bürstenkopf,
- Fig. 9: die Aufsteckbürste in einer Längsschnittdarstellung entlang der Schnittlinie IX-IX,
- Fig. 10: die Aufsteckbürste in einer Längsschnittdarstellung entlang der Schnittlinie X-X,
- Fig. 11: die Aufsteckbürste in einer Querschnittdarstellung entlang der Schnittlinie XI-XI,
- Fig. 12: die Aufsteckbürste in einer Querschnittdarstellung entlang der Schnittlinie XII-XII,
- Fig. 13: die Aufsteckbürste in einer Querschnittdarstellung entlang der Schnittlinie XIII-XIII,
- Fig. 14: die Aufsteckbürste in einer Querschnittdarstellung entlang der Schnittlinie XIV-XIV,
- Fig. 15: die Aufsteckbürste in einer Querschnittdarstellung entlang der Schnittlinie XV-XV,
- Fig. 16: ein Zahnbürstenhandteil mit einem Gehäuse und mit einer Schnittstelle in einer Draufsicht von vorne,
- Fig. 17: das Zahnbürstenhandteil mit dem Gehäuse und mit der Schnittstelle in einer Draufsicht von der Seite,
- Fig. 18: das Zahnbürstenhandteil mit dem Gehäuse und mit der Schnittstelle in einer Draufsicht von hinten,
- Fig. 19: eine elektrische Zahnbürste mit dem elektrischen Zahnbürstenhandteil und mit der Aufsteckbürste in einer ersten 3D-Ansicht,
- Fig. 20: die elektrische Zahnbürste mit dem elektrischen Zahnbürstenhandteil und mit der Aufsteckbürste in einer zweiten 3D-Ansicht,
- Fig. 21: die elektrische Zahnbürste mit dem elektrischen Zahnbürstenhandteil und mit der Aufsteckbürste in einer Draufsicht von vorne,
- Fig. 22: die elektrische Zahnbürste mit dem elektrischen Zahnbürstenhandteil und mit der Aufsteckbürste in einer Teilschnittdarstellung von der Seite
- Fig. 23: die Aufsteckbürste mit einer ersten Borstenfeldanordnung in einer Draufsicht von der Seite,
- Fig. 24: den Bürstenkopf der Aufsteckbürste mit einer alternativen zweiten Borstenfeldanordnung in einer Draufsicht von vorne,
- Fig. 25: den Bürstenkopf der Aufsteckbürste mit einer alternativen dritten Borstenfeldanordnung in einer Draufsicht von vorne,
- Fig. 26: den Bürstenkopf der Aufsteckbürste mit einer alternativen vierten Borstenfeldanordnung in einer Draufsicht von vorne,
- Fig. 27: den Bürstenkopf der Aufsteckbürste mit einer alternativen fünften Borstenfeldanordnung in einer Draufsicht von vorne,
- Fig. 28: den Bürstenkopf der Aufsteckbürste mit einer alternativen sechsten Borstenfeldanordnung in einer Draufsicht von vorne,
- Fig. 29: den Bürstenkopf der Aufsteckbürste mit einer alternativen siebten Borstenfeldanordnung in einer Draufsicht von vorne,
- Fig. 30: den Bürstenkopf der Aufsteckbürste mit einer alternativen achten Borstenfeldanordnung in einer Draufsicht von vorne,
- Fig. 31a: den Bürstenkopf der Aufsteckbürste mit einer alternativen neunten Borstenfeldanordnung in einer Draufsicht von vorne,
- Fig. 31b: den Bürstenkopf der Aufsteckbürste mit dem alternativen neunten Borstenfeldanordnung in einer 3D-Ansicht,
- Fig. 32a: den Bürstenkopf der Aufsteckbürste mit einer alternativen zehnten Borstenfeldanordnung in einer Draufsicht von vorne,
- Fig. 32b: den Bürstenkopf der Aufsteckbürste mit dem alternativen zehnten Borstenfeldanordnung in einer 3D-Ansicht,
- Fig. 33a: den Bürstenkopf der Aufsteckbürste mit einer alternativen elften Borstenfeldanordnung in einer Draufsicht von vorne,
- Fig. 33b: den Bürstenkopf der Aufsteckbürste mit dem alternativen elften Borstenfeldanordnung in einer 3D-Ansicht,
- Fig. 34a: den Bürstenkopf der Aufsteckbürste mit einer alternativen zwölften Borstenfeldanordnung in einer Draufsicht von vorne,
- Fig. 34b: den Bürstenkopf der Aufsteckbürste mit dem alternativen zwölften Borstenfeldanordnung in einer 3D-Ansicht,
- Fig. 35a: den Bürstenkopf der Aufsteckbürste mit einer alternativen dreizehnten Borstenfeldanordnung in einer Draufsicht von vorne,
- Fig. 35b: den Bürstenkopf der Aufsteckbürste mit dem alternativen dreizehnten Borstenfeldanordnung in einer 3D-Ansicht,
- Fig. 36: den Bürstenkopf der Aufsteckbürste mit einer alternativen vierzehnten Borstenfeldanordnung in einer Draufsicht von vorne,
- Fig. 37: den Bürstenkopf der Aufsteckbürste mit einer alternativen fünfzehnten Borstenfeldanordnung in einer Draufsicht von vorne,
- Fig. 38: den Bürstenkopf der Aufsteckbürste mit einer alternativen sechzehnten Borstenfeldanordnung in einer Draufsicht von vorne,
- Fig. 39: den Bürstenkopf der Aufsteckbürste mit einer alternativen siebzehnten Borstenfeldanordnung in einer Draufsicht von vorne,
- Fig. 40: einen Teil des erfindungsgemäßen Zahnbürstenhandteils mit einer Rahmeneinheit, mit einem Energiespeicher, mit einer Antriebseinheit und mit der Schnittstelle in einer ersten 3D-Ansicht,
- Fig. 41: den Teil des erfindungsgemäßen Zahnbürstenhandteils mit der Rahmeneinheit, mit dem Energiespeicher, mit der Antriebseinheit und mit der Schnittstelle in einer zweiten 3D-Ansicht,
- Fig. 42: den Teil des erfindungsgemäßen Zahnbürstenhandteils mit der Rahmeneinheit, mit dem Energiespeicher, mit der Antriebseinheit und mit der Schnittstelle in einer Explosionsdarstellung in der ersten 3D-Ansicht,
- Fig. 43: den Teil des erfindungsgemäßen Zahnbürstenhandteils mit der Rahmeneinheit, mit dem Energiespeicher, mit der Antriebseinheit und mit der Schnittstelle in einer Explosionsdarstellung in der zweiten 3D-Ansicht,
- Fig. 44: einen Teil des erfindungsgemäßen Zahnbürstenhandteils mit der Rahmeneinheit, mit einem alternativen Energiespeicher, mit der Antriebseinheit und mit der Schnittstelle in einer dritten 3D-Ansicht,
- Fig. 45: eine alternative Aufsteckbürste in einer Draufsicht entlang einer Längsachse auf die Schnittstellenaufnahme,
- Fig. 46: die alternative Aufsteckbürste in einer Längsschnittdarstellung entsprechend der Schnittlinie IX-IX gemäß Figur 8 des ersten Ausführungsbeispiels,
- Fig. 47: die alternative Aufsteckbürste in einer Längsschnittdarstellung entsprechend der Schnittlinie X-X gemäß Figur 8 des ersten Ausführungsbeispiels,
- Fig. 48: die alternative Aufsteckbürste in einer Querschnittdarstellung entlang der Schnittlinie XLVIII-XLVIII,
- Fig. 49: die alternative Aufsteckbürste in einer Querschnittdarstellung entlang der Schnittlinie XLIX-XLIX,
- Fig. 50: die alternative Aufsteckbürste in einer Querschnittdarstellung entlang der Schnittlinie L-L,
- Fig. 51: die alternative Aufsteckbürste in einer Querschnittdarstellung entlang der Schnittlinie LI-LI,
- Fig. 52: die alternative Aufsteckbürste in einer Querschnittdarstellung entlang der Schnittlinie LII-LII,
- Fig. 53: einen Teil eines alternativen Zahnbürstenhandteils mit einer Rahmeneinheit, mit einem Energiespeicher, mit einer Antriebseinheit und mit der Schnittstelle und einer Rahmeneinheit der Ladespule in einer ersten 3D-Ansicht,
- Fig. 54: den Teil des alternativen Zahnbürstenhandteils mit der Rahmeneinheit, mit dem Energiespeicher, mit der Antriebseinheit und mit der Schnittstelle und einer Rahmeneinheit der Ladespule in einer zweiten 3D-Ansicht,
- Fig. 55: den Teil des alternativen Zahnbürstenhandteils mit der Rahmeneinheit, mit dem Energiespeicher, mit der Antriebseinheit und mit der Schnittstelle und einer Rahmeneinheit der Ladespule in einer Explosionsdarstellung in der ersten 3D-Ansicht,
- Fig. 56: den Teil des alternativen Zahnbürstenhandteils mit der Rahmeneinheit, mit dem Energiespeicher, mit der Antriebseinheit und mit der Schnittstelle und einer Rahmeneinheit der Ladespule in einer Explosionsdarstellung in der zweiten 3D-Ansicht,
- Fig. 57: den Teil des alternativen Zahnbürstenhandteils mit der Rahmeneinheit, mit dem Energiespeicher, mit der Antriebseinheit die eine Rückstelleinheit aufweist, welches aus einem Wellenflügel und einem Feder- und Dämpfelement besteht, mit der Schnittstelle und mit einer Rahmeneinheit der Ladespule in einer Schnittdarstellung entlang LVII - LVII durch den Wellenflügel und das Feder- und Dämpfungselement,
- Fig. 58: den Wellenflügel und das Feder- und Dämpfungselement der Antriebseinheit des alternativen Zahnbürstenhandteils in einer Explosionsdarstellung in der ersten 3D-Ansicht und
- Fig. 59: den Wellenflügel und das Feder- und Dämpfungselement der Antriebseinheit des alternativen Zahnbürstenhandteils in einer Explosionsdarstellung in der zweiten 3D-Ansicht.

### Beschreibung der Ausführungsbeispiele

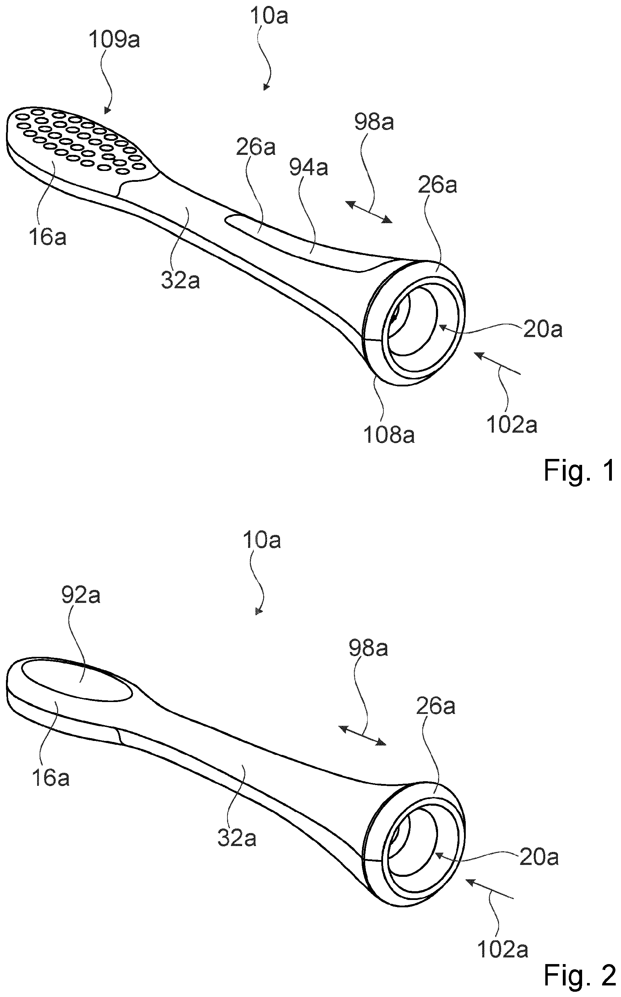

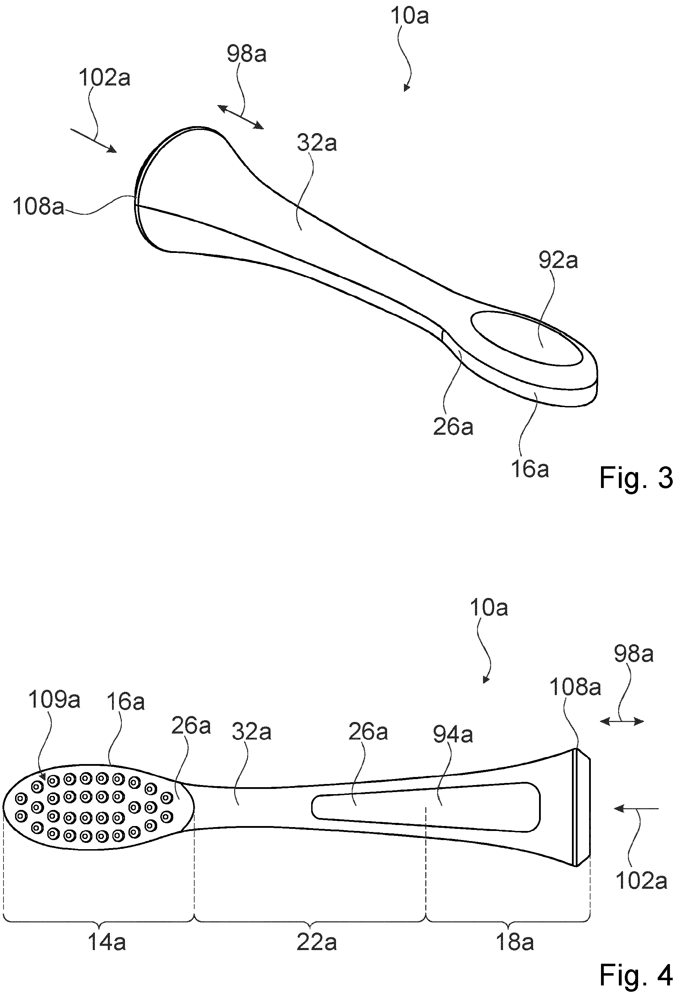

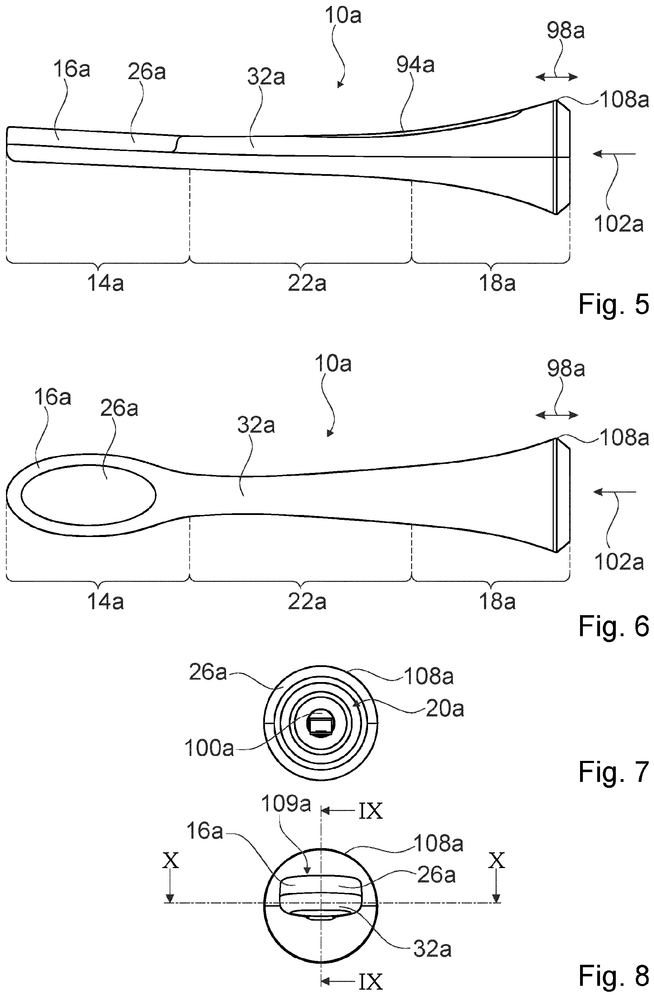

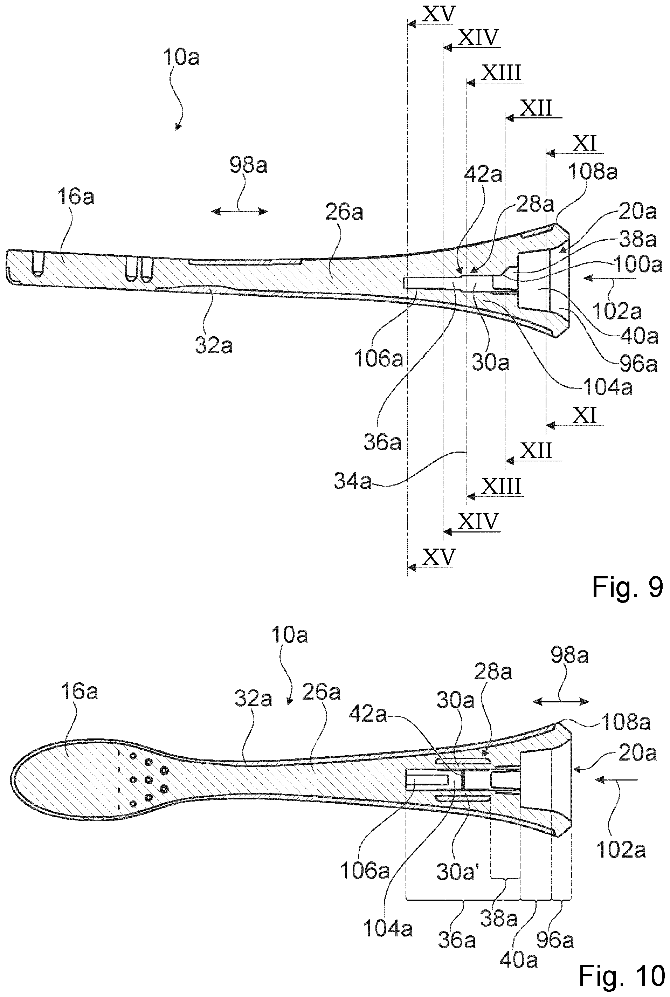

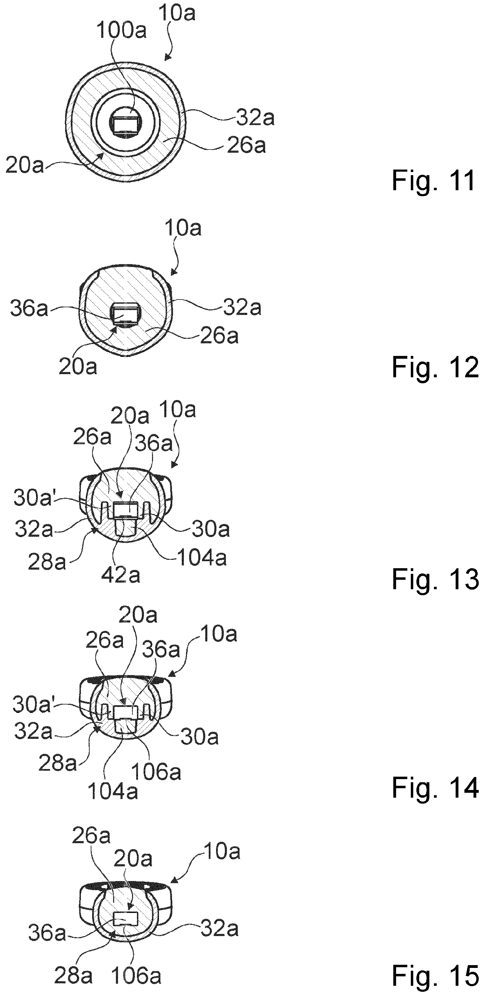

Die Figuren 1 bis 15 zeigen eine Aufsteckbürste 10a. Die Aufsteckbürste 10a ist für ein Zahnbürstenhandteil 12a vorgesehen. Die Aufsteckbürste 10a ist für ein elektrisches Zahnbürstenhandteil 12a vorgesehen. Die Aufsteckbürste 10a ist von einer Wechselbürste gebildet. Grundsätzlich ist die Anwendung der Aufsteckbürste 10a und/oder einer Schnittstellenaufnahme 20a bzw. Schnittstelle 24a für elektrische Zahnbürsten 90a mit schwenkender Bewegung oder mit vibrierender Bewegung ausgelegt. Die Aufsteckbürste 10a und/oder die Schnittstellenaufnahme 20a bzw. Schnittstelle 24a kann jedoch auch für andere Produkte eingesetzt werden, wie beispielsweise manuelle Zahnbürsten, wie insbesondere Mehrwegzahnbürsten , wie z.B. Wechselkopfzahnbürsten, alternative elektrische Zahnbürsten, wie insbesondere mit translatorischen und/oder drehenden Bewegungen, mit Aufsteckteilen mit Interdentalreinigern, wie insbesondere Interdentalbürsten mit eingedrehten Borsten und/oder Zungenreiniger.

Im Folgenden wird auf die Figuren 1 bis 15 Bezug genommen, welche unterschiedliche Ansichten der Aufsteckbürste 10a zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Aufsteckbürste 10a weist einen Kopfabschnitt 14a auf. Der Kopfabschnitt 14a umfasst einen Bürstenkopf 16a. Ferner weist die Aufsteckbürste 10a einen Aufsteckabschnitt 18a auf. Der Aufsteckabschnitt 18a umfasst eine Schnittstellenaufnahme 20a. Des Weiteren weist die Aufsteckbürste 10a einen zwischen dem Kopfabschnitt 14a und dem Aufsteckabschnitt 18a angeordneten Halsabschnitt 22a auf. Der Kopfabschnitt 14a, der Aufsteckabschnitt 18a und der Halsabschnitt 22a sind jeweils räumliche Abschnitte der Aufsteckbürste 10a. Der Kopfabschnitt 14a, der Aufsteckabschnitt 18a und der Halsabschnitt 22a sind jeweils axiale Teilabschnitte der Aufsteckbürste 10a. Ferner besteht die Aufsteckbürste 10a vorteilhaft aus genau drei Abschnitten, und zwar dem Kopfabschnitt 14a, dem Halsabschnitt 22a und dem Aufsteckabschnitt 18a. Die Abschnitte grenzen vorteilhaft direkt aneinander an. Der Kopfabschnitt 14a, der Aufsteckabschnitt 18a und der Halsabschnitt 22a erstrecken sich gemeinsam in axialer Richtung über die gesamte Aufsteckbürste 10a.

Eine generelle Form der Aufsteckbürste 10a bildet von einer Vorderseite aus betrachtet einen Verlauf von einer größeren Breite im Aufsteckabschnitt 18a zu einer Verengung im Halsabschnitt 22a zu einer größeren Breite im Kopfabschnitt 14a. Der Bürstenkopf 16a der Aufsteckbürste 10a weist eine schmale, lange Grundform auf. Der Bürstenkopf 16a der Aufsteckbürste 10a ist von einer Vorderseite aus betrachtet im Wesentlichen elliptisch geformt. Von der Seite weist der Bürstenkopf 16a eine konstante Dicke auf. Es wäre jedoch auch denkbar, dass der Bürstenkopf 16a von der Seite einen Verlauf aufweist, wie beispielsweise eine Wellenform oder eine gegen Halsbereich zunehmende Dicke. Ferner können zusätzliche funktionale Elemente wie beispielsweise Zungenreiniger diese Dimension des Bürstenkopfs 16a beeinflussen. Der Bürstenkopf 16a hat frei von Borsten eine Höhe von 3 mm bis 9 mm, vorzugsweise von 4 mm bis 6 mm. Der Bürstenkopf 16a ist frei von scharfen Kanten. Die Aufsteckbürste 10a ist ferner in dem Halsabschnitt 22a und dem Aufsteckabschnitt 18a im Wesentlichen rotationssymmetrisch geformt, wobei in Richtung des Kopfabschnitts 14a ein fließender Übergang stattfindet und die Rotationssymmetrie verloren geht. Der Übergang zwischen dem Halsabschnitt 22a und dem Kopfabschnitt 14a erfolgt vorzugsweise über eine Taillierung, welche einen minimalen Durchmesser der Aufsteckbürste 10a ausbildet. Alternativ wäre jedoch auch ein Verlauf frei von einer Taillierung denkbar. Die Folge davon ist, dass der Kopfabschnitt 14a ein massigeres, weniger elegantes Aussehen erhält und sich weniger gegenüber dem Halsabschnitt 22a absetzt. Die Aufsteckbürste 10a ist dabei in dem Halsabschnitt 22a kegelförmig, wobei ein Durchmesser zu dem Aufsteckabschnitt 18a zunimmt. In dem Aufsteckabschnitt 18a wird eine Kegelform des Halsabschnitts 22a fortgesetzt, wobei die Aufsteckbürste 10a in dem Aufsteckabschnitt 18a zu einem freien Ende hin zudem konkav kegelförmig ausgebildet ist. Vor einem freien, dem Bürstenkopf 16a abgewandten Ende weist die Aufsteckbürste 10a einen kurzen kegelstumpfförmigen Anschnitt auf, welcher eine Fase ausbildet und durch welchen eine Abtropfkante 108a ausgebildet ist. Die Abtropfkante 108a bildet einen harten Übergang von der Fase in den runden Verlauf der Außenhaut aus. Die Abtropfkante 108a bildet eine radial äußerste Kante der Aufsteckbürste 10a aus. Die Fase weist, gemessen als Flächennormale zur Längsachse, einen Winkel von 30° bis 70° vorzugsweise von 40° bis 60° auf. Ferner weist die Abtropfkante 108a, in axialer Richtung betrachtet, zu der Standfläche einen Abstand von 0.5 mm bis 4 mm, vorzugsweise von 1 mm bis 3 mm auf. Des Weiteren weist die Abtropfkante 108a einen Durchmesser von 12 mm bis 20 mm, vorzugsweise von 14 mm bis 18 mm auf. Durch die vorliegende Gestaltung können sowohl geometrisch größere Handteile als auch schmälere Handteile optisch ansprechend mit der Aufsteckbürste 10a gekoppelt werden. Bei breiten Handteilen bilden die Abtropfkante 108a und die Fase einen Abschluss, während bei schmalen Handteilen die Abtropfkante 108a und die Fase einen Übergang ausbilden. Ferner weist die Abtropfkante 108a die Funktion auf, dass, wenn die Aufsteckbürste 10a auf einer Standfläche steht, Flüssigkeit an der Abtropfkante vorteilhaft abtropft. Des Weiteren läuft durch die Abtropfkante 108a weniger Flüssigkeit in Richtung Standfläche und so im montierten Zustand auch weniger Flüssigkeit in Richtung der Schnittstelle 24a.

Die Standfläche ist an einem freien, dem Bürstenkopf abgewandten Ende des Aufsteckabschnitts 18a ausgebildet. Ein Grundkörper 26a der Aufsteckbürste 10a bildet die Standfläche aus. Die Standfläche ist von einer ringförmigen Fläche des Grundkörpers 26a gebildet, welche um die Längsachse angeordnet ist. Die Fläche weist dabei eine Breite von 0.5 mm bis 2 mm, vorzugsweise von 0.7 mm bis 1.5 mm, auf. Ferner beträgt ein Außendurchmesser der Standfläche von 9 mm bis 17 mm, vorzugsweise von 11 mm bis 15 mm, und ein Innendurchmesser von 7 mm bis 15 mm, vorzugsweise von 9 mm bis 13 mm. Die Standfläche ermöglicht es, die Aufsteckbürste 10a auf eine plane Fläche zu stellen, sodass sich eine Haupterstreckungsrichtung 98a der Aufsteckbürste 10a im Wesentlichen senkrecht zu der Fläche erstreckt. Ob die Standfläche seine Funktion effektiv ausführen kann, hängt von verschiedenen Faktoren ab, die den Schwerpunkt beeinflussen, wie beispielsweise eine Gestaltung des Borstenfelds 43a, insbesondere der Borstenlänge, und/oder eine Masseverteilung im Körper.

Die Aufsteckbürste 10a weist eine axiale Länge von 50 mm bis 110 mm, vorzugsweise von 70 mm bis 90 mm, auf. Ferner weist die Aufsteckbürste 10a in dem Kopfabschnitt 14a eine Breite von 7 mm bis 16 mm, vorzugsweise von 10 mm bis 14 mm, auf. In dem Halsabschnitt 22a weist die Aufsteckbürste 10a eine Breite von 3 mm bis 8 mm, vorzugsweise von 5 mm bis 7 mm, auf. In dem Aufsteckabschnitt 18a weist die Aufsteckbürste eine Breite von 12 mm bis 20 mm, vorzugsweise von 14 mm bis 18 mm, auf.

Ferner weist die Aufsteckbürste 10a einen tragenden Grundkörper 26a auf. Der tragende Grundkörper 26a weist eine Hartkomponente auf. Der tragende Grundkörper 26a besteht aus einer Hartkomponente. Grundsätzlich wäre jedoch auch denkbar, dass der Grundkörper aus mehreren verschiedenen Hartkomponenten besteht. Insbesondere könnten dadurch verschiedene Eigenschaften an verschiedenen Körperpartien des Grundkörpers 26a mit den verschiedenen Komponenten erreicht werden. Beispielsweise könnte die Schnittstellenaufnahme 20a aus einem Material für gute Ausbildung und Eigenschaften der Schnittstellenaufnahme 20a gebildet sein, während der eigentliche Kopfabschnitt 14a aus einem zweiten Material besteht, welches gegenüber den chemischen Mundhygienemitteln wie Zahnpasta resistenter ist. Alternativ können Kunststoffe verschiedener Dichte bzw. auch spezifischer Masterbatch mit anderer Dichte eingesetzt werden. Für vibrierende Zahnbürsten wie Schall, Ultraschall, etc. kann die Gewichtsverteilung am Produkt für die Ausbreitung der Schwingungen extrem relevant sein. Beispielsweise könnten Komponenten des Grundkörpers 26a oder auch andere Komponenten mit hoher Dichte ausgeführt werden, um das Gewicht zu erhöhen, um Schwingung zu optimieren. Ferner kann durch schwere Bereiche eine gewisse Gewichtsverteilung erreicht werden, um eine optimale Schwingung zu erhalten. Beispielsweise kann mit einem zweiten schweren Hartmaterial, insbesondere 2k Spritzguss, vorzugsweise sogar innen, nicht sichtbar ein Ring eingespritzt werden. Ferner sind auch drei Hartkomponenten und/oder eine Kombination mit Weichkomponenten denkbar. Der tragende Grundkörper 26a bildet eine tragende Struktur der Aufsteckbürste 10a aus. Der tragende Grundkörper 26a bildet eine tragende Struktur des Bürstenkopfs 16a aus. Ferner bildet der tragende Grundkörper 26a eine tragende Begrenzung der Schnittstellenaufnahme 20a aus. Zudem ist der Bürstenkopf 16a über den tragenden Grundkörper 26a im Wesentlichen starr mit der Schnittstellenaufnahme 20a gekoppelt. Der tragende Grundkörper 26a erstreckt sich von dem Aufsteckabschnitt 18a über den Halsabschnitt 22a hin zu dem Kopfabschnitt 14a. Der Grundkörper 26a ist einstückig ausgebildet. Grundsätzlich wäre jedoch auch denkbar, dass der Grundkörper 26a zumindest teilweise unterbrochen ist und die Aufsteckbürste 10a beispielsweise ein bewegliches Gelenk aufweist, über welches der Bürstenkopf 16a beweglich gelagert ist.

Die Aufsteckbürste 10a kann auch nur aus Hartkomponenten gebildet sein bzw. nur aus einem Grundkörper 26a ohne Umspritzung 32a bestehen.

Des Weiteren weist die Aufsteckbürste 10a eine Umspritzung 32a auf. Die Umspritzung 32a ist aus einem von dem Grundkörper 26a verschiedenen Material. Die Umspritzung 32a weist eine Weichkomponente auf. Die Umspritzung 32a besteht aus einer Weichkomponente. Die Umspritzung 32a und der Grundkörper 26a sind in einem Mehrkomponenten-Spritzgussverfahren hergestellt. Grundsätzlich wäre jedoch auch ein anderes, einem Fachmann als sinnvoll erscheinendes Herstellungsverfahren denkbar. Die Umspritzung 32a umgibt einen wesentlichen Teil einer Außenfläche des Grundkörpers 26a. Der Grundkörper 26a ist im Bereich einer Vorderseite des Bürstenkopfs 16a frei von der Umspritzung 32a. Hierdurch kann insbesondere ein Einbringen von Borsten besser ermöglicht werden. Es wäre jedoch auch denkbar, dass der Bürstenkopf 16a mit Weichelementen aus der Weichkomponente der Umspritzung 32a versehen ist. Ferner ist der Grundkörper 26a, im Bereich der Schnittstellenaufnahme 20a frei von der Umspritzung 32a. Des Weiteren weist der Grundkörper 26a auf einer Rückseite des Bürstenkopfs 26a einen Abstützbereich 92a auf, welcher frei von der Umspritzung 32a ist. Der Abstützbereich 92a dient insbesondere zu einer Abstützung des Bürstenkopfs 16a bei einem Einbringen von Borsten in den Grundkörper 26a und/oder beim Umspritzen des Grundkörpers 26a. Die Umspritzung 32a würde dabei nachgeben und würde im Prozess keine genaue Positionierung für Beborstung möglich machen. Zusätzlich könnte auf der Rückseite des Bürstenkopfs 26a zudem ein Zungenreiniger realisiert werden. Der Zungenreiniger kann beispielsweise Noppen und/oder Lamellen, insbesondere in Kreisen oder als gerade oder wellenförmige Längs- oder Querstreifen, aufweisen und aus einer Hartkomponente, einer Weichkomponente oder in Hart- und Weichkomponenten hergestellt sein. Bei der Verwendung von Weichkomponenten kann die Weichkomponente beispielsweise als Ring um den Abstützbereich 92a ausgebildet sein. Zudem weist der Grundkörper 26a in dem Halsabschnitt 22a einen Logobereich 94a auf, welcher frei von der Umspritzung 32a ist. Der Logobereich 94a dient insbesondere zu einer Bedruckung des Grundkörpers 26a, wie beispielsweise mittels Tampondruck, Laserbeschriftung oder Prägung. Alternativ kann eine Beschriftung bereits als Schrifteinsatz im Spritzgiesswerkzeug realisiert sein. Die Beschriftung erfolgt dabei als versenkter oder erhabener Schriftzug. Eine sekundäre Funktion des Logobereichs 94a ist ferner die Abstützung zur genauen Positionierung des Grundkörpers 26a im Spritzgusswerkzeug beim Einspritzen einer zweiten Komponente bzw. der Weichkomponente für die Umspritzung 32a.

Die Schnittstellenaufnahme 20a weist mehrere Teilaufnahmebereiche 36a, 38a, 40a, 96a auf. Die Schnittstellenaufnahme 20a ist in mehrere Teilaufnahmebereiche 36a, 38a, 40a, 96a unterteilt. Die Schnittstellenaufnahme 20a weist einen ersten, im Wesentlichen quaderförmigen Teilaufnahmebereich 36a auf. Der erste Teilaufnahmebereich 36a bildet einen letzten Teilaufnahmebereich der Schnittstellenaufnahme 20a. Der erste Teilaufnahmebereich 36a ist zu einer Aufnahme einer Spitze der Schnittstelle 24a des Zahnbürstenhandteils 12a vorgesehen. Der erste Teilaufnahmebereich 36a ist zu einer Aufnahme eines vorderen, freien Achsbereichs einer Achse 110a der Schnittstelle 24a des Zahnbürstenhandteils 12a vorgesehen. Der erste Teilaufnahmebereich 36a bildet einen dem Bürstenkopf 16a zugewandten Teilaufnahmebereich der Schnittstellenaufnahme 20a. Ferner weist der erste im Wesentlichen quaderförmige Teilaufnahmebereich 36a eine Verjüngung 42a auf. Der erste Teilaufnahmebereich 36a verjüngt sich an der Verjüngung 42a von zumindest einer Seite radial. Der erste Teilaufnahmebereich 36a verjüngt sich an der Verjüngung 42a von zwei gegenüberliegenden Seiten radial. Die Verjüngung 42a ist dabei von zwei gegenüberliegenden abgeschrägten Absätzen gebildet. Ein Querschnitt des ersten Teilaufnahmebereichs 36a verringert sich dabei in axialer Richtung zu dem Bürstenkopf 16a hin. Auf einer dem zweiten Teilaufnahmebereich 38a zugewandten Seite der Verjüngung 42a weist der erste Teilaufnahmebereich 36a eine axiale Länge von 2 mm bis 7 mm, vorzugsweise von 3.5 mm bis 5 mm, auf. Auf einer dem zweiten Teilaufnahmebereich 38a abgewandten Seite der Verjüngung 42a weist der erste Teilaufnahmebereich 36a eine axiale Länge von 5 mm bis 11 mm, vorzugsweise von 7 mm bis 9 mm, auf. Eine Rückseite des ersten Teilaufnahmebereichs 36a weist auf einer dem zweiten Teilaufnahmebereich 38a zugewandten Seite der Verjüngung 42a zu einer Längsachse der Aufsteckbürste 10a einen maximalen Abstand von 0.5 mm bis 3 mm, vorzugsweise von 1 mm bis 2 mm, auf. Ferner weist die Rückseite des ersten Teilaufnahmebereichs 36a auf einer dem zweiten Teilaufnahmebereich 38a abgewandten Seite der Verjüngung 42a zu einer Längsachse der Aufsteckbürste 10a einen maximalen Abstand von 0.8 mm bis 1.6 mm, vorzugsweise von 1.1 mm bis 1.4 mm, auf. Des Weiteren weist die Vorderseite des ersten Teilaufnahmebereichs 36a auf einer dem zweiten Teilaufnahmebereich 38a abgewandten Seite der Verjüngung 42a zu einer Längsachse der Aufsteckbürste 10a einen maximalen Abstand von 0.8 mm bis 1.6 mm, vorzugsweise von 1.1 mm bis 1.4 mm, auf. Die Seiten des ersten Teilaufnahmebereichs 36a weisen auf einer dem zweiten Teilaufnahmebereich 38a zugewandten Seite der Verjüngung 42a zu einer Längsachse der Aufsteckbürste 10a einen maximalen Abstand von 0.5 mm bis 3 mm, vorzugsweise von 1 mm bis 2 mm, auf. Ferner weisen die Seiten des ersten Teilaufnahmebereichs 36a auf einer dem zweiten Teilaufnahmebereich 38a abgewandten Seite der Verjüngung 42a zu einer Längsachse der Aufsteckbürste 10a einen maximalen Abstand von 1 mm bis 2 mm, vorzugsweise von 1.3 mm bis 1.7 mm, auf. Der erste Teilaufnahmebereich 36a weist einen gewissen "Anzug" aufgrund der nötigen Entformbarkeit beim Herstellen, insbesondere beim Spritzgießen, auf. In dem ersten Teilaufnahmebereich 36a findet die Klemmung der Achse 110a statt. Die Achse 110a liegt jedoch nicht komplett auf, da komplementäre Geometrien mit einem Luftspalt dazwischen geformt sind. Beispielsweise weist die Achse in einem Querschnitt betrachtet eine runde Geometrie auf, welche in einem eckigen Teil der Schnittstellen-Geometrie angeordnet ist.

Ferner weist die Schnittstellenaufnahme einen zweiten, im Wesentlichen zylindrischen Teilaufnahmebereich 38a auf. Der zweite Teilaufnahmebereich 38a ragt axial zumindest teilweise in den ersten Teilaufnahmebereich 36a. Der zweite Teilaufnahmebereich 38a ist den ersten Teilaufnahmebereich 36a axial vollständig überlappend angeordnet. Der zweite Teilaufnahmebereich 38a ist axial vollständig innerhalb des ersten Teilaufnahmebereichs 36a angeordnet. Der zweite Teilaufnahmebereich 38a ist an einem dem Ende der Schnittstellenaufnahme 20a abgewandten Ende des ersten Teilaufnahmebereichs 36a angeordnet. Der zweite Teilaufnahmebereich 38a schließt auf einer der Öffnung der Schnittstellenaufnahme 20a zugewandten Seite gemeinsam mit dem ersten Teilaufnahmebereich 36a ab. Ein maximaler Querschnitt des zweiten Teilaufnahmebereichs 38a senkrecht zu einer Haupterstreckungsrichtung 98a der Aufsteckbürste 10a ist größer als ein entsprechender maximaler Querschnitt des ersten Teilaufnahmebereichs 36a. Der erste Teilaufnahmebereich 36a ist gegenüber dem zweiten Teilaufnahmebereich 38a außermittig. Der erste Teilaufnahmebereich 36a ragt in einem überschneidenden Bereich mit dem zweiten Teilaufnahmebereich mit zumindest zwei Kanten axial durch den zweiten Teilaufnahmebereich 38a hindurch. Der erste Teilaufnahmebereich 36a ragt in einem überschneidenden Bereich mit dem zweiten Teilaufnahmebereich mit zumindest zwei Kanten radial aus dem zweiten Teilaufnahmebereich 38a hinaus. Ferner weist der zweite Teilaufnahmebereich 38a eine Verjüngung 100a auf. Der zweite Teilaufnahmebereich 38a verjüngt sich an der Verjüngung 100a von zumindest einer Seite radial zu dem ersten Teilaufnahmebereich 36a hin. Die Verjüngung 100a ist dabei von einem abgeschrägten Absatz gebildet. Die Verjüngung 100a weist gegenüber der Längsachse der Aufsteckbürste 10a einen Winkel von 25° bis 65°, vorzugsweise von 35° bis 55°, auf. Ein Minimalabstand der Verjüngung zu der Längsachse der Aufsteckbürste 10a beträgt von 0.3 mm bis 1.5 mm, vorzugsweise von 0.5 mm bis 1mm. Die Verjüngung weist eine axiale Länge von 0.2 mm bis 2 mm, vorzugsweise von 0.5 mm bis 1.5 mm, auf. Ein Querschnitt des zweiten Teilaufnahmebereichs 38a verringert sich dabei in axialer Richtung zu dem Bürstenkopf 16a hin. Der erste Teilaufnahmebereich 36a und der zweite Teilaufnahmebereich 38a sind gemeinsam spiegelsymmetrisch ausgebildet. Der zweite Teilaufnahmebereich 38a weist auf einer dem Bürstenkopf 16a abgewandten Seite einen Durchmesser von 2 mm bis 6 mm, vorzugsweise von 3.5 mm bis 5 mm, auf. Ferner weist der zweite Teilaufnahmebereich 38a eine Länge von 2 mm bis 6 mm, vorzugsweise von 2.5 mm bis 4.5 mm, auf. Der zweite Teilaufnahmebereich 38a ist teilweise gegenüber einer Längsachse der Aufsteckbürste 10a leicht gewinkelt. Der zweite Teilaufnahmebereich 38a bzw. dessen Seitenwände weist dabei zur Längsachse einen Winkel von 0.5° bis 5° vorzugsweise von 1° bis 3° auf. Ferner bildet der zweite Teilaufnahmebereich auf einer dem Bürstenkopf 16a zugewandten Seite zu dem ersten Teilaufnahmebereich 36a hin eine Fase aus. Der zweite Teilaufnahmebereich 38a dient zu einer Aufnahme der Achse 110a bzw. zu einer Führung der Achse 110a in die korrekte Lage in der Schnittstellenaufnahme 20a. Die Achse 110a ist dazu an dieser Stelle einseitig, in Richtung der Rückseite, rund gestaltet und hat auf der Vorderseite eine Abflachung.

Des Weiteren weist die Schnittstellenaufnahme 20a einen dritten kegelstumpfförmigen Teilaufnahmebereich 40a auf. Der dritte Teilaufnahmebereich 40a grenzt axial direkt an den zweiten Teilaufnahmebereich 38a an. Der dritte Teilaufnahmebereich 40a ist frei von einer Überschneidung mit dem ersten Teilaufnahmebereich 36a und dem zweiten Teilaufnahmebereich 38a. Ferner ist der dritte Teilaufnahmebereich 40a zumindest annähernd koaxial zu dem zweiten Teilaufnahmebereich 38a angeordnet. Bevorzugt schließt der dritte Teilaufnahmebereich 40a direkt an den ersten Teilaufnahmebereich 36a und den zweiten Teilaufnahmebereich 38a an. Der dritte Teilaufnahmebereich 40a schließt auf einer der Öffnung der Schnittstellenaufnahme 20a zugewandten Seite an den ersten Teilaufnahmebereich 36a und den zweiten Teilaufnahmebereich 38a an. Vorzugsweise bildet die Schnittstellenaufnahme 20a eine Vereinigungsmenge aus dem ersten Teilaufnahmebereich 36a, dem zweiten Teilaufnahmebereich 38a und dem dritten Teilaufnahmebereich 38a aus. Ein maximaler Querschnitt des dritten Teilaufnahmebereichs 40a senkrecht zu der Haupterstreckungsrichtung 98a der Aufsteckbürste 10a ist größer als ein entsprechender maximaler Querschnitt des zweiten Teilaufnahmebereichs 38a. An einem dem zweiten Teilaufnahmebereich 26a abgewandten Ende weist der dritte Teilaufnahmebereich 40a einen Durchmesser von 5 mm bis 13 mm, vorzugsweise von 7 mm bis 11 mm, auf. Auf einer dem zweiten Teilaufnahmebereich 26a zugewandten Ende weist der dritte Teilaufnahmebereich 40a einen Durchmesser von 4 mm bis 12 mm, vorzugsweise von 6 mm bis 10 mm, auf. Ferner weist der dritte Teilaufnahmebereich 40a eine axiale Länge von 3 mm bis 11 mm, vorzugsweise von 5 mm bis 9 mm, auf. Der dritte Teilaufnahmebereich 40a ist im Wesentlichen rotationssymmetrisch.

Des Weiteren weist die Schnittstellenaufnahme 20a einen vierten Teilaufnahmebereich 96a auf. Der vierte Teilaufnahmebereich 96a weist eine kegelstumpfform auf, wobei eine Mantelfläche des Teilaufnahmebereichs 96a konkav gekrümmt ist. Der vierte Teilaufnahmebereich 96a grenzt axial direkt an den dritten Teilaufnahmebereich 40a an. Ferner ist der vierte Teilaufnahmebereich 96a annähernd koaxial zu dem dritten Teilaufnahmebereich 40a angeordnet. Der vierte Teilaufnahmebereich 96a schließt direkt an den dritten Teilaufnahmebereich 40a an. Der vierte Teilaufnahmebereich 96a schließt auf einer der Öffnung der Schnittstellenaufnahme 20a zugewandten Seite an den dritten Teilaufnahmebereich 40a an. Der vierte Teilaufnahmebereich 96a bildet die Öffnung der Schnittstellenaufnahme 20a aus. Der vierte Teilaufnahmebereich 96a dient zu einer Aufnahme eines Schafts der Schnittstelle 24a des Zahnbürstenhandteils 12a. Der vierte Teilaufnahmebereich 96a bildet die Stelle aus, an welcher eine Achse 110a des Zahnbürstenhandteils 12a in die Aufsteckbürsten 10a eingeführt wird. Der vierte Teilaufnahmebereich 96a dient als Einführhilfe und startet gegenüber der Standfläche mit einem kleinen Absatz. Der vierte Teilaufnahmebereich 96a weist an einem freien Ende einen Durchmesser von 7 mm bis 15 mm, vorzugsweise von 9 mm bis 13 mm, auf. An einem Übergang zu dem dritten Teilaufnahmebereich 40a weist der vierte Teilaufnahmebereich 96a einen Durchmesser von 5 mm bis 13 mm, vorzugsweise von 7 mm bis 11 mm, auf. Ferner weist der vierte Teilaufnahmebereich 96a axial eine Länge von 1 mm bis 5 mm, vorzugsweise von 1.5 mm bis 3.5 mm, auf. Der vierte Teilaufnahmebereich 96a ist im Wesentlichen rotationssymmetrisch. Der dritte Teilaufnahmebereich 40a und der vierte Teilaufnahmebereich 96a dienen zu einer Aufnahme eines Nockens des Zahnbürstenhandteils 12a. Wenn kein Nocken da ist, wird die Achse 110a durch den "Raum" geführt, durch welchen sie hindurch geführt werden kann, da die Achse 110a in der Regel weniger voluminös ist als ein Nocken.

Die Schnittstellenaufnahme 20a ist von einer Universal-Schnittstellenaufnahme gebildet. Die Schnittstellenaufnahme 20a ist zu einer Aufnahme von zumindest zwei verschiedenen Schnittstellen 24a verschiedener Zahnbürstenhandteile 12a geeignet. Die Schnittstellenaufnahme 20a passt daher auf Schnittstellen 24a verschiedener Form und/oder Abmessung. Der tragende Grundkörper 26a, welcher teilweise an die Schnittstellenaufnahme 20a angrenzt, weist dazu eine Klemmeinheit 28a auf. Die Klemmeinheit 28a ist dazu vorgesehen, zu einer Aufnahme einer Schnittstelle 24a eines Zahnbürstenhandteils 12a elastisch ausgelenkt zu werden. Die Klemmeinheit 28a ist zu einem Verklemmen der Achse 110a vorgesehen. Die Klemmeinheit 28a grenzt direkt an die Schnittstellenaufnahme 20a an. Die Klemmeinheit 28a ist axial in einem Bereich des ersten Teilaufnahmebereichs 36a angeordnet. Die Klemmeinheit 28a ist axial vollständig in einem Bereich des ersten Teilaufnahmebereichs 36a angeordnet. Ferner ist die Klemmeinheit 28a teilweise axial in einem Bereich des zweiten Teilaufnahmebereichs 38a angeordnet.

Die Klemmeinheit 28a weist eine zumindest teilweise freistehende Klemmwand 30a, 30a' auf, welche direkt an die Schnittstellenaufnahme 20a angrenzt. Die Klemmeinheit 28a weist zwei teilweise freistehende Klemmwände 30a, 30a' auf, welche auf gegenüberliegenden Seiten direkt an die Schnittstellenaufnahme 20a angrenzen. Die Klemmwände 30a, 30a' grenzen jeweils an eine Seite der Schnittstellenaufnahme 20a an. Der erste Teilaufnahmebereich 36a der Schnittstellenaufnahme 20a ist zu zwei gegenüberliegenden Seiten hin von den Klemmwänden 30a, 30a' begrenzt. Die Klemmwände 30a, 30a' sind gegenüber einem Rest des Grundkörpers 26a teilweise freistehend. Die Klemmwände 30a, 30a' sind über Schlitze und Durchbrüche zu der Schnittstellenaufnahme 20a, welche sich jeweils parallel zur Längsachse erstrecken, gegenüber einem Rest des Grundkörpers 26a teilweise freigestellt. Die Schlitze sind jeweils ausgehend von der Schnittstellenaufnahme 20a hinter den Klemmwände 30a, 30a' angeordnet, während die Durchbrüche neben den Klemmwänden 30a, 30a' angeordnet sind und in die Schnittstellenaufnahme 20a münden. Die Schlitze und Durchbrüche weisen jeweils eine Länge von 6.5 mm bis 9 mm, vorzugsweise von 7 mm bis 8 mm, auf. Das Gesamtmass von Schlitz zusammen mit der Breite der Klemmwand beträgt 1 mm bis 2.5 mm, vorzugsweise 1.2 mm bis 1.8 mm. Die Durchbrüche weisen jeweils eine Höhe von 0.02 mm bis 0.3 mm, vorzugsweise von 0.05 mm bis 0.15 mm, und eine Breite von 0.1 mm bis 0.5 mm, vorzugsweise von 0.15 mm bis 0.3 mm, auf. Die Klemmwände 30a, 30a' sind dazu vorgesehen bei einem Aufstecken der Aufsteckbürste 10a auf ein Zahnbürstenhandteil 12a radial nach außen ausgelenkt zu werden. Die Klemmwände 30a, 30a' der Klemmeinheit 28a erstrecken sich axial in Einführrichtung 102a der Schnittstelle 24a über die Verjüngung 42a des ersten Teilaufnahmebereichs 36a hinweg. Die Klemmwände 30a, 30a' der Klemmeinheit 28a sind axial in Einführrichtung 102a hinter der Verjüngung 100a des zweiten Teilaufnahmebereichs 38a angeordnet. Die Umspritzung 32a umgibt die Klemmwände 30a, 30a' jeweils in zumindest einer Ebene 34a zumindest zu einem wesentlichen Teil direkt. Die Umspritzung 32a umgibt die Klemmwände 30a, 30a' jeweils in radialer Richtung auf einer der Schnittstellenaufnahme 20a abgewandten Seite. Die Klemmwände 30a, 30a' sind zu zwei Seiten hin von der Umspritzung 32a begrenzt. Die Umspritzung 32a ist, radial von der Schnittstellenaufnahme 20a aus betrachtet, hinter den Klemmwänden 30a, 30a'. Der Grundkörper 26a weist auf einer der Schnittstellenaufnahme 20a angewandten Seite hinter den Klemmwänden 30a, 30a' jeweils eine zweistufige Ausnehmung auf, die gegen innen schmäler und gegen außen breiter wird. In einem Bereich der Durchbrüche des Grundkörpers 26a, die mittels der Umspritzung 32a ausgespritzt sind, grenzt die Umspritzung 32a direkt an die Schnittstellenaufnahme 20a an. Die Umspritzung 32a dient zu einer Abfederung einer elastischen Auslenkung der Klemmwände 30a, 30a'. Die Klemmwände 30a, 30a' weisen einen axialen Abstand von 3 mm bis 6 mm, vorzugsweise von 4 mm bis 5 mm, zu der Standfläche auf. Ferner weisen die Klemmwände 30a, 30a' jeweils eine Wandstärke von 0.3 mm bis 1.2 mm, vorzugsweise von 0.5 mm bis 0.9 mm, auf. Die Klemmwände 30a, 30a' sind so ausgestaltet, dass sie im eingeführten Zustand der Achse 110a plan ab der Achse 110a anliegen. Die Achse 110a ist im Bereich der Klemmwände 30a, 30a' seitlich flach ausgeführt. Die Kontaktflächen der Klemmwände 30a, 30a' sind ebenfalls glatt gestaltet.

Eine durch die Klemmwände 30a, 30a' aufgebrachte Klemmkraft ist grundsätzlich abhängig vom Achsaufbau bzw. von den Geometrien der Achse 110a und den Dimensionen der Achse 110a. Eine Klemmung findet nicht über eine punktuelle Berührung sondern über eine flächige Berührung der Teile statt. Parallel zur seitlichen Klemmung entsteht automatisch auch eine gewisse Klemmmöglichkeit des Elements auf der Rückseite, zwischen den beiden Durchbrüchen. Eine angestrebte Klemmkraft der Klemmwände 30a, 30a' beträgt von 1 kg bis 4 kg, vorzugsweise von 1.2 kg bis 2.5 kg.

Grundsätzlich wäre auch denkbar, dass die Freiräume um die Innengeometrie nicht mit Umspritzung 32a gefüllt sind. Dies könnte insbesondere eine Einkomponentenlösung darstellen, beispielsweise dass die Aufsteckbürste 10a nur aus einer Hartkomponente besteht und technische Geometrien, wie insbesondere die Klemmwände 30a, 30a', nicht umspritzt sind und so frei stehen . Hierdurch könnte eine kostengünstige Aufsteckbürste 10a geschaffen werden. Ferner kann eine weitere Entlüftungsmöglichkeit beim Einführen der Achse 110a geschaffen werden.

Ferner weist die Klemmeinheit 28a einen teilweise freistehenden Klemmsteg 104a auf. Der Klemmsteg 104a ist axial auf Höhe der Klemmwände 30a, 30a' angeordnet. Der Klemmsteg 104a begrenzt den ersten Teilaufnahmebereich 36a der Schnittstellenaufnahme 20a zu einer dritten Seite hin. Der Klemmsteg 104a der Klemmeinheit 28a erstreckt sich axial in Einführrichtung 102a der Schnittstelle 24a über die Verjüngung 42a des ersten Teilaufnahmebereichs 36a hinweg. Die Umspritzung 32a umgibt den Klemmsteg 104a in zumindest einer Ebene 34a zumindest zu einem wesentlichen Teil direkt. Die Umspritzung 32a umgibt den Klemmsteg 104a in radialer Richtung auf einer der Schnittstellenaufnahme 20a abgewandten Seite.

Die Umspritzung 32a weist verschiedene Funktionen auf. Mittels der Umspritzung 32a kann eine hohe Flexibilität der Klemmung sowie der Rückstellung erreicht werden. Ferner kann allgemein eine verbesserte Griffigkeit der Aufsteckbürste 10a erreicht werden. Zudem weist die Umspritzung 32a im montierten Zustand Abdichtfunktionen beispielsweise der Schnittstellenaufnahme 20a gegenüber der Umwelt auf. Des Weiteren dient die Umspritzung 32a zu einer Dämpfung des Bürstenkopfs 16a. Die mögliche Ausformung eines Zungenreinigers aus der Umspritzung wurde bereits ausgeführt.

Des Weiteren weist die Klemmeinheit 28a eine zumindest teilweise in die Schnittstellenaufnahme 20a ragende Klemmerhebung 106a auf. Die Klemmerhebung 106a ist von einer Erhebung auf einer die Schnittstellenaufnahme 20a begrenzenden Innenwand des Grundkörpers 26a gebildet. Die Klemmerhebung 106a ist axial vollständig in einem Bereich des ersten Teilaufnahmebereichs 36a angeordnet. Die Klemmerhebung 106a ist axial in Einführrichtung 102a der Schnittstelle 24a hinter der Verjüngung 42a des ersten Teilaufnahmebereichs 36a angeordnet. Die Klemmerhebung 106a ist axial zumindest 1 mm, vorzugsweise zumindest 1,5 mm und bevorzugt maximal 3 mm, besonders bevorzugt maximal 2.5 mm, von der Verjüngung 42a entfernt. Die Klemmerhebung 106a erstreckt sich axial bis zu einem Ende des ersten Teilaufnahmebereichs 36a. Die Klemmerhebung 106a erstreckt sich aus Gründen der Entformbarkeit axial bis zu einem Ende des ersten Teilaufnahmebereichs 36a. Die Klemmerhebung 106a weist eine axiale Länge von 4 mm bis 8 mm, vorzugsweise von 5 mm bis 7 mm, auf. Ferner weist die Klemmerhebung 106a eine Breite von 0.7 mm bis 1.8 mm, vorzugsweise von 1 mm bis 1.5 mm, und eine Höhe von 0.04 mm bis 0.5 mm, vorzugsweise von 0.06 mm bis 0.3 mm, auf. Des Weiteren weist die Klemmerhebung 106a einen Abstand von der Mittelachse von 0.7 mm bis 1.5 mm, vorzugsweise von 1 mm bis 1.3 mm, auf. Die Klemmerhebung 106a ist auf einer Seite des Klemmstegs 104a der Klemmeinheit 28a angeordnet. Die Klemmerhebung 106a ist auf einer Rückseite des ersten Teilaufnahmebereichs 38a angeordnet. Die Klemmerhebung 106a erstreckt sich teilweise axial über den Klemmsteg 104a. Durch Anpassung einer Höhe der Klemmerhebung 106a kann eine Abziehkraft der Aufsteckbürste eingestellt werden. Die Klemmerhebung 106a dient daher zu einer Einstellbarkeit der Rückhaltekraft und einem Verklemmen der Achse 110a in der Schnittstellenaufnahme 20a. Eine Kontaktfläche der Achse 110a zu der Klemmerhebung 106a weist vorzugsweise eine Riffelung und/oder Aufrauung auf.

Ein dargestelltes Lochfeld 109a des Bürstenkopfs 16a in dem Grundkörper 26a ist, wie dargestellt, ausgelegt für den Einsatz konventioneller Filamente. Das Lochfeld 109a weist drei Bereiche auf. Das Lochfeld 109a weist einen vorderen Bereich auf, der gegen das freie Ende gerichtet ist. Der vordere Bereich weist zwei Querreihen auf. Eine vorderste Reihe weist zwei Löcher auf, während eine zweite Reihe drei Löcher aufweist. Das Lochfeld 109a weist eine steigende Anzahl von Löchern gegen einen mittleren Bereich des Lochfelds 109a auf. Der mittlere Bereich des Lochfelds 109a ist im Zentrum des Lochfelds 109a angeordnet und weist fünf Querreihen auf. Die Querreihen weisen jeweils vier Löcher auf. Des Weiteren weist das Lochfeld 109a einen hinteren Bereich auf, der gegen den Bürstenhals gerichtet ist. Der hintere Bereich weist drei Querreihen auf. Eine erste an den mittleren Bereich angrenzende Querreihe weist drei Löcher auf. Anschließend folgt eine weitere Reihe mit drei Löchern. Am freien Ende ist nochmals eine Querreihe mit zwei Löchern vorgesehen. Die Lochanzahl sinkt gegen den Halsabschnitt 22a. Damit die verschiedenen Bereiche geschaffen werden können, sind die Löcher in Querreihen angeordnet, damit ein Verdrängen und somit ein Schneiden/Profilieren der Borsten möglich ist.

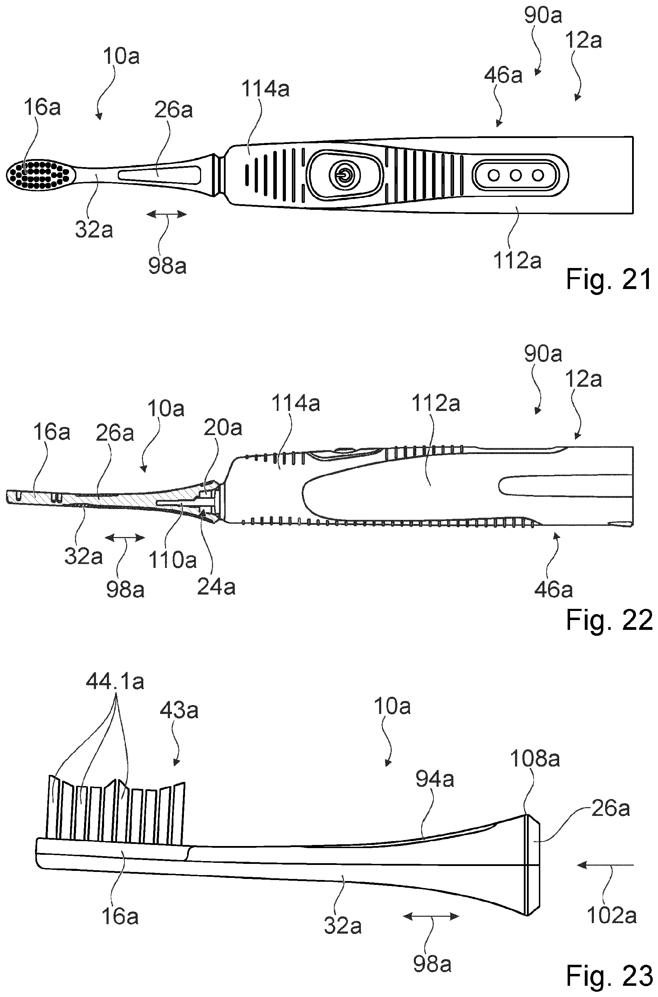

Figur 23 zeigt den Bürstenkopf 16a mit einem herkömmlichen Borstenfeld 43a mit einer herkömmlichen Anordnung der Borstenbündel 44.1a. Es sind dabei insbesondere verschiedene Ausgestaltungen des Borstenfelds 43a in dem Lochfeld 109a denkbar. Beispielsweise können Bündel aus Borsten mit einem zugespitzten und einem abgerundeten zylindrischen Ende vorgesehen werden, wobei das Borstenfeld 43a identische Borstenbündel 44.1a und/oder asymmetrisch gestanzte Borstenbündel 44a vorsehen kann. Ferner kann in dem Borstenfeld 43a ein Mittelkamm ausgebildet werden, wobei das Borstenfeld 43a dabei insbesondere aus zylindrischen Filamenten besteht. Ein Schnitt ist dabei insbesondere so gestaltet, dass das vordere und das hintere Ende erhöht sind und sich in der Mitte des Borstenfelds 43a ebenfalls eine Erhöhung und/oder ein Kamm bildet. Der Mittelkamm kann dabei sowohl mittels flacher Borstenbündel 44.1a realisiert werden, wobei eine Profilierung mittels mehrerer kleiner Stufen realisiert ist, als auch mittels im Winkel geschnittener Borstenbündel 44.1a, wie in Fig. 23 gezeigt. Alternativ wäre auch denkbar, dass der Kamm als eine höherstehende Bündelquerreihe ausgebildet ist, wobei ein vorderes und hinteres Ende der Bündelquerreihe schräg geschnitten ist. Als Filamente für die Borstenbündel 44.1a sind verschiedene, einem Fachmann als sinnvoll erscheinende Filamente denkbar, wie beispielsweise 2K-Filamente, Stain Devil-( von Perlon ^{®}), Charcoal- oder Spiral-/Twister-Filamente in einem Borstenfeld einer Sonic-Bürste.

Ferner sind auch noch weitere, einem Fachmann als sinnvoll erscheinende Beborstungsmethoden denkbar. Beispielsweise wäre denkbar, dass in dem Bürstenkopf 16a beispielsweise Ausnehmungen für AFT-Plättchen oder für das PTt-Verfahren vorgesehen sind. Insbesondere wäre denkbar, dass die Beborstungsmethode spezifisch für schwenkende und Sonic-Bewegungen ausgelegt ist. Dies kann beispielsweise durch das PTt-Verfahren realisiert werden, da hierbei eine minimale Kopfdicke benötigt und daher weniger "Material" benötigt wird. Ferner kann ein kleiner Abstand der Borsten vom Rand erreicht werden.

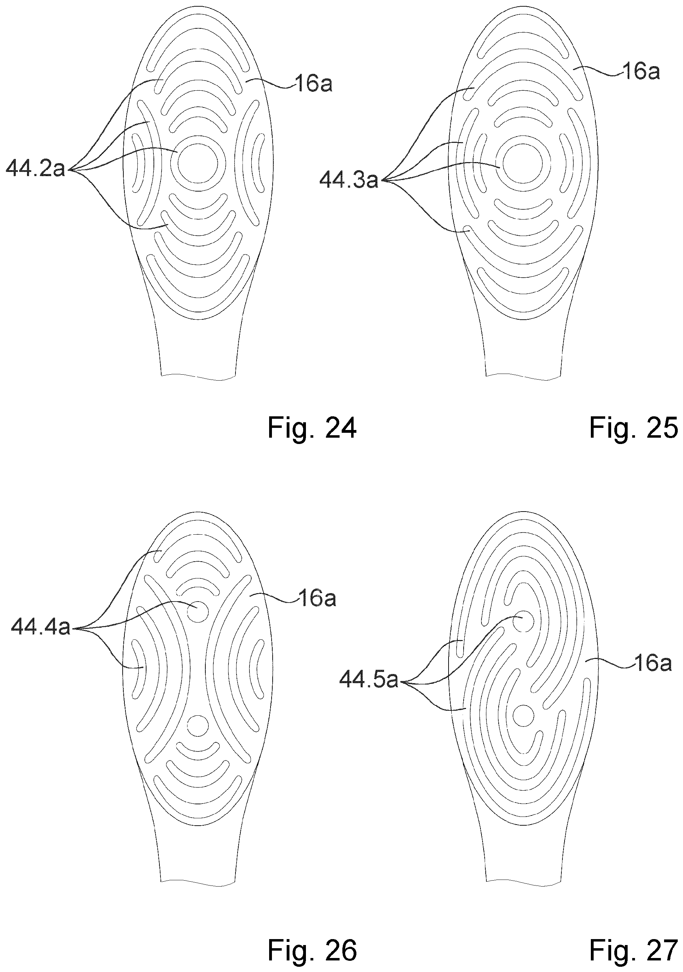

Des Weiteren sind auch noch weitere, alternative Ausgestaltungen und Anordnungen der Borstenbündel 44.1a.1 des Borstenfelds 43a denkbar. In den Figuren 24 bis 39 sind beispielhaft verschiedene alternative Ausgestaltungen und Anordnungen von Borstenbündeln 44.2a; 44.3a; 44.4a; 44.5a; 44.6a; 44.7a; 44.8a; 44.9a; 44.10a; 44.11a; 44.12a; 44.13a; 44.14a; 44.15a; 44.16a; 44.17a des Borstenfelds 43a für den Bürstenkopf 16a dargestellt. Der Bürstenkopf 16a weist dabei jeweils ein Borstenfeld 43a mit zumindest zwei wesentlich differierenden Borstenbündeln 44.2a; 44.3a; 44.4a; 44.5a; 44.6a; 44.7a; 44.8a; 44.9a; 44.10a; 44.11a; 44.12a; 44.13a; 44.14a; 44.15a; 44.16a; 44.17a auf. Die Borstenbündel 44.2a; 44.3a; 44.4a; 44.5a; 44.6a; 44.7a; 44.8a; 44.9a; 44.10a; 44.11a; 44.12a; 44.13a; 44.14a; 44.15a; 44.16a; 44.17a sind dabei jeweils hinsichtlich einer Form und/oder einer Ausrichtung unterschiedlich.

Figur 24 zeigt den Bürstenkopf 16a der Aufsteckbürste 10a mit einer alternativen zweiten Anordnung der Borstenbündel 44a.2 des Borstenfelds 43a. Die Borstenbündel 44.2a sind jeweils von Kämmen gebildet. Die Borstenbündel 44.2a sind jeweils von Kämmen gebildet, die in einem Längsprofil gebogen sind und verschiedene Längen aufweisen. Eine Biegung ist dabei insbesondere individuell und kann grundsätzlich auch innerhalb eines Borstenfelds 43a und/oder innerhalb des Borstenbündels 44.2a variieren. Eines der Borstenbündel 44.2a weist eine Ringform auf. Ein Teil der Borstenbündel 44.2a ist um das ringförmige Borstenbündel 44.2a herum gebogen, während ein Teil der Borstenbündel 44.2a von dem ringförmigen Borstenbündel 44.2a weggebogen ist.

Figur 25 zeigt den Bürstenkopf 16a der Aufsteckbürste 10a mit einer alternativen dritten Anordnung der Borstenbündel 44.3a des Borstenfelds 43a. Die Borstenbündel 44.3a sind jeweils von Kämmen gebildet. Die Borstenbündel 44.3a sind jeweils von Kämmen gebildet, die in einem Längsprofil gebogen sind. Eines der Borstenbündel 44.3a weist eine Ringform auf. Ein Rest der Borstenbündel 44.3a ist um das ringförmige Borstenbündel 44.3a herum gebogen.

Figur 26 zeigt den Bürstenkopf 16a der Aufsteckbürste 10a mit einer alternativen vierten Anordnung der Borstenbündel 44.4a des Borstenfelds 43a. Die Borstenbündel 44.4a sind jeweils teilweise von Kämmen gebildet. Ferner sind zwei der Borstenbündel 44.4a von herkömmlichen kreisförmigen Bündeln gebildet. Ein Teil der Borstenbündel 44.4a ist um die kreisförmigen Borstenbündel 44.4a herum gebogen, während ein Teil der Borstenbündel 44.4a von den kreisförmigen Borstenbündeln 44.4a weggebogen ist.

Figur 27 zeigt den Bürstenkopf 16a der Aufsteckbürste 10a mit einer alternativen fünften Anordnung der Borstenbündel 44.5a des Borstenfelds 43a. Die Borstenbündel 44.5a sind jeweils teilweise von Kämmen gebildet. Ferner sind zwei der Borstenbündel 44.5a von herkömmlichen kreisförmigen Bündeln gebildet. Die kammartigen Borstenbündel 44.5a sind um die kreisförmigen Borstenbündel 44.5a herum gebogen.

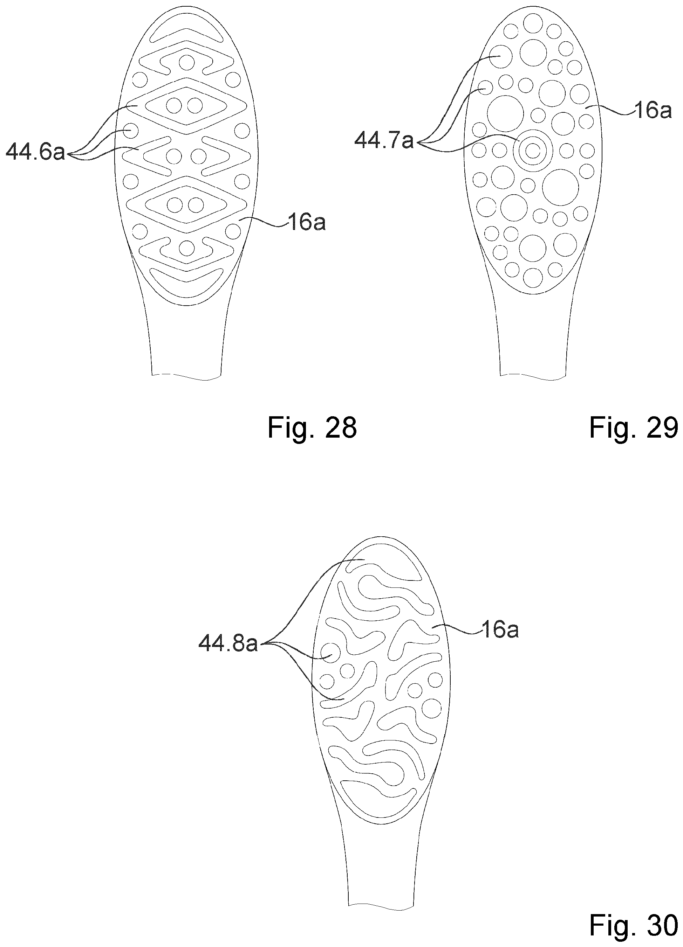

Figur 28 zeigt den Bürstenkopf 16a der Aufsteckbürste 10a mit einer alternativen sechsten Anordnung der Borstenbündel 44.6a des Borstenfelds 43a. Die Borstenbündel 44.6a weisen jeweils teilweise eine Pfeilform auf, wobei die Spitzen gegen außen gerichtet sind. Hierdurch kann eine vorteilhafte Reinigungswirkung insbesondere bei der Anwendung auf einer Schallzahnbürste bzw. einer Zahnbürste mit einer hin- und herschwenkenden Bewegung erzielt werden. Ferner sind mehrere der Borstenbündel 44.6a von herkömmlichen kreisförmigen Bündeln gebildet.

Figur 29 zeigt den Bürstenkopf 16a der Aufsteckbürste 10a mit einer alternativen siebten Anordnung der Borstenbündel 44.7a des Borstenfelds 43a. Die Borstenbündel 44.7a sind von herkömmlichen kreisförmigen Bündeln gebildet, wobei eine Größe der Borstenbündel 44.7a variiert und die Verteilung zumindest teilweise zufällig ist. Die Verteilung ist insbesondere frei von einer zu den Hauptrichtungen der Zahnbürste parallelen Symmetrieachse. Integriert sind auch zwei ineinander liegende Borstenbündel 44.7a, wobei eines als kreisringförmiges Bündel ausgestaltet ist und das andere als ein in dem kreisringförmigen Bündel liegendes herkömmliches kreisförmiges Bündel geformt ist.

Figur 30 zeigt den Bürstenkopf 16a der Aufsteckbürste 10a mit einer alternativen achten Anordnung der Borstenbündel 44.8a des Borstenfelds 43a. Ein Teil der Borstenbündel 44.8a ist von herkömmlichen kreisförmigen Bündeln gebildet, wobei eine Größe der Borstenbündel 44.8a variiert. Ein weiterer Teil der Borstenbündel 44.8a weist eine Freiform auf.

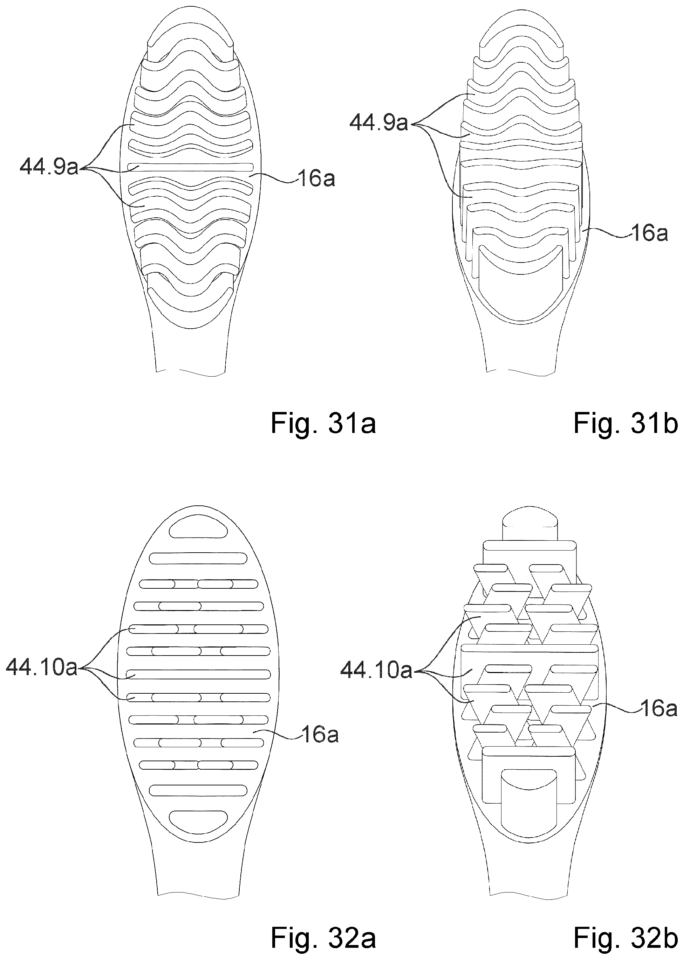

Die Figuren 31a und 31b zeigen den Bürstenkopf 16a der Aufsteckbürste 10a mit einer alternativen neunten Anordnung der Borstenbündel 44.9a des Borstenfelds 43a. Die Borstenbündel 44.9a sind jeweils von Kämmen gebildet. Die Borstenbündel 44.9a sind jeweils von Kämmen gebildet, die in einem Längsprofil und/oder einem Endprofil gewellt sind. Die Anzahl der Wellentäler und -berge ist insbesondere variabel. Es besteht die Möglichkeit verschiedener Wellen im gleichen Borstenfeld 43a. Die Kämme weisen jeweils teilweise unterschiedliche Schrägstellungen auf, wobei die Winkel der Schrägstellungen gegenüber einer Normalen des Bürstenkopfs 16a bei den Borstenbündeln 44.9a gegen das vordere und hintere Ende des Borstenfeldes 43a zunimmt und die Borstenbündel 44.9a der mittleren Kämme eher senkrecht stehen.

Die Figuren 32a und 32b zeigen den Bürstenkopf 16a der Aufsteckbürste 10a mit einer alternativen zehnten Anordnung der Borstenbündel 44a.10 des Borstenfelds 43a. Die Borstenbündel 44.10a weisen eine längliche Grundform auf und weisen jeweils teilweise unterschiedliche Schrägstellungen auf. Die quer angeordneten Kämme mit Schrägstellung bilden miteinander betrachtet eine X-Form aus, wenn das Borstenfeld in Längsrichtung betrachtet wird.

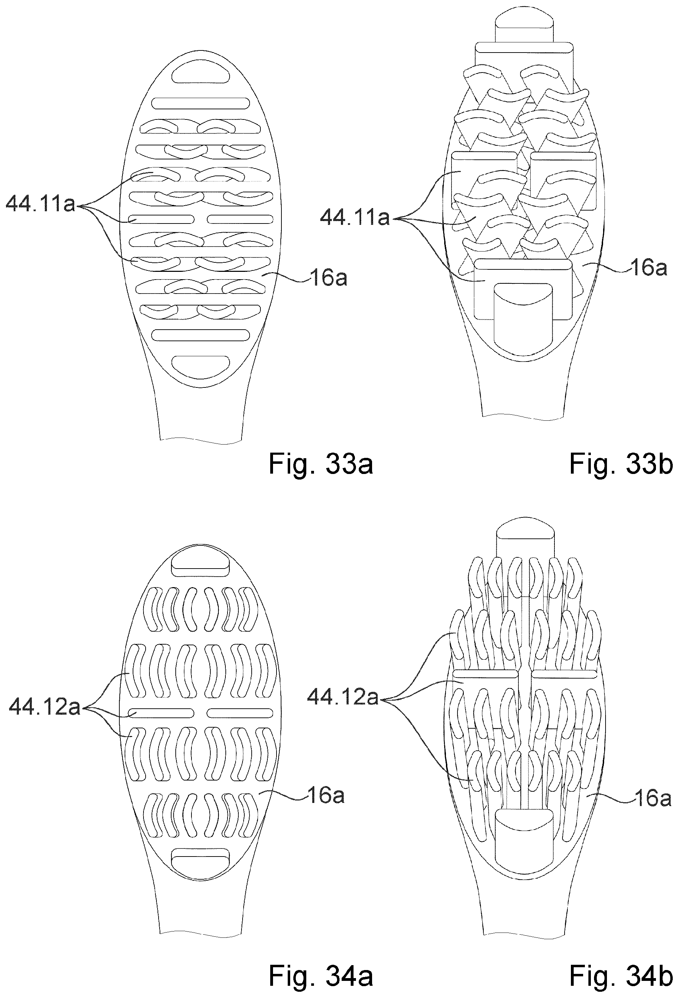

Die Figuren 33a und 33b zeigen den Bürstenkopf 16a der Aufsteckbürste 10a mit einer alternativen elften Anordnung der Borstenbündel 44.11a des Borstenfelds 43a. Die Borstenbündel 44.11a sind jeweils teilweise von Kämmen gebildet, die in einem Längsprofil gebogen sind. Ferner weisen die Borstenbündel 44.1 1a jeweils teilweise unterschiedliche Schrägstellungen auf, wobei wiederum eine X-Form gebildet wird.

Die Figuren 34a und 34b zeigen den Bürstenkopf 16a der Aufsteckbürste 10a mit einer alternativen zwölften Anordnung der Borstenbündel 44.12a des Borstenfelds 43a. Die Borstenbündel 44.12a sind jeweils teilweise von Kämmen gebildet, die in einem Längsprofil gebogen sind. Ferner weisen die Borstenbündel 44.12a jeweils teilweise unterschiedliche Schrägstellungen auf. Die Haupterstreckung der meisten Kämme ist parallel zu der Längsachse der Zahnbürste, wobei die Biegung der einzelnen Kämme symmetrisch zur Längsachse der Zahnbürste angelegt ist.

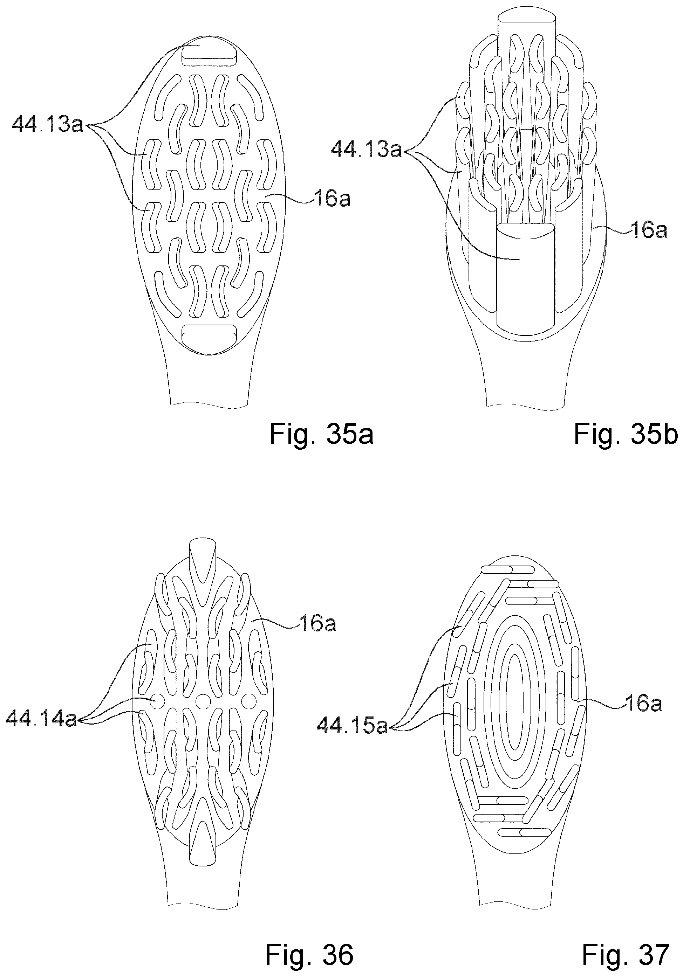

Die Figuren 35a und 35b zeigen den Bürstenkopf 16a der Aufsteckbürste 10a mit einer alternativen dreizehnten Anordnung der Borstenbündel 44.13a des Borstenfelds 43a. Die Borstenbündel 44.13a sind jeweils teilweise von Kämmen gebildet, die in einem Längsprofil gebogen sind. Ferner weisen die Borstenbündel 44.13a jeweils teilweise unterschiedliche Schrägstellungen auf. Die Haupterstreckung der Kämme ist parallel zu der Längsachse der Zahnbürste, wobei die Biegung der einzelnen Kämme symmetrisch zur Längsachse der Zahnbürste angelegt ist.

Figur 36 zeigt den Bürstenkopf 16a der Aufsteckbürste 10a mit einer alternativen vierzehnten Anordnung der Borstenbündel 44.14a.14 des Borstenfelds 43a. Ein Teil der Borstenbündel 44.14a ist von herkömmlichen kreisförmigen Bündeln gebildet. Ferner ist ein Teil der Borstenbündel 44.13a jeweils von Kämmen gebildet, die in einem Längsprofil gebogen sind und jeweils teilweise unterschiedliche Schrägstellungen aufweisen.

Figur 37 zeigt den Bürstenkopf 16a der Aufsteckbürste 10a mit einer alternativen fünftzehnten Anordnung der Borstenbündel 44.15a des Borstenfelds 43a. Zwei der Borstenbündel 44.15a sind elliptisch geformt. Ferner sind mehrere Borstenbündel 44.15a um die elliptischen Borstenbündel 44.15a angeordnet, welche unterschiedliche, zum Teil auch gegeneinander laufende, Schrägstellungen aufweisen.

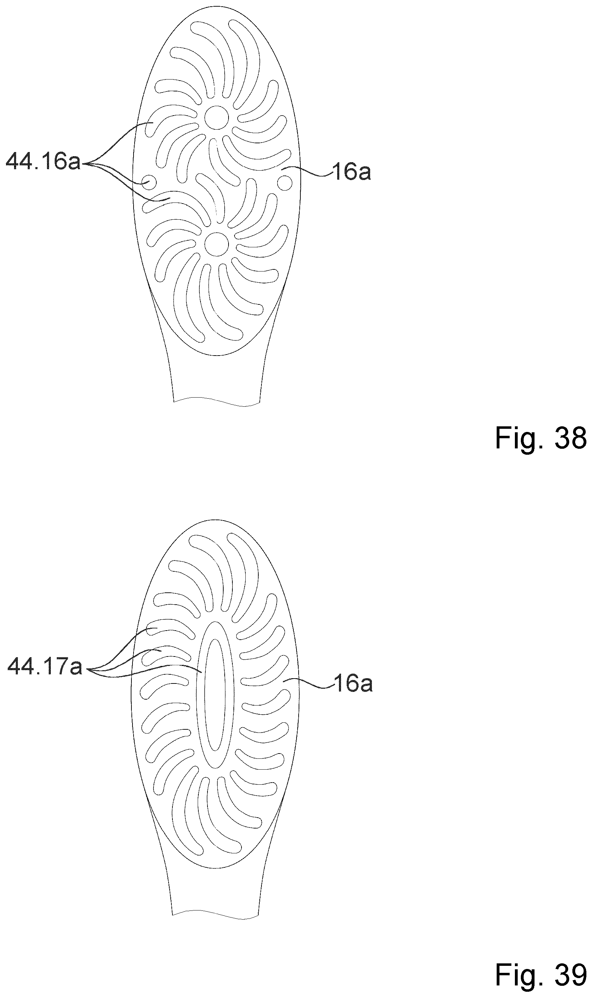

Figur 38 zeigt den Bürstenkopf 16a der Aufsteckbürste 10a mit einer alternativen sechzehnten Anordnung der Borstenbündel 44.16a des Borstenfelds 43a. Ein Teil der Borstenbündel 44.16a weist eine Freiform auf und bildet jeweils die Form einer Turbinenschaufel aus. Ferner sind zumindest zwei der Borstenbündel 44.16a von herkömmlichen kreisförmigen Bündeln gebildet. Die Freiform-Borstenbündel 44.16a sind um die kreisförmigen Borstenbündel 44.16a herum angeordnet.

Figur 39 zeigt den Bürstenkopf 16a der Aufsteckbürste 10a mit einer alternativen siebzehnten Anordnung der Borstenbündel 44.17a des Borstenfelds 43a. Eines der Borstenbündel 44.17a ist elliptisch geformt. Ein Rest der Borstenbündel 44.17a weist eine Freiform auf und bildet jeweils die Form einer Turbinenschaufel aus. Die freiform-Borstenbündel 44.17a sind um das elliptische Borstenbündel 44.17a herum angeordnet.

Die Borstenfelder 43a weisen jeweils alle eine gewisse Symmetrie, insbesondere eine Punkt- und/oder Spiegelsymmetrie, auf. Grundsätzlich wären jedoch auch Anordnungen frei von einer Symmetrie denkbar. Ferner sind auch noch weitere Anordnungen und Formen der Borstenbündel denkbar, wie beispielsweise als Multilevel-Tufts, wobei die Borstenbündel verschiedene Höhen innerhalb des Borstenbündels aufweisen.

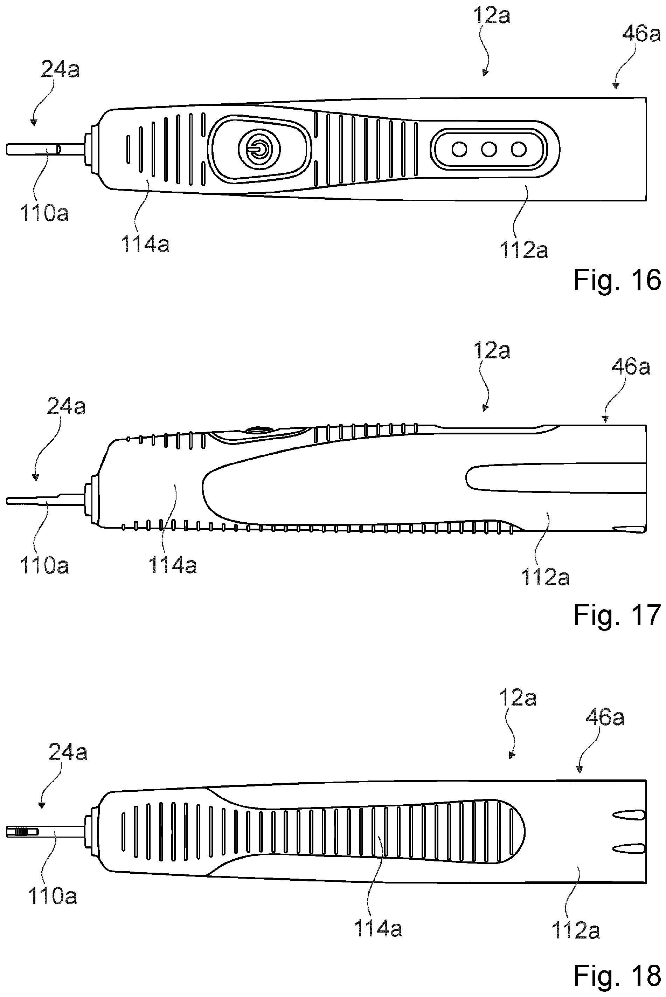

Figur 16 zeigt ein elektrisches Zahnbürstenhandteil 12a. Das Zahnbürstenhandteil 12a weist eine Schnittstelle 24a zu einer Kopplung mit der Aufsteckbürste 10a auf. Die Schnittstelle 24a weist eine Achse 110a zu einem direkten Eingriff in die Schnittstellenaufnahme 20a der Aufsteckbürste 10a auf. Die Achse 110a ist von einer Metallwelle gebildet. Grundsätzlich wäre jedoch auch eine andere, einem Fachmann als sinnvoll erscheinende Ausgestaltung der Achse 110a denkbar. Ferner weist das Zahnbürstenhandteil 12a ein Gehäuse 46a auf. Das Gehäuse 46a weist einen aus einer Hartkomponente bestehenden Grundkörper 112a auf. Der Grundkörper 112a bildet eine tragende Struktur des Gehäuses 46a. Der Grundkörper 112a ist einstückig ausgeführt. Grundsätzlich wäre jedoch auch eine andere, einem Fachmann als sinnvoll erscheinende Ausgestaltung denkbar, wie beispielsweise ein zweischalige Ausgestaltung. Ferner weist das Gehäuse 46a eine aus einem Weichmaterial bestehende Umspritzung 114a auf. Die Umspritzung 114a ist teilweise auf eine Außenfläche des Grundkörpers 112a angeordnet. Die Umspritzung 114a bildet einen Griffbereich des Gehäuses 46a aus. Ferner weist das elektrische Zahnbürstenhandteil 12a einen Deckel 113a auf. Der Deckel 113a ist dazu vorgesehen, das Gehäuse 112a auf einer der Schnittstelle 24a abgewandten Seite zu verschließen (Figuren 16, 17, 18, 19 und 20).

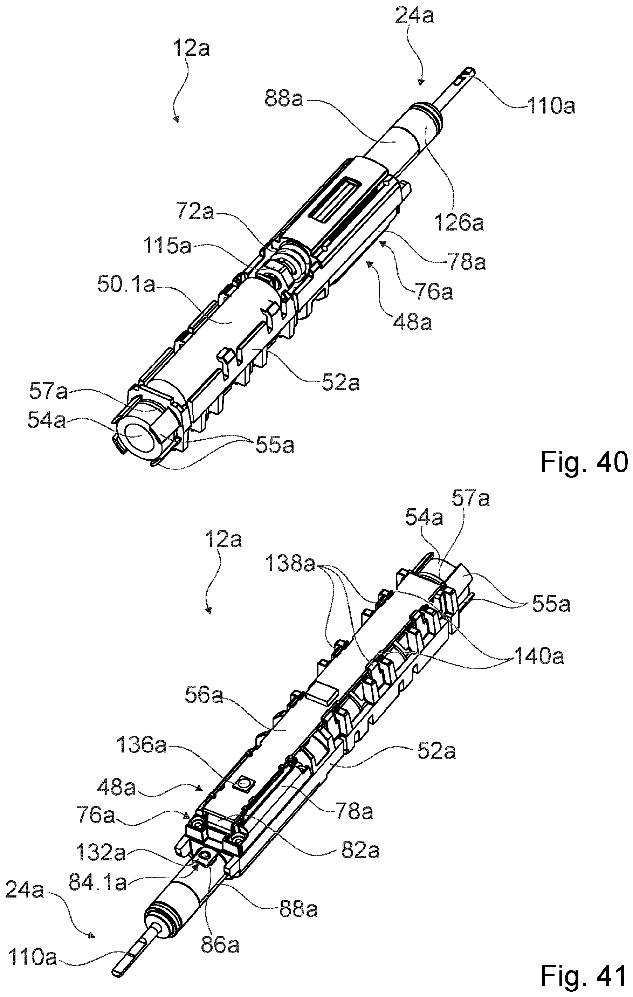

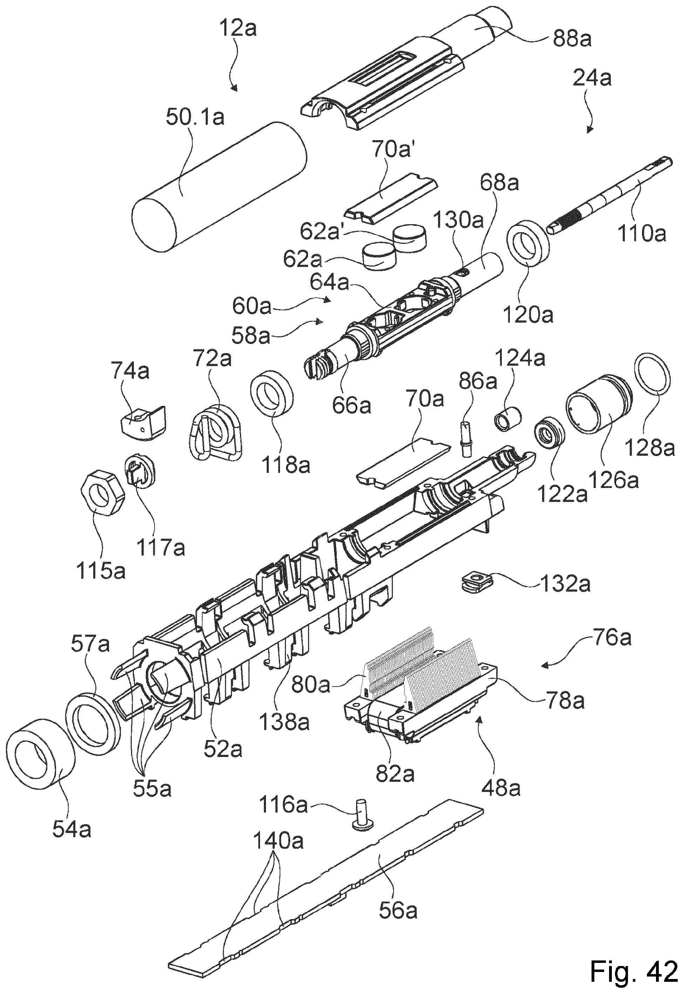

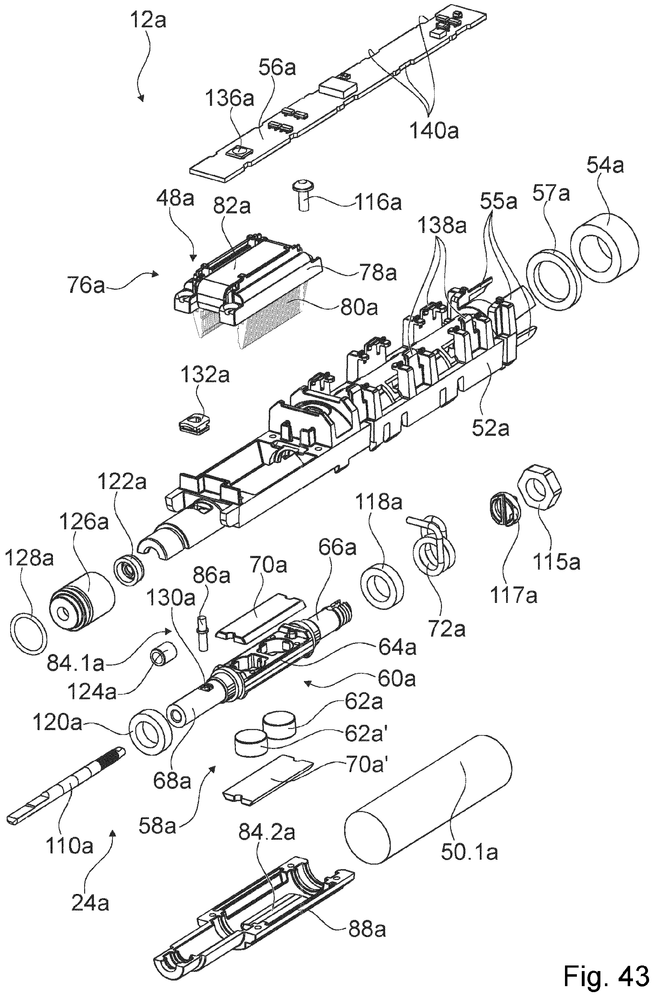

Im Folgenden wird auf die Figuren 40 bis 44 Bezug genommen, welche unterschiedliche Ansichten des Zahnbürstenhandteils 12a zeigen, wobei das Gehäuse 46a und der Deckel 113a jeweils ausgeblendet sind. Aufgrund der unterschiedlichen Ansichten sind einige Elemente nicht in sämtlichen Figuren dargestellt und entsprechend nicht in sämtlichen Figuren mit Bezugszeichen versehen.

Ferner weist das Zahnbürstenhandteil 12a eine in dem Gehäuse 46a angeordnete, feste Rahmeneinheit 52a auf. Die Rahmeneinheit 52a ist in einem montierten Zustand in das Gehäuse 46a eingeschoben. Die Rahmeneinheit 52a ist einstückig ausgebildet. Die Rahmeneinheit 52a erstreckt sich axial über einen Großteil des Gehäuses 46a. Die Rahmeneinheit 52a ist von einem Kunststoffrahmen gebildet. Die Rahmeneinheit 52a besteht aus Kunststoff, vorzugsweise einem Polypropylen. Grundsätzlich wäre jedoch auch eine andere, einem Fachmann als sinnvoll erscheinende Ausgestaltung der Rahmeneinheit 52a denkbar. Die Rahmeneinheit 52a weist ferner verschiedene aneinandergereihte Geometrien für die Aufnahme von unterschiedlichen Bauteilen des Innenlebens des Zahnbürstenhandteils 12a auf. Ferner weist die Rahmeneinheit 52a Durchbrüche und Schlitze für Kabel und zur Gewichtsreduktion auf.

Des Weiteren weist das Zahnbürstenhandteil 12a eine in dem Gehäuse 46a aufgenommene Antriebseinheit 48a zu einem Antrieb der Schnittstelle 24a auf. Die Antriebseinheit 48a ist zu einem Antrieb der Achse 110a der Schnittstelle 24a vorgesehen. Die Antriebseinheit 48a ist von einem Motor gebildet. Die Antriebseinheit 48a ist von einem Schwingankermotor gebildet. Die Rahmeneinheit 52a nimmt die Antriebseinheit 48a zumindest teilweise auf. Die Rahmeneinheit 52a nimmt die Antriebseinheit 48a vollständig auf. Die Antriebseinheit 48a ist direkt in der Rahmeneinheit 52a montiert. Es existiert insbesondere keine eigentliche separate Motorenbaugruppe. Die Antriebseinheit 48a weist einen Rotor 58a auf. Der Rotor 58a ist zu einer Durchführung einer oszillierenden Bewegung vorgesehen. Der Rotor 58a weist ein einstückig ausgeführtes Käfigelement 60a auf. Das Käfigelement 60a ist zu einer Aufnahme von zumindest einem Magneten 62a, 62a' vorgesehen. Das Käfigelement 60a ist zu einer Aufnahme von zwei Magneten 62a, 62a' vorgesehen. Die Magneten 62a, 62a' sind jeweils von Permanentmagneten gebildet. Das Käfigelement 60a weist zu einer Aufnahme der Magneten 62a, 62a' jeweils einen Aufnahmebereich auf. Ferner weist das Käfigelement 60a einen den zumindest einen Aufnahmebereich umfassenden Grundkörper 64a und auf beiden Seiten des Grundkörpers 64a angeordnete Achsfortsätze 66a, 68a auf, die eine Rotationsachse des Rotors 58a ausbilden. Die Achsfortsätze 66a, 68a sind jeweils auf gegenüberliegenden Seiten des Grundkörpers 64a angeordnet. Ein erster Achsfortsatz 66a ist auf einer der Schnittstelle 24a abgewandten Seite des Grundkörpers 64a angeordnet. Ein zweiter Achsfortsatz 68a ist auf einer der Schnittstelle 24a zugewandten Seite des Grundkörpers 64a angeordnet. Der zweite Achsfortsatz 68a ist direkt mit der Schnittstelle gekoppelt. Der zweite Achsfortsatz 68a ist zu einer drehfesten Aufnahme der Achse 110a der Schnittstelle 24a vorgesehen. Eine Aufnahme der Achse 110a kann dabei beispielsweise über einen Presssitz, durch Verkleben oder durch Verschweißen erreicht werden. Ferner weist der Rotor 58a zumindest eine Abdeckung 70a, 70a' auf, welche zu einer Verschließung der Aufnahmebereiche des Käfigelements 60a vorgesehen ist. Der Rotor 58a weist zumindest zwei Abdeckungen 70a, 70a' auf, welche jeweils zu einer Verschließung einer Seite der Aufnahmebereiche des Käfigelements 60a vorgesehen sind und insbesondere gleichzeitig auch dazu dienen, das Magnetfeld zu lenken. Die Aufnahmebereiche sind jeweils zu zwei gegenüberliegenden Seiten geöffnet und werden nach einem Einsetzen der Magnete 62a, 26a' mittels der Abdeckungen 70a, 70a' verschlossen. Die Abdeckungen 70a, 70a' sind jeweils an den Grundkörper 64a des Käfigelements 60a angeschraubt, angeklebt oder verschraubt. Bei einer Montage wird vorzugsweise zuerst die erste Abdeckung 70a mit dem Grundkörper 64a verbunden, anschließend die Magnete 62a, 62a' eingesetzt und darauffolgend die zweite Abdeckung 70a' mit dem Grundkörper 64a verbunden. Anschließend erfolgt die Montage von Lagern 118a, 120a zur Lagerung des Rotors 58a. Der Rotor 58a ist über seine Lager 118a, 120a in einem Aufnahmebereich der Rahmeneinheit 52a aufgenommen. Der Aufnahmebereich für den Rotor 58a ist zu zwei gegenüberliegenden Seiten hin geöffnet. Die Abdeckungen 70a, 70aʺʺ sind dazu vorgesehen, die Magnete 62a, 62aʺʺ zu überdecken und ein Magnetfeld der Magnete 62a, 62aʺʺ zu verteilen.

Des Weiteren weist die Antriebseinheit 48a eine Rückstellfeder 72a auf. Die Rückstellfeder 72a ist von einer Schraubenfeder gebildet. Es wäre jedoch auch eine andere, einem Fachmann als sinnvoll erscheinende Ausgestaltung der Rückstellfeder denkbar, wie beispielsweise als Spiralfeder oder Blattfeder. Die Rückstellfeder 72a ist mit einem ersten Ende drehfest mit dem ersten Achsfortsatz 66a des Rotors 58a gekoppelt. Die Rückstellfeder 72a greift dazu mit einem ersten Ende in eine radial durch eine Drehachse des Rotors 58a verlaufende Nut des ersten Achsfortsatzes 66a des Käfigelements 60a ein. Das erste Ende der Rückstellfeder 72a wird ferner mittels einer auf den ersten Achsfortsatz 66a aufgeschraubten Mutter 115a und einem mit ihr zusammenwirkenden Klemmring 117a an dem ersten Achsfortsatz 66a fixiert. Der Klemmring 117a dient dazu, die Kraft für die Fixierung durch die Mutter 115a optimal auf die Rückstellfeder 72a zu verteilen. Ferner ist die Rückstellfeder 72a mit einem zweiten Ende über ein Fixierelement 74a variabel drehfest an der Rahmeneinheit 52a fixiert. Die Rückstellfeder 72a ist variabel drehfest hinsichtlich einer Drehlage an der Rahmeneinheit 52a fixiert ist. Die Rückstellfeder 72a ist mittels des Fixierelements 74a in verschiedenen Drehlagen relativ zu der Rahmeneinheit 52a drehfest an der Rahmeneinheit 52a fixierbar ausgeführt. Mittels des Fixierelements 74a kann eine gesamte Drehlage der Rückstellfeder 72a relativ zu der Rahmeneinheit 52a eingestellt werden, um Toleranzen in der Fertigung der Rückstellfeder 72a aufzufangen. Es kann indirekt eine Ausgangslage des Rotors 58a relativ zu der Rahmeneinheit 52a eingestellt werden. Das Fixierelement 74a wird dazu das zweite Ende der Rückstellfeder 72a aufnehmend über eine Schraube 116a, welche sich durch die Rahmeneinheit 52a in das Fixierelement 74a erstreckt, gegen die Rahmeneinheit 52a fixiert. Das zweite Ende der Rückstellfeder 72a ist dabei in einer Ausnehmung des Fixierelements 74a aufgenommen. Die Schraube 116a ist dabei durch ein Langloch der Rahmeneinheit 52a geführt, sodass das Fixierelement 74a in verschiedenen Lagen relativ zu der Rahmeneinheit 52a an der Rahmeneinheit 52a fixiert werden kann. Das zweite Ende der Rückstellfeder 72a wird dadurch in einer aktuellen Position gehalten. Das zweite Ende der Rückstellfeder 72a kann dabei insbesondere in verschiedenen Positionen relativ zur Rahmeneinheit 52a fixiert werden. Bei einer Montage kann dabei das Fixierelement 74a mit der Rückstellfeder 52a vormontiert werden, wobei die Schraube 116a nicht angezogen wird. Anschließend kann die Achse 110a bzw. der Rotor 58a ausgerichtet und darauffolgend die Schraube 116a angezogen werden. Die Rückstellfeder 72a ist insbesondere zu einer Durchführung einer Verdrehung von 2° bis 10° vorzugsweise von 3° bis 7° vorgesehen.

Alternativ kann die Schraube 116a statt durch ein Langloch durch ein einfaches Sackloch geführt werden. Dadurch geht die Einstellbarkeit verloren, sodass keine Ausrichtung möglich ist. Die Rückstellfeder 72a kann aber dennoch positioniert und fixiert werden.

Zudem weist die Antriebseinheit 48a einen Stator 76a auf. Der Stator 76a umfasst einen einstückig ausgeführten Träger 78a, ein in den Träger 78a eingesetztes Blechpaket 80a und eine das Blechpaket 80a umgreifende Spule 82a. Der Stator 76a umfasst den einstückig ausgeführten Träger 78a aus einer Hartkomponente, das in den Träger 78a eingesetzte Blechpaket 80a, die das Blechpaket 80a umgreifende Spule 82a sowie eine zwischen der Spule 82a und dem Blechpaket 80a angeordnete Leitblechabdeckung. Der Stator 76a ist als ein Modul ausgebildet. Der Träger 78a ist von einem Kunststoffträger gebildet. Der Träger 78a ist von einem im Wesentlichen quaderförmigen Träger gebildet welcher auf einer ersten Seite eine quaderförmige Ausnehmung zu einer Aufnahme des Blechpakets 80a aufweist. Das Blechpaket 80a weist einen U-förmigen Querschnitt auf, wobei die freien Enden des Blechpakets 80a jeweils von dem Träger wegweisen. Das Blechpaket 80a besteht aus einer Vielzahl von dicht an dicht gepackten Leitblechen. Die Leitbleche sind insbesondere in den Trägern 78a eingeklebt, eingepresst, eingerastet oder sonstwie verbunden. Ferner weist der Träger 78a auf einer Rückseite der Ausnehmungen eine Führungsnut zu einer Aufnahme der Spule 82a auf. Die Spule 82a umschließt den Träger 78a und das Blechpaket 80a. Die Spule 82a ist um das Blechpaket 80a und den Träger 78a gewickelt. Die Spule 82a ist in Längsrichtung orientiert. Die Spule 82a und das Blechpaket 80a sind kontaktlos ausgeführt. Zu einer Isolierung der Spule 82a gegenüber dem Blechpaket 80a auf einer dem Träger 78a abgewandten Seite weist der Stator 76a ein nicht weiter sichtbares Isolationsplättchen auf, welches zwischen der Spule 82a und dem Blechpaket 80a angeordnet ist. Das Isolationsplättchen ist von einer Leitblechabdeckung gebildet. Das Isolationsplättchen besteht aus Kunststoff. Eine Montage der Leitblechabdeckung erfolgt mittels Einrasten, Kleben oder Ähnlichem. Das Isolationsplättchen schützt den Draht der Spule 82a vor den Kanten des Blechpakets 80a und verhindert einen Kurzschluss zwischen der Spule 82a und dem Blechpaket 80a. Der Träger 78a der Antriebseinheit 48a ist direkt mit der Rahmeneinheit 52a verbunden. Der Träger 78a ist mit der Rahmeneinheit 52a verschraubt. Grundsätzlich wäre jedoch auch eine andere, einem Fachmann als sinnvoll erscheinende Verbindung denkbar. Der Träger 78a deckt den Rotor 58a der Antriebseinheit 48a von einer Seite ab. Der Träger 78a verdeckt eine erste geöffnete Seite des Aufnahmebereichs der Rahmeneinheit 52a für den Rotor 58a. Ferner ragt das Blechpaket 80a teilweise in den Aufnahmebereich des Rotors 58a auf. Das Blechpaket 80a umgreift den Rotor 58a in einem montierten Zustand zumindest teilweise.

Ferner weist das elektrische Zahnbürstenhandteil 12a eine Rotorabdeckung 88a. Die Rotorabdeckung 88a deckt den Rotor 58a der Antriebseinheit 48a von einer dem Träger 78a gegenüberliegenden Seite ab. Die Rotorabdeckung 88a verdeckt eine zweite geöffnete Seite des Aufnahmebereichs der Rahmeneinheit 52a für den Rotor 58a. Der Rotor 58a ist in einem montierten Zustand direkt von dem Stator 76a, der Rahmeneinheit 52a und der Rotorabdeckung 88a umgeben. Die Rotorabdeckung 88a ist von einem Kunststoffteil gebildet. Die Rotorabdeckung 88a ist fest mit der Rahmeneinheit 52a verbunden. Die Rotorabdeckung 88a ist gegenüber dem Träger 78a mit der Rahmeneinheit 52a verbunden. Die Rotorabdeckung 88a ist mit der Rahmeneinheit 52a verschraubt. Grundsätzlich wäre jedoch auch eine andere, einem Fachmann als sinnvoll erscheinende Art der Verbindung denkbar. Die Rotorabdeckung 88a ist zusammen mit der Rahmeneinheit 52a zu einer Lagerung und Fixierung des Rotors 58a der Antriebseinheit 48a vorgesehen. Die Rotorabdeckung 88a und die Rahmeneinheit 52a bilden jeweils zwei halbkreisförmige Achsaufnahmen zu einer Aufnahme des Rotors 58a aus. Die halbkreisförmigen Achsaufnahmen sind jeweils von korrespondierenden Achsaufnahmen gebildet, welche gemeinsam eine vollständige Achsaufnahme ausbilden.

Die Achsaufnahmen sind jeweils zu einer Aufnahme der beiden Achsfortsätze 66a, 68a des Rotors 58a über jeweils ein Lager 118a, 120a vorgesehen. In den Achsaufnahmen sind dazu die Lager 118a, 120a aufgenommen, welche wiederum zu einer Lagerung der Achsfortsätze 66a, 68a des Rotors 58a gegenüber der Rahmeneinheit 52a vorgesehen sind. Es sind verschiedene, einem Fachmann als sinnvoll erscheinende Ausgestaltungen der Lager 118a, 120a denkbar. Der Rotor 58a ist zwischen der Rahmeneinheit 52a und der Rotorabdeckung 88a gelagert. Die Rotorabdeckung 88a ist zusammen mit der Rahmeneinheit 52a zudem zu einer Lagerung und Abdichtung der Achse 110a der Schnittstelle 24a vorgesehen. Die Rotorabdeckung 88a und die Rahmeneinheit 52a bilden dazu jeweils eine halbkreisförmige Achsaufnahme zu einer Aufnahme eines Dichtrings 122a sowie eines Lagers 124a für die Achse 110a aus. Die Achse 110a ist zwischen der Rotorabdeckung 88a und der Rahmeneinheit 52a gelagert. Es sind verschiedene, einem Fachmann als sinnvoll erscheinende Ausgestaltungen des Lagers 124a denkbar. Beispielsweise wäre denkbar, dass das Lager 124a jeweils von einem Gleitlager aus Kunststoff oder dem Material Iglidur gebildet ist. Die Rotorabdeckung 88a erstreckt sich daher axial von der Antriebseinheit 48a bis zu einem Achsaustritt der Schnittstelle 24a aus dem Gehäuse 46a.

Des Weiteren weist das elektrische Zahnbürstenhandteil 12a eine Abdeckkappe 126a auf. Die Abdeckkappe 126a ist dazu vorgesehen, über ein achsseitiges Ende der Rotorabdeckung 88a und der Rahmeneinheit 52a geschoben zu werden. Die Abdeckkappe 126a umgreift in einem montierten Zustand jeweils das achsseitige Ende der Rotorabdeckung 88a und der Rahmeneinheit 52a. Die Abdeckkappe 126a dient zu einer weiteren Verbindung und Zentrierung der Rotorabdeckung 88a und der Rahmeneinheit 52a zueinander. Des Weiteren dient die Abdeckkappe 126a zu einer Achsführung der Achse 110a der Schnittstelle 24a. Die Achse 110a ist dazu durch die Abdeckkappe 126a hindurch geführt. Ferner dient die Abdeckkappe 126a zu einer Abdichtung eines Gehäuseinneren gegenüber der Schnittstelle 24a. Die Abdeckkappe 126a dient zu einer Abdichtung zwischen dem Gehäuse 46a und der Rahmeneinheit 52a. Die Abdeckkappe 126a umfasst dazu einen Dichtring 128a.

Ferner weist das elektrische Zahnbürstenhandteil zumindest ein Anschlagselement 84.1a, 84.2a auf. In dem dargestellten Ausführungsbeispiel sind beispielhaft zwei Anschlagselemente 84.1a, 84.2a offenbart, wobei grundsätzlich auch lediglich eines der beiden Anschlagselemente 84.1a, 84.2a vorgesehen sein könnte. Die Anschlagselemente 84.1a, 84.2a sind dazu vorgesehen, eine Verdrehung des Rotors 58a der Antriebseinheit 48a aus einer Ausgangslage heraus zu begrenzen. Die Anschlagselemente 84.1a, 84.2a bilden jeweils einen Endanschlag des Rotors 58a bei einer oszillierenden Antriebsbewegung aus. Die Anschlagselemente 84.1a, 84.2a dienen insbesondere zu einer Vermeidung einer Überdehnung der Rückstellfeder 72a. Ein erstes Anschlagselement 84.1a ist von einem fest mit dem Rotor 58a der Antriebseinheit 48a verbundenen Stift 86a gebildet. Der Stift 86a ist radial in eine Öffnung 130a des Rotors 58a eingesteckt. Der Stift 86a ist radial in eine Öffnung 130a des zweiten Achsfortsatzes 68a eingesteckt. Der Stift 86a ist positionsfest an dem Rotor 58a angeordnet und ragt teilweise radial aus dem Rotor 58a. Ferner ist der Stift 58a mit einem Ende elastisch an der Rahmeneinheit 52a gelagert. Der Stift 58a ist mit einem freien Ende elastisch an der Rahmeneinheit 52a gelagert. Der Stift 58a ist mit einem von dem Rotor 58a angewandten Ende über eine elastische Muffe 132a in einer Öffnung 131a der Rahmeneinheit 52a gelagert. Die Muffe 132a ist beispielhaft von einer Silikonmuffe gebildet. Grundsätzlich wäre jedoch auch eine andere, einem Fachmann als sinnvoll erscheinende Ausgestaltung denkbar. Die Anschlagspositionen bzw. ein maximaler Winkel wird dabei über die Größe der Öffnung 131a in der Rahmeneinheit 52a definiert.

Ein zweites Anschlagselement 84.2a ist einstückig mit der Rotorabdeckung 88a ausgeführt. Das zweite Anschlagselement 84.2a bildet einen einstückig mit der Rotorabdeckung 88a ausgebildeten Fortsatz aus, welcher dem Rotor 58a zugewandt ist. Die Form des zweiten Anschlagselements 84.2a ist dabei an die Endlagen des Rotors 58a angepasst. Das zweite Anschlagselement 84.2a dient als Anschlag für den Grundkörper 64a des Käfigelements 60a und/oder für die Abdeckungen 70a, 70a' des Rotors 58a. Das zweite Anschlagselement 84.2a ist von einer Ausformung in der Rotorabdeckung 88a gebildet. Grundsätzlich wäre jedoch auch denkbar, dass das zweite Anschlagselement 84.2a von einem separaten Bauteil gebildet ist, welches an der Rotorabdeckung 88a befestigt ist.

Die Anschlagselemente 84.1a, 84.2a und die entsprechenden begrenzenden Gegenelemente, also insbesondere die Öffnungen 130a ,131 a und die Abdeckung 70a', sind so gewählt/geformt, dass eine Bewegung aus einer Nullstellung pro Seite nur in einem Rahmen von 3° bis 12° vorzugsweise von 4° bis 8° möglich ist.

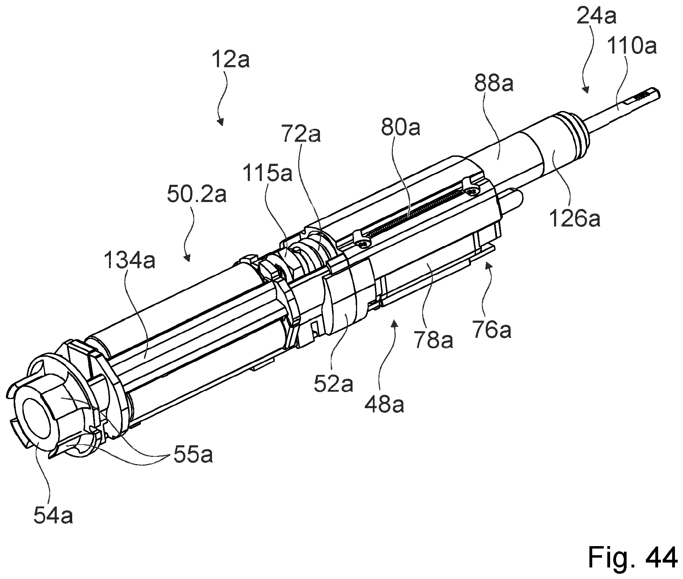

Des Weiteren weist das Zahnbürstenhandteil 12a einen in dem Gehäuse 46a aufgenommenen Energiespeicher 50.1a; 50.2a zu einer Versorgung der Antriebseinheit 48a mit Energie auf. Die Rahmeneinheit 52a nimmt den Energiespeicher 50.1a; 50.2a auf. Der Energiespeicher 50.1a; 50.2a ist auf einer der Schnittstelle 24a abgewandten Seite der Antriebseinheit 48a angeordnet. Der Energiespeicher 50.1a; 50.2a wird radial durch seitliche Haltearme der Rahmeneinheit 52a verklemmt. Ferner wird eine Längsverschiebung des Energiespeichers 50.1a; 50.2a durch den kammerartigen Aufbau der Rahmeneinheit 52a vermieden. Der Energiespeicher 50.1a; 50.2a ist im Wesentlichen koaxial zu der Antriebseinheit 48a angeordnet. Der Energiespeicher 50.1a; 50.2a ist von einem Akkumulator, insbesondere einem NiMh-Akkumulator und/oder einem Li-lon-Akkumulator, gebildet. Grundsätzlich wäre jedoch auch eine andere, einem Fachmann als sinnvoll erscheinende Ausgestaltung des Energiespeichers 50.1a; 50.2a denkbar, wie beispielsweise als Batterie. Es sind beispielhaft zwei verschiedene Energiespeicher 50.1a; 50.2a vorgesehen, welche zu dem Zahnbürstenhandteil 12a verwendet werden. Ein erster vorgeschlagener Energiespeicher 50.1a, wie er in den Figuren 40, 42 und 43 dargestellt ist, ist von einer einzelnen Energiespeicherzelle gebildet. Der erste vorgeschlagene Energiespeicher 50.1a ist von einer AA-Energiespeicherzelle gebildet. Ein zweiter vorgeschlagener Energiespeicher 50.2a, wie er in den Figur 44 dargestellt ist, ist von drei Energiespeicherzellen gebildet, die mittels eines Rahmens 134a des Energiespeichers 50.2a verbunden sind. Die Rahmeneinheit 52a ist, mit leichten Anpassungen, zu einer Aufnahme beider Energiespeicher 50.1a; 50.2a geeignet. Die Rahmeneinheit 52a ist sowohl zu einer Aufnahme einer einzelnen AA-Energiespeicherzelle, als auch zu einer Aufnahme von drei AAA-Energiespeicherzellen in dem Rahmen 134a vorgesehen. Der Rahmen 134a ist dazu vorgesehen, die drei Energiespeicherzellen in Serie zu verschalten. Die Serien-Schaltung wird durch Bleche erreicht, welche die Kontaktstellen zu den Energiespeicherzellen darstellen. Eine axiale Erstreckung des Rahmens 134a entspricht einer axialen Erstreckung der einzelnen AA-Energiespeicherzellen.

Das elektrische Zahnbürstenhandteil 12a weist ferner eine Ladespule 54a zu einem Aufladen des Energiespeichers 50.1a; 50.2a auf. Grundsätzlich wäre jedoch auch eine Aufladung des Energiespeichers 50.1a; 50.2a direkt mittels Steckverbindung denkbar. Die Ladespule 54a ist von einer Induktionsspule gebildet. Die Ladespule 54a ist in der festen Rahmeneinheit 52a aufgenommen. Die Rahmeneinheit 52a weist einen Aufnahmebereich zu einer positionsfesten Aufnahme der Ladespule 54a auf. Die Ladespule 54a wird von der Rahmeneinheit 52a von außen gehalten und geklemmt. Dazu weist die Rahmeneinheit 52a zumindest zwei bis fünf, vorzugsweise zumindest drei bis vier, Haltearme 55a auf, die an einen Grundkörper der Rahmeneinheit 52a angeformt sind und die Position der Ladespule 54a sowohl radial als auch axial sichern. Vorzugsweise weist die Rahmeneinheit 52a beispielhaft genau vier Haltearme auf. Grundsätzlich ist jedoch auch eine andere, insbesondere auch über fünf hinausgehende, einem Fachmann als sinnvoll erscheinende Anzahl von Halteelementen denkbar. Eine Montage der Ladespule 54a erfolgt insbesondere entlang der Längsachse. Die Ladespule 54a ist auf einer der Antriebseinheit 48a abgewandten Seite des Energiespeichers 50.1a; 50.2a angeordnet. Die Ladespule 54a ist im Wesentlichen koaxial zu dem Energiespeicher 50.1a; 50.2a und der Antriebseinheit 48a angeordnet. Der Deckel 113a greift ferner in einem montierten Zustand in die Ladespule 54a ein, um zu ermöglichen, dass ein Ferritkern eines Ladegeräts in der Spule platziert werden kann. Die Ladespule 54a weist insbesondere einen Innendurchmesser von 6 mm bis 14 mm, vorzugsweise von 8 mm bis 15 mm, und einen Außendurchmesser von 12 mm bis 19mm, vorzugsweise von 14 mm bis 17 mm, auf. Ferner weist die Ladespule 54a insbesondere eine Höhe von 4 mm bis 15 mm, vorzugsweise von 5 mm bis 10 mm, auf.

Ferner weist das elektrische Zahnbürstenhandteil 12a eine Leiterplatte 56a auf. Die Leiterplatte 56a ist zu einer Steuerung der Antriebseinheit 48a vorgesehen. Die Leiterplatte 56a ist in einem Betrieb zu einer Sinus-Ansteuerung der Antriebseinheit 48a vorgesehen. Die Leiterplatte 56a ist dazu mit dem Energiespeicher 50.1a; 50.2a gekoppelt. Der Energiespeicher 50.1a; 50.2a ist mit Leitungen über die Leiterplatte 56a, auf welcher die Steuerung integriert ist, mit der eigentlichen Antriebseinheit 48a verbunden. Der Energiespeicher 50.1a; 50.2a ist mit der Spule 82a verbunden, welche um das Blechpaket 80a gewickelt ist, wobei die Spule 82a nicht direkt auf dem Blechpaket 80a aufliegt sondern einerseits am Träger 78a und andererseits an der Leitblechabdeckung aufliegt. In der Spule 82a wird ein Wechselstrom erzeugt, welcher dafür sorgt, dass sich an den freien Enden des Blechpakets 80a eine alternierende Polarisierung ausbildet. Im Rotor 58a sind die Magnete 62a, 62a' fest angeordnet und mittels der Abdeckungen 70a, 70a' montiert, die das von den Magneten 62a, 62a' ausgebildete Feld optimieren. Der Rotor 58a ist innerhalb des Blechpakets 80a drehbar gelagert. Durch die Polarisierung der freien Enden des Blechpakets 80a will sich der Rotor 58a mit den Magneten 62a, 26a' im Feld neu ausrichten, wodurch eine Bewegung entsteht. Werden die Enden des Blechpakets 80a umpolarisiert, so will sich der Rotor 58a in die andere Richtung ausrichten. Dadurch entsteht eine oszillierende Hin- und HerBewegung des Rotors 58a. Die Rückstellfeder 72a auf der Rotationsachse stellt die Rückführung des Rotors 58a in eine Nullposition sicher, des Weiteren sorgt sie für sanftere Bewegungsübergänge wenn die Polarisierung wechselt. Insgesamt ist die Rückstellfeder 72a notwendig, damit die Bewegungen überhaupt möglich sind, da die Kräfte durch die Polarisierung ansonsten so groß wären, dass keine Oszillation möglich wäre.

Was mittels der Leiterplatte 56a gesteuert wird, sind die Energie-Pulse die der Antriebseinheit 48a zugeführt werden. Diese Größen sind spezifisch auf den vorliegenden Antrieb bzw. das Produkt angepasst. Damit ein ruhiger Lauf der Antriebseinheit 48a erreicht wird, wird die Antriebseinheit 48a sinusförmig angesteuert und nicht mit Pulsen und Pausen.

Ferner ist die Leiterplatte 56a mit der Ladespule 54a gekoppelt. Die Leiterplatte 56a ist zu einer Steuerung eines Ladevorgangs des Energiespeichers 50.1a; 50.2a vorgesehen. Des Weiteren weist die Leiterplatte 56a ein sich durch den Grundkörper 112a des Gehäuses 46a hindurch betätigbares Betätigungselement 136a auf, welches zu einer Aktivierung und/oder Deaktivierung des Zahnbürstenhandteils 12a dient. Das Betätigungselement 136a ist dazu vorgesehen, durch die Umspritzung 114a des Gehäuses 46a hindurch betätigt zu werden. Ferner sind auf der Leiterplatte 56a weitere Elemente vorgesehen, wie insbesondere Leitungen, Widerstände, LED's und/oder eine Steuereinheit. Die Leiterplatte 56a ist ferner teilweise formschlüssig durch die Rahmeneinheit 52a aufgenommen und erstreckt sich über einen Großteil einer axialen Erstreckung der Rahmeneinheit 52a. Die Leiterplatte 56a erstreckt sich zumindest über den Energiespeicher 50.1a; 50.2a und die Antriebseinheit 48a des Zahnbürstenhandteils 12a. Zu einer formschlüssigen Aufnahme der Leiterplatte 56a weist die Rahmeneinheit 52a mehrere hakenförmige Formschlusselemente 138a auf, welche dazu vorgesehen sind, die Leiterplatte 56a in einem montierten Zustand teilweise zu übergreifen. Die Leiterplatte 56a weist für eine Montage an einer Außenkante zu den Formschlusselementen 138a korrespondierende Ausnehmungen 140a auf, über welche die Leiterplatte 56a zu einer Montage an den Formschlusselementen 138a vorbei in eine Endlage bewegt werden kann. Vorzugsweise wird die Leiterplatte 56a bei einer Montage zu einer Endlage versetzt auf die Rahmeneinheit 52a aufgesetzt, wobei die Leiterplatte 56a mittels der Ausnehmungen 140a an den Formschlusselementen 138a vorbeigeführt werden kann. Anschließend wird die Leiterplatte 56a unter die Formschlusselemente 138a geschoben und dadurch fixiert. Die Leiterplatte 56a weist dazu nicht weiter sichtbare separate kleine Aussparungen zum Einrasten in der Endposition auf. Zusätzlich dienen die Formschlusselemente 138a als Niederhalter, welche die Leiterplatte 56a kraftschlüssig halten. An einem unteren Ende der Leiterplatte 56a weist die Rahmeneinheit 52a zudem einen Anschlag mit Rampe auf, welcher zu einer exakten Positionierung der Leiterplatte 56a dient.

Toleranzen zwischen der Rahmeneinheit 52a und ihren Bauteilen und dem Gehäuse 46a müssen aufgefangen werden, damit einerseits das Betätigungselement 136a im montierten Zustand an der korrekten Position für die Betätigung durch das Gehäuse 46a hindurch ist und andererseits aber auch die Ladespule 54a optimal liegt, damit der induktive Ladevorgang einen optimalen Wirkungsgrad erreicht. Weiter müssen Toleranzen aufgefangen werden, damit die Rahmeneinheit 52a satt im Gehäuse 46a sitzt und im Betrieb keine Geräusche entstehen. Der Längenausgleich zum Auffangen von Toleranzen passiert erfindungsgemäß durch die Einlage eines komprimierbaren Längenausgleichselements 57a, beispielsweise eines komprimierbaren Kunststoffs, der erfindungsgemäß zwischen Ladespule 54a und Rahmeneinheit 52a angebracht ist. Weiter könnten aber auch elastische Elemente an der Rahmeneinheit 52a integriert sein, um den Längenausgleich sicherzustellen. Beispielsweise biegbare Elemente, die beim Montieren des Deckels 113a gespannt d.h. verbogen werden.

Insgesamt kann die Rahmeneinheit 52a in mehrere Zonen unterteilt werden. Die Rahmeneinheit 52a weist eine Spulenzone auf. Die Spulenzone bildet von unten her gesehen die erste Zone und dient zu einer direkten Aufnahme und Montage der Ladespule 54a. Ferner weist die Rahmeneinheit 52a eine Akkuzone auf. Die Akkuzone schließt direkt an die Spulenzone an und ist zu einer Aufnahme des Energiespeichers 50.1a; 50.2a vorgesehen. Des Weiteren weist die Rahmeneinheit 52a eine Federzone auf. Die Federzone schließt auf einer der Spulenzone abgewandten Seite direkt an die Akkuzone an und ist zu einer Aufnahme der Rückstellfeder 72a sowie des Fixierelements 74a vorgesehen. Zudem weist die Rahmeneinheit 52a eine Schwingankerzone auf. Die Schwingankerzone schließt auf einer der Spulenzone abgewandten Seite direkt an die Federzone an und ist zu einer Aufnahme der Antriebseinheit 48a vorgesehen. Die Rahmeneinheit 52a ist im Bereich der Schwingankerzone durchgängig geöffnet. Zudem weist die Rahmeneinheit 52a eine Achszone auf. Die Achszone schließt auf einer der Spulenzone abgewandten Seite direkt an die Schwingankerzone an und ist zu einer Aufnahme der Schnittstelle 24a bzw. der Achse 110a der Schnittstelle 24a vorgesehen. Des Weiteren weist die Rahmeneinheit 52a eine Print-Zone auf. Die Print-Zone ist auf einer Vorderseite der Rahmeneinheit angeordnet und ist zu einer Aufnahme der Leiterplatte 56a vorgesehen.

Eine Bestückung der Rahmeneinheit 52a erfolgt im Wesentlichen über eine Rückseite. Von vorne werden lediglich die Leiterplatte 56a und der Stator 76a montiert. Ferner werden entlang der Längsachse die Ladespule 54a und eine Verbindungskappe montiert. Die Antriebseinheit 48a und der Energiespeicher 50.1a; 50.2a werden von einer Rückseite der Rahmeneinheit 52a her montiert.

Bei einer Montage des elektrischen Zahnbürstenhandteils 12a wird erfindungsgemäß in einem ersten Schritt das gesamte Innenleben über die Rahmeneinheit 52a montiert und anschließend in einem zweiten Schritt in das Gehäuse 46a eingeschoben. Die Rahmeneinheit 52a wird dabei im Gehäuse 46a verklemmt. Die Rahmeneinheit 52a weist dazu Rastnasen auf, welche in Rastausnehmungen des Gehäuses 46a eingreifen. Darauffolgend wird in einem dritten Schritt der Deckel 113a an dem Gehäuse 46a fixiert und fixiert und verschließt damit das Innenleben. Der Deckel 113a kann sowohl mit dem Gehäuse 46a verschraubt als auch beispielsweise mittels eines Bajonettverschlusses verriegelt werden.

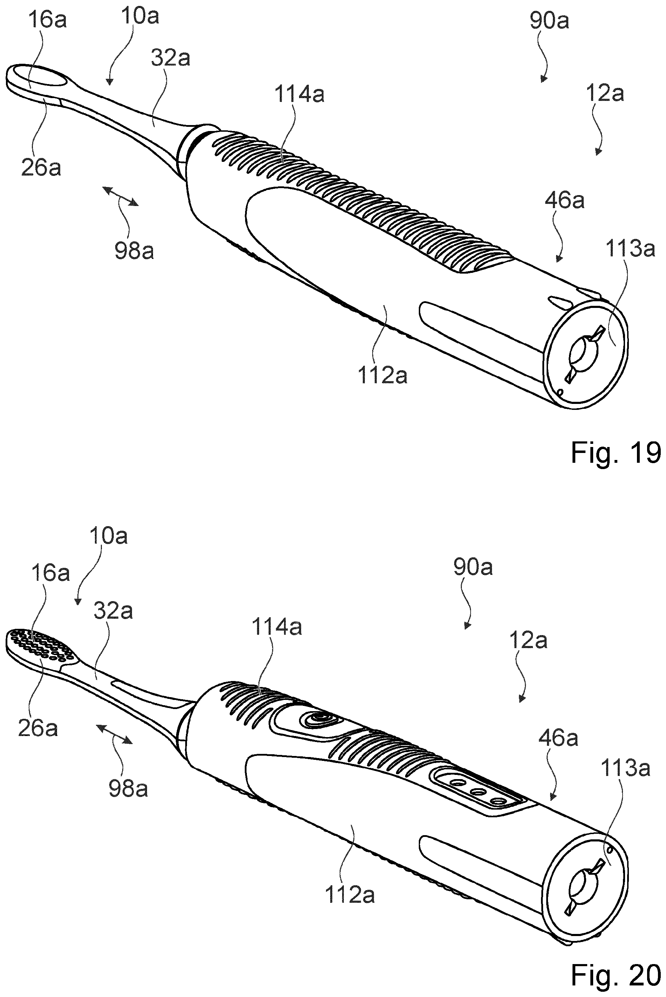

Die Figuren 19 bis 22 zeigen eine elektrische Zahnbürste 90a mit dem elektrischen Zahnbürstenhandteil 12a und mit der Aufsteckbürste 10a in einem aufgesteckten Zustand. Aufgrund der unterschiedlichen Ansichten sind einige Elemente nicht in sämtlichen Figuren dargestellt und entsprechend nicht in sämtlichen Figuren mit Bezugszeichen versehen. Bei einer Montage der Aufsteckbürste 10a auf das elektrische Zahnbürstenhandteil 12a wird die korrekte Montage durch die Form der Achse 110a sichergestellt. Beim Einführen weiß der Bediener, insbesondere durch die Borsten auf der Aufsteckbürste 10a und durch die Gestaltung des Zahnbürstenhandteils 12a, etwa wo vorne ist. Die Geometrie im Innern der Aufsteckbürste 10a führt durch die verschiedenen Stufungen und Verläufe der Schnittstellenaufnahme 20a und schlussendlich durch die Führung der beiden Abflachungen der Achse 110a vorne und hinten zu einer genauen und korrekten Montage. Als Anschlag dient bei der Montage ein freies Ende der Achse 110a.

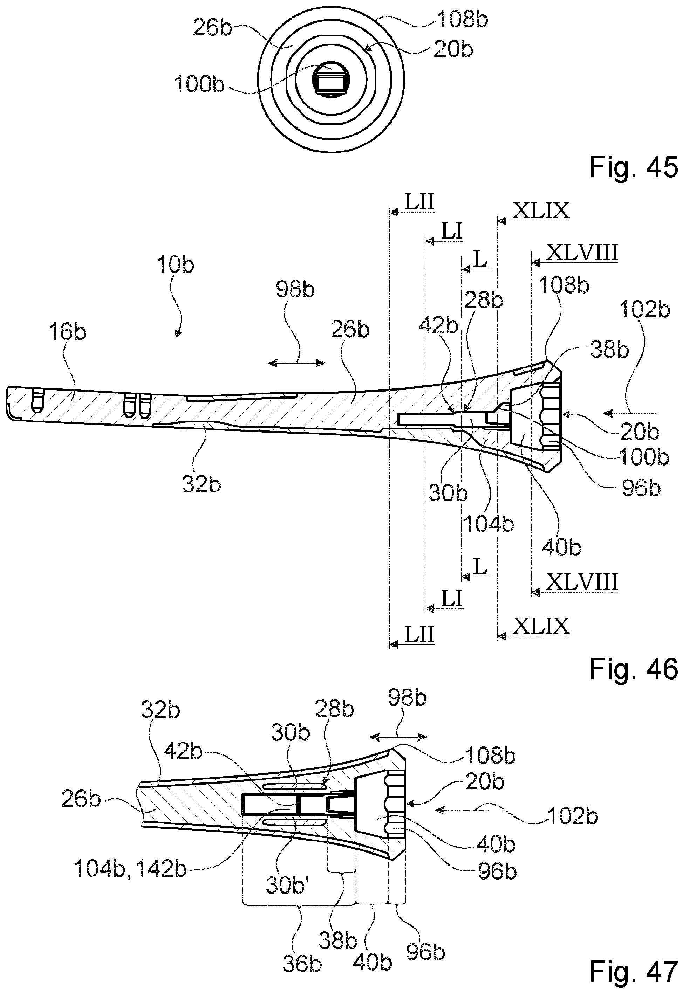

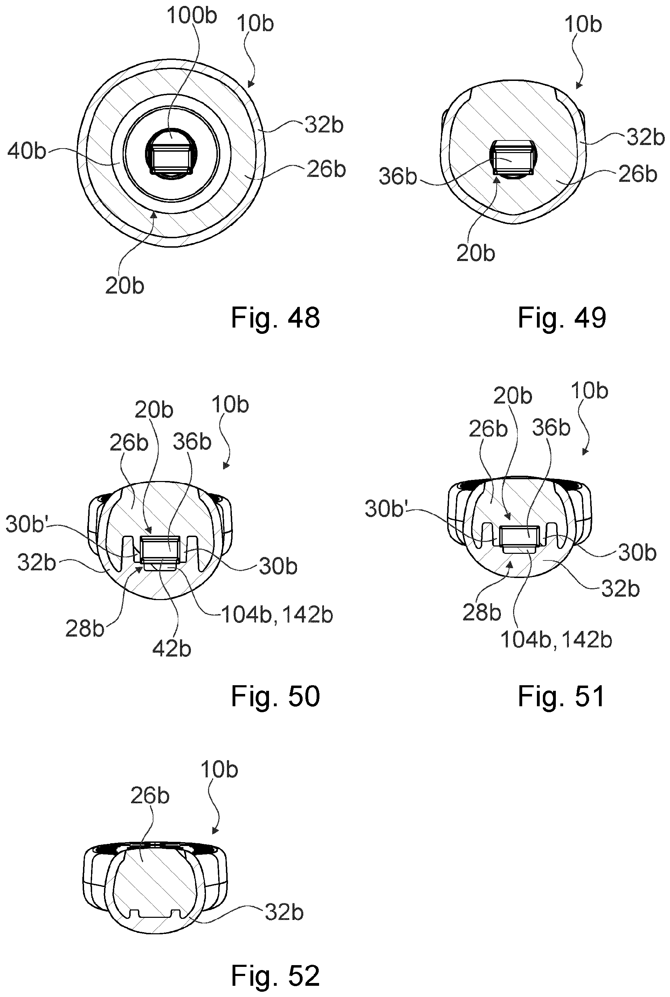

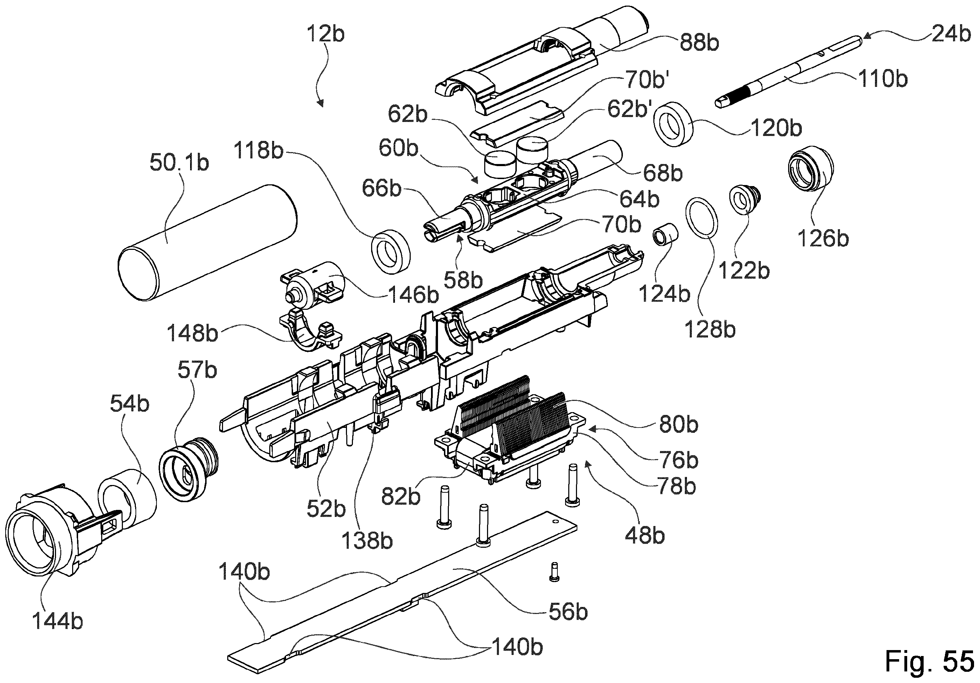

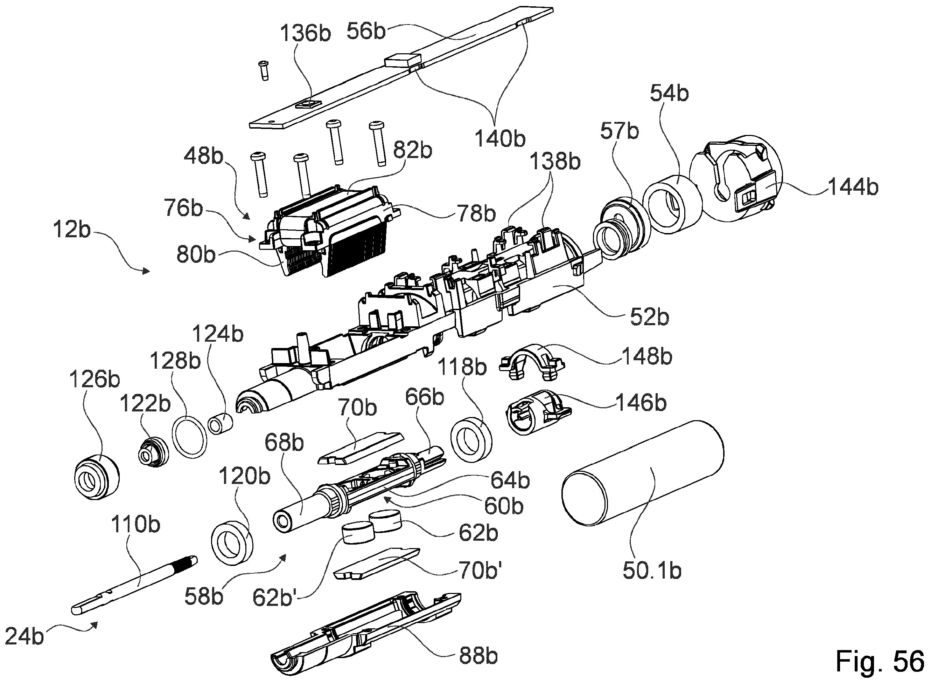

Zur weiteren Stabilisierung der Aufsteckbürste 10a auf dem Zahnbürstenhandteil 12a ist es möglich, den Hohlraum der Schnittstellenaufnahme 20a, im Bereich des Austritts der Achse 110a aus dem Handteilgehäuse, zu füllen. Dies kann beispielsweise durch die Ausformung eines Zapfens um die Achse 110a erfolgen, wobei dieser Zapfen als Fortsetzung der Abdeckkappe 126a gestaltet sein kann. Weiter ist es auch möglich den Hohlraum mit einem Teil zu füllen, welches über die Achse 110a gestülpt wird. Dabei ist es möglich, dass das Teil reversibel oder irreversibel auf der Achse aufgesteckt wird. Durch das Füllen des Hohlraums hat die Aufsteckbürste 10a einen Anschlag im Fall einer Belastung. Damit werden die Kräfte der Belastung im Gebrauch statt auf die Achse, auch auf das Gehäuse bzw. die Rahmeneinheit gelenkt, sodass die Antriebseinheit entlastet ist. In den Figuren 45 bis 59 ist ein weiteres Ausführungsbeispiel gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 44 verwiesen werden kann. Zur Unterscheidung der Ausführungsbeispiele ist der Buchstabe a in den Bezugszeichen des Ausführungsbeispiels in den Figuren 1 bis 44 durch den Buchstaben b in den Bezugszeichen des Ausführungsbeispiels der Figur 45 bis 59 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 59 verwiesen werden.

In den Figuren 45 bis 52 ist eine alternative Ausgestaltungsvariante einer Schnittstellenaufnahme 20b bzw. einer Klemmeinheit 28b einer Aufsteckbürste 10b gezeigt. Die Außenform der Aufsteckbürste 10b verändert sich optisch nicht, wenn diese überspitzt ist. Ein Grundkörper 26b der Aufsteckbürste 10b hat aber ein anderes Aussehen.

Die Klemmeinheit 28b weist eine zumindest teilweise freistehende Klemmwand 30b, 30b' auf, welche direkt an die Schnittstellenaufnahme 20b angrenzt. Die Klemmeinheit 28b weist zwei teilweise freistehende Klemmwände 30b, 30b' auf, welche auf gegenüberliegenden Seiten direkt an die Schnittstellenaufnahme 20b angrenzen. Die Klemmwände 30b, 30b' grenzen jeweils an eine Seite der Schnittstellenaufnahme 20b an. Der erste Teilaufnahmebereich 36b der Schnittstellenaufnahme 20b ist zu zwei gegenüberliegenden Seiten hin von den Klemmwänden 30b, 30b' begrenzt. Die Klemmwände 30b, 30b' sind gegenüber einem Rest des Grundkörpers 26b teilweise freistehend. Die Klemmwände 30b, 30b' sind über Schlitze und Durchbrüche zu der Schnittstellenaufnahme 20b, welche sich jeweils parallel zur Längsachse erstrecken, gegenüber einem Rest des Grundkörpers 26b teilweise freigestellt. Die Schlitze sind jeweils ausgehend von der Schnittstellenaufnahme 20b hinter den Klemmwände 30b, 30b' angeordnet, während die Durchbrüche neben den Klemmwänden 30b, 30b' angeordnet sind und in die Schnittstellenaufnahme 20b münden. Der Schlitz ist in der Ausführungsform so geformt, dass in einem ersten Teil die Klemmwände 30b, 30b' identisch zur ersten Ausführungsform geformt sind. Der Schlitz setzt sich dann in Richtung des Kopfabschnitts auslaufend fort, d.h. die Höhe der Wand bzw. die Tiefe des Schlitzes nimmt bis auf null ab. Die Gesamtlänge der Schlitze und der Durchbrüche beträgt 10.5 mm bis 14.5 mm, vorzugsweise 11 mm bis 13 mm. Die weiteren Maße bleiben wie bei der ersten Ausführungsform. Die Klemmwände 30b, 30b' sind dazu vorgesehen bei einem Aufstecken der Aufsteckbürste 10b auf ein Zahnbürstenhandteil 12b radial nach außen ausgelenkt zu werden. Die Klemmwände 30b, 30b' der Klemmeinheit 28b erstrecken sich axial in Einführrichtung 102b einer Schnittstelle 24b über die Verjüngung 42b des ersten Teilaufnahmebereichs 36b hinweg. Die Klemmwände 30b, 30b' der Klemmeinheit 28b sind axial in Einführrichtung 102b hinter einer Verjüngung 100b des zweiten Teilaufnahmebereichs 38b angeordnet. Eine Umspritzung 32b umgibt die Klemmwände 30b, 30b' jeweils in zumindest einer Ebene 34b zumindest zu einem wesentlichen Teil direkt. Die Umspritzung 32b umgibt die Klemmwände 30b, 30b' jeweils in radialer Richtung; auf einer der Schnittstellenaufnahme 20b abgewandten Seite. Die Klemmwände 30b, 30b' sind zu zwei Seiten hin von der Umspritzung 32b begrenzt. Die Umspritzung 32b ist, radial von der Schnittstellenaufnahme 20b aus betrachtet, hinter den Klemmwänden 30b, 30b'. Der Grundkörper 26b weist auf einer der Schnittstellenaufnahme 20b abgewandten Seite hinter den Klemmwänden 30b, 30b' jeweils eine zweistufige Ausnehmung auf, die gegen innen schmäler und gegen außen breiter wird. In einem Bereich der Durchbrüche des Grundkörpers 26b, die mittels der Umspritzung 32b ausgespritzt sind, grenzt die Umspritzung 32b direkt an die Schnittstellenaufnahme 20b an. Die Umspritzung 32b dient zu einer Abfederung einer elastischen Auslenkung der Klemmwände 30b, 30b'.Die Kontaktflächen der Klemmwände 30b, 30b' sind glatt gestaltet.

In dieser zweiten Ausführungsform ist zudem der teilweise freistehende Klemmsteg 104b als Klemmbrücke 142b ausgebildet. Die Klemmbrücke 142b weist sich dadurch aus, dass sie wie die Klemmwände 30b, 30b' elastisch ausgeformt ist. Die Klemmbrücke 142b ist elastisch ausgeformt. Dadurch kann sie zur Klemmkraft beitragen und zu einer erhöhten Abzugskraft führen. Wird der Klemmsteg 104b in radialer Richtung weniger dick ausgestaltet, wird er zu einer Klemmbrücke 142b, die nur vorne und hinten mit dem Körper des Grundkörpers 26b verbunden ist und ansonsten seitlich mit den Durchbrüchen freigestellt ist. Die Klemmbrücke 142b ist parallel zu den Klemmwänden 30b, 30b' ausgestaltet. Die Materialstärke der Klemmbrücke 142b ist im Bereich jener der Klemmwände 30b, 30b'.

Die Klemmbrücke142b ist axial auf Höhe der Klemmwände 30b, 30b' angeordnet. Die Klemmbrücke 142b begrenzt den ersten Teilaufnahmebereich 36b der Schnittstellenaufnahme 20b zu einer dritten Seite hin. Die Klemmbrücke 142b der Klemmeinheit 28b erstreckt sich axial in Einführrichtung 102b der Schnittstelle 24b über die Verjüngung 42b des ersten Teilaufnahmebereichs 36b hinweg. Die Umspritzung 32b umgibt die Klemmbrücke 142b in zumindest einer Ebene 34b zumindest zu einem wesentlichen Teil direkt. Die Umspritzung 32b umgibt die Klemmbrücke 142b in radialer Richtung auf einer der Schnittstellenaufnahme 20b abgewandten Seite.

Eine durch die Klemmwände 30b, 30b' und die Klemmbrücke 142b aufgebrachte Klemmkraft ist grundsätzlich abhängig vom Achsaufbau bzw. von den Geometrien einer Achse 110b und den Dimensionen der Achse 110b. Eine Klemmung findet nicht über eine punktuelle Berührung, sondern über eine flächige Berührung der Teile auf drei bzw. vier Seiten statt. Drei Seiten sind mit flexiblen Klemmelementen ausgestattet, während die vierte Seite ohne Flexibilität ausgestattet ist. Parallel zur seitlichen Klemmung mit den Klemmwänden 30b, 30b' entsteht so eine Klemmung mittels der Klemmbrücke 142b. Die angestrebte Klemmkraft der Klemmeinheit 28b liegt im Rahmen jener der ersten Ausführungsform.

Grundsätzlich wäre auch denkbar, dass die Freiräume um die Innengeometrie nicht mit Umspritzung 32b gefüllt sind. Dies könnte insbesondere eine Einkomponentenlösung darstellen, beispielsweise dass die Aufsteckbürste 10b nur aus einer Hartkomponente besteht und technische Geometrien, wie insbesondere die Klemmwände 30b, 30b' und Klemmbrücke 142b, nicht umspritzt sind und so frei stehen. Hierdurch könnte eine kostengünstige Aufsteckbürste 10b geschaffen werden. Ferner kann eine weitere Entlüftungsmöglichkeit beim Einführen der Achse 110b geschaffen werden.

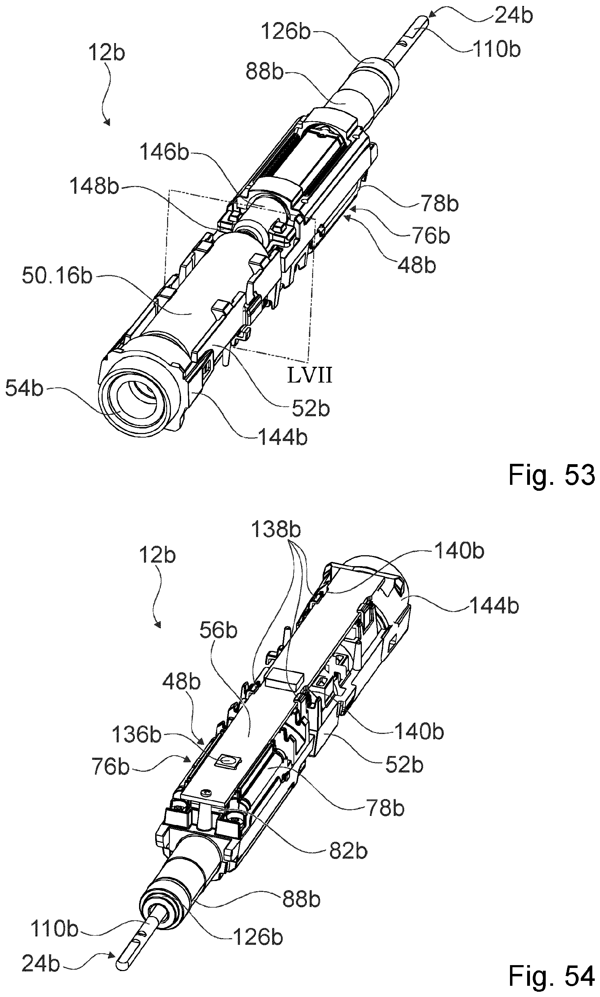

Im Folgenden wird auf die Figuren 53 bis 56, sowie die Figuren 57 bis 59 Bezug genommen, welche unterschiedliche Ansichten des Zahnbürstenhandteils 12b bzw. Ausschnitte des Zahnbürstenhandteils und seiner Teile zeigen, wobei ein Gehäuse 46b und ein Deckel 113b jeweils ausgeblendet sind. Dieses Zahnbürstenhandteil 12b ist eine Ausführungsform der Erfindung. Aufgrund der unterschiedlichen Ansichter sind einige Elemente nicht in sämtlichen Figuren dargestellt und entsprechend nicht in sämtlichen Figuren mit Bezugszeichen versehen.

Ferner weist das Zahnbürstenhandteil 12b eine in dem Gehäuse 46b angeordnete, feste Rahmeneinheit 52b und eine zusätzliche Rahmeneinheit 144b einer Ladespule 54b auf. Die Rahmeneinheit 52b mit montierter Rahmeneinheit 144b der Ladespule 54b ist in einem montierten Zustand in das Gehäuse 46b eingeschoben. Die Rahmeneinheit 52b ist einstückig ausgebildet, während die Rahmeneinheit 144b der Ladespule 54b an diese montiert ist. Die Rahmeneinheit 52b mit montierter Rahmeneinheit 144b der Ladespule 54b erstreckt sich axial über einen Großteil des Gehäuses 46b. Die Rahmeneinheit 52b und Rahmeneinheit 144b der Ladespule 54b ist von einem Kunststoffrahmen gebildet. Die Rahmeneinheit 52b und Rahmeneinheit 144b der Ladespule 54b besteht aus Kunststoff, vorzugsweise einem Polypropylen. Grundsätzlich wäre jedoch auch eine andere, einem Fachmann als sinnvoll erscheinende Ausgestaltung der Rahmeneinheit 52b und/oder Rahmeneinheit 144b der Ladespule 54b denkbar. Die Rahmeneinheit 52b mit montierter Rahmeneinheit 144b der Ladespule 54b weist ferner verschiedene aneinandergereihte Geometrien für die Aufnahme von unterschiedlichen Bauteilen des Innenlebens des Zahnbürstenhandteils 12b auf. Ferner weist die Rahmeneinheit 52b Durchbrüche und Schlitze für Kabel und zur Gewichtsreduktion auf.

Des Weiteren weist das Zahnbürstenhandteil 12b eine in dem Gehäuse 46b aufgenommene Antriebseinheit 48b zu einem Antrieb der Schnittstelle 24b auf. Die Antriebseinheit 48b ist zu einem Antrieb der Achse 110b der Schnittstelle 24b vorgesehen. Die Antriebseinheit 48b ist von einem Motor gebildet. Die Antriebseinheit 48b ist von einem Schwingankermotor gebildet. Die Rahmeneinheit 52b nimmt die Antriebseinheit 48b zumindest teilweise auf. Die Rahmeneinheit 52b nimmt die Antriebseinheit 48b vollständig auf. Die Antriebseinheit 48b ist direkt in der Rahmeneinheit 52b montiert. Es existiert insbesondere keine eigentliche separate Motorenbaugruppe. Die Antriebseinheit 48b weist einen Rotor 58b auf. Der Rotor 58b ist zu einer Durchführung einer oszillierenden Bewegung vorgesehen. Der Rotor 58b weist ein einstückig ausgeführtes Käfigelement 60b auf. Das Käfigelement 60b ist zu einer Aufnahme von zumindest einem Magneten 62b, 62b' vorgesehen. Das Käfigelement 60b ist zu einer Aufnahme von zwei Magneten 62b, 62b' vorgesehen. Die Magneten 62b, 62b' sind jeweils von Permanentmagneten gebildet. Das Käfigelement 60b weist zu einer Aufnahme der Magneten 62b, 62b' jeweils einen Aufnahmebereich auf. Ferner weist das Käfigelement 60b einen den zumindest einen Aufnahmebereich umfassenden Grundkörper 64b und auf beiden Seiten des Grundkörpers 64b angeordnete Achsfortsätze 66b, 68b auf, die eine Rotationsachse des Rotors 58b ausbilden. Die Achsfortsätze 66b, 68b sind jeweils auf gegenüberliegenden Seiten des Grundkörpers 64b angeordnet. Ein erster Achsfortsatz 66b ist auf einer der Schnittstelle 24b abgewandten Seite des Grundkörpers 64b angeordnet. Ein zweiter Achsfortsatz 68b ist auf einer der Schnittstelle 24b zugewandten Seite des Grundkörpers 64b angeordnet. Der zweite Achsfortsatz 68b ist direkt mit der Schnittstelle gekoppelt. Der zweite Achsfortsatz 68b ist zu einer drehfesten Aufnahme der Achse 110b der Schnittstelle 24b vorgesehen. Eine Aufnahme der Achse 110b kann dabei beispielsweise über einen Presssitz, durch Verkleben oder durch Verschweißen erreicht werden. Ferner weist der Rotor 58b zumindest eine Abdeckung 70b, 70b' auf, welche zu einer Verschließung der Aufnahmebereiche des Käfigelements 60b vorgesehen ist. Der Rotor 58b weist zumindest zwei Abdeckungen 70b, 70b' auf, welche jeweils zu einer Verschließung einer Seite der Aufnahmebereiche des Käfigelements 60b vorgesehen sind und insbesondere gleichzeitig auch dazu dienen, das Magnetfeld zu lenken. Die Aufnahmebereiche sind jeweils zu zwei gegenüberliegenden Seiten geöffnet und werden nach einem Einsetzen der Magnete 62b, 26b' mittels der Abdeckungen 70b, 70b' verschlossen. Die Abdeckungen 70b, 70b' sind jeweils an den Grundkörper 64b des Käfigelements 60b angeschraubt, angeklebt oder verschraubt oder wie vorgängig beschrieben durch ein Klemmen/Einklicken befestigt. Bei einer Montage wird vorzugsweise zuerst die erste Abdeckung 70b mit dem Grundkörper 64b verbunden, anschließend die Magnete 62b, 62b' eingesetzt und darauffolgend die zweite Abdeckung 70b' mit dem Grundkörper 64b verbunden. Anschließend erfolgt die Montage von Lagern 118b, 120b zur Lagerung des Rotors 58b. Der Rotor 58b ist über seine Lager 118b, 120b in einem Aufnahmebereich der Rahmeneinheit 52b aufgenommen. Der Aufnahmebereich für den Rotor 58b ist zu zwei gegenüberliegenden Seiten hin geöffnet. Die Abdeckungen 70b, 70b' sind dazu vorgesehen, die Magnete 62b, 62b' zu überdecken und ein Magnetfeld der Magnete 62b, 62b' zu verteilen.

Des Weiteren weist die Antriebseinheit 48b eine Rückstelleinheit auf. Die Rückstelleinheit ist zweiteilig aufgebaut. Die Rückstelleinheit ist zu einer Rückstellung eines Rotors 58b in eine Ausgangslage vorgesehen. Die Rückstelleinheit ist drehfest mit einem ersten Achsfortsatz 66b des Rotors 58b gekoppelt und stützt sich elastisch an der Rahmeneinheit 52b ab. Die Rückstelleinheit weist einen Wellenflügel 146b auf, welcher direkt axial an einem ersten Achsfortsatz 66b des Rotors 58b montiert ist. Ferner weist die Rückstelleinheit ein elastisches Feder- und Dämpfungselement 148b auf, welches zwischen dem Wellenflügel 146b und der Rahmeneinheit 52b angeordnet ist. Die Rückstelleinheit wird von dem Wellenflügel 146b und dem Feder- und Dämpfungselement 148b gebildet.

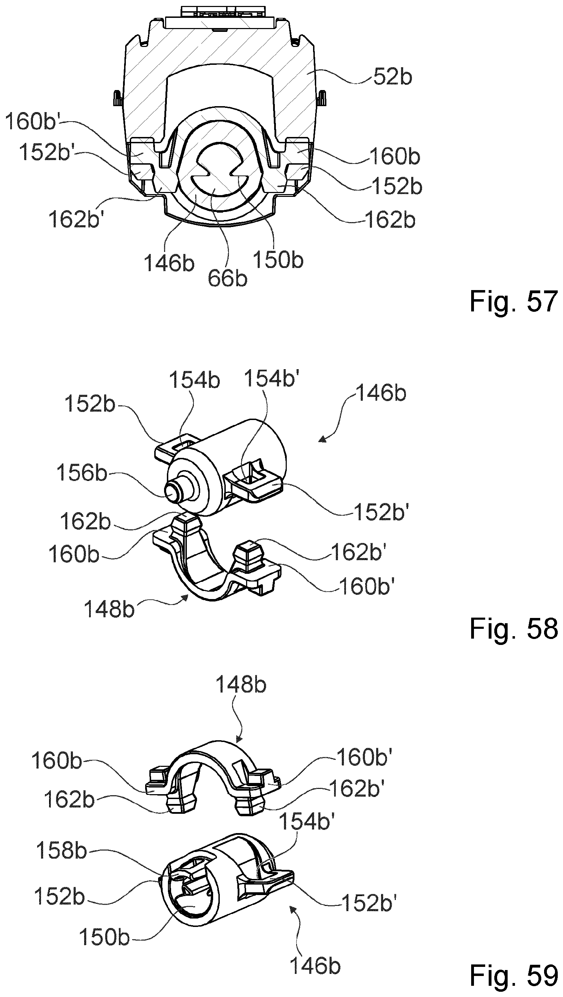

Der Wellenflügel 146b ist mit seiner Öffnung, einem Sackloch, auf dem ersten Achsfortsatz 66b des Rotors 58b aufgesteckt bzw. mit diesem gekoppelt. Die ausgebildete schwalbenschwanzförmige Geometrie, wie sie auch in Fig. 57 erkennbar ist, bringt eine drehfeste Verbindung des Wellenflügels 146b mit dem ersten Achsfortsatz 66b des Käfigelements 60b. Die Verbindung ist vorzugsweise als Presssitz ausgestaltet, es ist aber auch denkbar, dass die Verbindung nicht starr ist und außer der radialen Verdrehsicherung keine weitere axiale Sicherung realisiert ist, da im Zusammenspiel der weiteren Bauteile ein Verrutschen in axialer Richtung verhindert wird.

Der Wellenflügel 146b liegt auf dem Feder- und Dämpfungselement 148b auf bzw. ist mit diesem verbunden. Das elastische Feder- und Dämpfungselement 148b ist fest mit dem Wellenflügel 146b verbunden. Das Feder- und Dämpfungselement 148b liegt seinerseits wiederum an der Rahmeneinheit 52b auf, sodass im montierten Zustand aller Elemente die Rückstelleinheit durch das Zusammenspiel der genannten Elemente gebildet wird. Das Feder- und Dämpfungselement 148b ist insbesondere drehfest an der Rahmeneinheit 52b fixiert. Die Rückstelleinheit liegt an der Rahmeneinheit 52b an. Das Feder- und Dämpfungselement 148b ist bei einer Auslenkung des Wellenflügels 146b in Umfangsrichtung aus einer Ruheposition, zu einer Erzeugung einer Rückstellkraft vorgesehen ist. Das elastische Feder- und Dämpfungselement 148b weist ferner in einem montierten Zustand gegenüber der Rahmeneinheit 52b eine Vorspannung auf, wobei die Rahmeneinheit 52b eine Auflagefläche für das Feder- und Dämpfungselement 148b ausbildet. Der Wellenflügel 146b ist vorzugsweise aus einer starren Hartkomponente gebildet, während das Feder- und Dämpfungselement 148b vorzugsweise aus einer Weichkomponente vorzugsweise einem Silikon mit einer Shore A Härte von 25 Shore A bis 75 Shore A vorzugsweise von 35 Shore A bis 65 Shore A gebildet wird. Diese Anordnung führt dazu, dass wenn der Rotor 58b ausgelenkt wird, der Wellenflügel 146b ebenfalls auslenkt und so das Feder- und Dämpfungselement 148b auf die Rahmeneinheit 52b drückt. Beim Nachlassen der Kräfte für die Auslenkung drückt das Feder- und Dämpfungselement 148b den Wellenflügel 146b wieder zurück in die Nulllage. Die Nulllage ist definiert als Position, ohne Auslenkung des Antriebs.

Das Feder- und Dämpfungselement 148b kann bei einem anderen Aufbau auch an einem anderen Element als der Rahmeneinheit 52b fixiert sein, beispielsweise kann sich das Feder- und Dämpfungselement 148b an einem Gehäuse anlehnen oder daran fixiert sein, welches als Fixpunkt der Anwendung gilt. Damit würde der Wellenflügel 146b auf eine Achse gesteckt und das Feder- und Dämpfungselement 148b würde am Gehäuse anlehnen/fixiert. Das Feder- und Dämpfungselement 148b und der Wellenflügel 146b müssen nicht zwingend miteinander verbunden sein, damit sie wirken können. Durch den durch das Gehäuse gegebenen Fixpunkt ist die Rückstellung in der Anwendung möglich.

Bei jeglicher Anwendung von Wellenflügel 146b und Feder- und Dämpfungselement 148b muss beachtet werden, dass die Achse, insbesondere der Achsfortsatz 66b, auf welche der Wellenflügel 146b aufgesteckt wird, zusammen mit dem Wellenflügel 146b genügend starr ist und durch die Belastungen im Betrieb nicht verbogen wird.

Die so ausgebildete Rückstelleinheit ist insbesondere zu einer Durchführung einer Verdrehung von 2° bis 10° vorzugsweise von 3° bis 7° vorgesehen. Das elastische Feder- und Dämpfungselement 148b begrenzt eine Verdrehung des Wellenflügels 146b auf einen Rotationswinkel von 2° bis 10° vorzugsweise von 3° bis 7°.

Zudem weist die Antriebseinheit 48b einen Stator 76b auf. Der Stator 76b umfasst einen einstückig ausgeführten Träger 78b, ein in den Träger 78b eingesetztes Blechpaket 80b und eine das Blechpaket 80b umgreifende Spule 82b. Der Stator 76b umfasst den einstückig ausgeführten Träger 78b aus einer Hartkomponente, das in den Träger 78b eingesetzte Blechpaket 80b, die das Blechpaket 80b umgreifende Spule 82b sowie eine zwischen der Spule 82b und dem Blechpaket 80b angeordnete Leitblechabdeckung. Der Stator 76b ist als ein Modul ausgebildet. Der Träger 78b ist von einem Kunststoffträger gebildet. Der Träger 78b ist von einem im Wesentlichen quaderförmigen Träger gebildet welcher auf einer ersten Seite eine quaderförmige Ausnehmung zu einer Aufnahme des Blechpakets 80b aufweist. Das Blechpaket 80b weist einen U-förmigen Querschnitt auf, wobei die freien Enden des Blechpakets 80b jeweils von dem Träger wegweisen. Das Blechpaket 80b besteht aus einer Vielzahl von dicht an dicht gepackten Leitblechen. Die Leitbleche sind insbesondere in den Trägern 78b eingeklebt, eingepresst, eingerastet oder sonstwie verbunden. Ferner weist der Träger 78b auf einer Rückseite der Ausnehmungen eine Führungsnut zu einer Aufnahme der Spule 82b auf. Die Spule 82b umschließt den Träger 78b und das Blechpaket 80b. Die Spule 82b ist um das Blechpaket 80b und den Träger 78b gewickelt. Die Spule 82b ist in Längsrichtung orientiert. Die Spule 82b und das Blechpaket 80b sind kontaktlos ausgeführt. Zu einer Isolierung der Spule 82b gegenüber dem Blechpaket 80b auf einer dem Träger 78b abgewandten Seite weist der Stator 76b ein nicht weiter sichtbares Isolationsplättchen auf, welches zwischen der Spule 82b und dem Blechpaket 80b angeordnet ist. Das Isolationsplättchen ist von einer Leitblechabdeckung gebildet. Das Isolationsplättchen besteht aus Kunststoff. Eine Montage der Leitblechabdeckung erfolgt mittels Einrasten, Kleben oder Ähnlichem. Das Isolationsplättchen schützt den Draht der Spule 82b vor den Kanten des Blechpakets 80b und verhindert einen Kurzschluss zwischen der Spule 82b und dem Blechpaket 80b. Der Träger 78b der Antriebseinheit 48b ist direkt mit der Rahmeneinheit 52b verbunden. Der Träger 78b ist mit der Rahmeneinheit 52b verschraubt. Grundsätzlich wäre jedoch auch eine andere, einem Fachmann als sinnvoll erscheinende Verbindung denkbar. Der Träger 78b deckt den Rotor 58b der Antriebseinheit 48b von einer Seite ab. Der Träger 78b verdeckt eine erste geöffnete Seite des Aufnahmebereichs der Rahmeneinheit 52b für den Rotor 58b. Ferner ragt das Blechpaket 80b teilweise in den Aufnahmebereich des Rotors 58b auf. Das Blechpaket 80b umgreift den Rotor 58b in einem montierten Zustand zumindest teilweise.

Ferner weist das elektrische Zahnbürstenhandteil 12b eine Rotorabdeckung 88b auf. Die Rotorabdeckung 88b deckt den Rotor 58b der Antriebseinheit 48b von einer dem Träger 78b gegenüberliegenden Seite ab. Die Rotorabdeckung 88b verdeckt eine zweite geöffnete Seite des Aufnahmebereichs der Rahmeneinheit 52b für den Rotor 58b. Der Rotor 58b ist in einem montierten Zustand direkt von dem Stator 76b, der Rahmeneinheit 52b und der Rotorabdeckung 88b umgeben. Die Rotorabdeckung 88b ist von einem Kunststoffteil gebildet. Die Rotorabdeckung 88b ist fest mit der Rahmeneinheit 52b verbunden. Die Rotorabdeckung 88b ist gegenüber dem Träger 78b mit der Rahmeneinheit 52b verbunden. Die Rotorabdeckung 88b ist mit der Rahmeneinheit 52b verschraubt. Grundsätzlich wäre jedoch auch eine andere, einem Fachmann als sinnvoll erscheinende Art der Verbindung denkbar. Die Rotorabdeckung 88b ist zusammen mit der Rahmeneinheit 52b zu einer Lagerung und Fixierung des Rotors 58b der Antriebseinheit 48b vorgesehen. Die Rotorabdeckung 88b und die Rahmeneinheit 52b bilden jeweils zwei halbkreisförmige Achsaufnahmen zu einer Aufnahme des Rotors 58b aus. Die halbkreisförmigen Achsaufnahmen sind jeweils von korrespondierenden Achsaufnahmen gebildet, welche gemeinsam eine vollständige Achsaufnahme ausbilden. Die Achsaufnahmen sind jeweils zu einer Aufnahme der beiden Achsfortsätze 66b, 68b des Rotors 58b über jeweils ein Lager 118b, 120b vorgesehen. In den Achsaufnahmen sind dazu die Lager 118b, 120b aufgenommen, welche wiederum zu einer Lagerung der Achsfortsätze 66b, 68b des Rotors 58b gegenüber der Rahmeneinheit 52b vorgesehen sind. Es sind verschiedene, einem Fachmann als sinnvoll erscheinende Ausgestaltungen der Lager 118b, 120b denkbar. Der Rotor 58b ist zwischen der Rahmeneinheit 52b und der Rotorabdeckung 88b gelagert. Die Rotorabdeckung 88b ist zusammen mit der Rahmeneinheit 52b zudem zu einer Lagerung und Abdichtung der Achse 110b der Schnittstelle 24b vorgesehen. Die Rotorabdeckung 88b und die Rahmeneinheit 52b bilden dazu jeweils eine halbkreisförmige Achsaufnahme zu einer Aufnahme eines Dichtrings 122b sowie eines Lagers 124b für die Achse 110b aus. Die Achse 110b ist zwischen der Rotorabdeckung 88b und der Rahmeneinheit 52b gelagert. Es sind verschiedene, einem Fachmann als sinnvoll erscheinende Ausgestaltungen des Lagers 124b denkbar. Beispielsweise wäre denkbar, dass das Lager 124b jeweils von einem Gleitlager aus Kunststoff oder dem Material Iglidur gebildet ist. Die Rotorabdeckung 88b erstreckt sich daher axial von der Antriebseinheit 48b bis zu einem Achsaustritt der Schnittstelle 24b aus dem Gehäuse 46b.

Des Weiteren weist das elektrische Zahnbürstenhandteil 12b eine Abdeckkappe 126b auf. Die Abdeckkappe 126b ist dazu vorgesehen, über ein achsseitiges Ende der Rotorabdeckung 88b und der Rahmeneinheit 52b geschoben zu werden. Die Abdeckkappe 126b umgreift in einem montierten Zustand jeweils das achsseitige Ende der Rotorabdeckung 88b und der Rahmeneinheit 52b. Die Abdeckkappe 126b dient zu einer weiteren Verbindung und Zentrierung der Rotorabdeckung 88b und der Rahmeneinheit 52b zueinander. Des Weiteren dient die Abdeckkappe 126b zu einer Achsführung der Achse 110b der Schnittstelle 24b. Die Achse 110b ist dazu durch die Abdeckkappe 126b hindurch geführt. Ferner dient die Abdeckkappe 126b zu einer Abdichtung eines Gehäuseinneren gegenüber der Schnittstelle 24b. Die Abdeckkappe 126b dient zu einer Abdichtung zwischen dem Gehäuse 46b und der Rahmeneinheit 52b. Die Abdeckkappe 126b umfasst dazu einen Dichtring 128b.

Ferner dient die Rückstelleinheit, bestehend aus Wellenflügel 146b und Feder- und Dämpfungselement 148b, als Anschlagselement. Das Anschlagselement ist dazu vorgesehen, eine Verdrehung des Rotors 58b der Antriebseinheit 48b aus einer Ausgangslage heraus zu begrenzen. Das Anschlagselement bildet jeweils einen Endanschlag des Rotors 58b bei einer oszillierenden Antriebsbewegung aus.

Insgesamt kann dieses hier vorliegende Anschlagselement auch mit weiteren Anschlagselementen, wie sie beispielsweise im Zusammenhang mit der Ausführungsform der Erfindung vorliegen, kombiniert werden.

Des Weiteren weist das Zahnbürstenhandteil 12b einen in dem Gehäuse 46b aufgenommenen Energiespeicher 50b.1; 50.2 zu einer Versorgung der Antriebseinheit 48b mit Energie auf. Die Rahmeneinheit 52b nimmt den Energiespeicher 50b.1; 50.2 in der vorliegenden Ausführungsform an einem Ende in Längsrichtung auf. Der Energiespeicher 50b.1; 50.2 ist auf einer der Schnittstelle 24b abgewandten Seite der Antriebseinheit 48b angeordnet. Der Energiespeicher 50b.1; 50.2 wird radial durch seitliche Haltearme der Rahmeneinheit 52b geführt - hier nicht verklemmt. Ferner wird eine Längsverschiebung des Energiespeichers 50b.1; 50.2 durch die Montage der Rahmeneinheit 144b der Ladespule 54b im Zusammenspiel mit der Ladespule 54b und dem Ausgleichselement vermieden. Der Energiespeicher 50b.1; 50.2 ist im montierten Zustand im Wesentlichen koaxial zu der Antriebseinheit 48b angeordnet. Der Energiespeicher 50b.1; 50.2 ist von einem Akkumulator, insbesondere einem NiMh-Akkumulator und/oder einem Li-lon- Akkumulator, gebildet. Grundsätzlich wäre jedoch auch eine andere, einem Fachmann als sinnvoll erscheinende Ausgestaltung des Energiespeichers 50b.1; 50.2 denkbar, wie beispielsweise als Batterie.

Das elektrische Zahnbürstenhandteil 12b weist ferner eine Ladespule 54b zu einem Aufladen des Energiespeichers 50b.1; 50.2 auf. Grundsätzlich wäre jedoch auch eine Aufladung des Energiespeichers 50b.1; 50.2 direkt mittels Steckverbindung denkbar. Die Ladespule 54b ist von einer Induktionsspule gebildet. Die Ladespule 54b ist in der festen Rahmeneinheit 144b der Ladespule 54b aufgenommen und mittels dieser an der Rahmeneinheit 52b fixiert. Die Rahmeneinheit 144b der Ladespule 54b weist einen Aufnahmebereich zu einer positionsfesten Aufnahme der Ladespule 54b auf. Die Ladespule 54b wird von der Rahmeneinheit 144b der Ladespule 54b von außen gehalten und mittels des Ausgleichselements in Längsposition gehalten. Die Position der Ladespule 54b wird so sowohl radial als auch axial gesichert. Eine Montage der Ladespule 54b erfolgt insbesondere entlang der Längsachse. Die Ladespule 54b ist auf einer der Antriebseinheit 48b abgewandten Seite des Energiespeichers 50b.1; 50.2 angeordnet. Die Ladespule 54b ist im Wesentlichen koaxial zu dem Energiespeicher 50b.1; 50.2 und der Antriebseinheit 48b angeordnet. Der Deckel 113b greift ferner in einem montierten Zustand in die Ladespule 54b ein, um zu ermöglichen, dass ein Ferritkern eines Ladegeräts in der Spule platziert werden kann. Die Ladespule 54b weist insbesondere einen Innendurchmesser von 6 mm bis 14 mm, vorzugsweise von 8 mm bis 15 mm, und einen Außendurchmesser von 12 mm bis 19mm, vorzugsweise von 14 mm bis 17 mm, auf. Ferner weist die Ladespule 54b insbesondere eine Höhe von 4 mm bis 15 mm, vorzugsweise von 5 mm bis 10 mm, auf.

Ferner weist das elektrische Zahnbürstenhandteil 12b eine Leiterplatte 56b auf. Die Leiterplatte 56b ist zu einer Steuerung der Antriebseinheit 48b vorgesehen. Die Leiterplatte 56b ist in einem Betrieb zu einer Sinus-Ansteuerung der Antriebseinheit 48b vorgesehen. Die Leiterplatte 56b ist dazu mit dem Energiespeicher 50b.1; 50.2 gekoppelt. Der Energiespeicher 50b.1; 50.2 ist mit Leitungen über die Leiterplatte 56b, auf welcher die Steuerung integriert ist, mit der eigentlichen Antriebseinheit 48b verbunden. Der Energiespeicher 50b.1; 50.2 ist mit der Spule 82b verbunden, welche um das Blechpaket 80b gewickelt ist, wobei die Spule 82b nicht direkt auf dem Blechpaket 80b aufliegt, sondern einerseits am Träger 78b und andererseits an der Leitblechabdeckung aufliegt. In der Spule 82b wird ein Wechselstrom erzeugt, welcher dafür sorgt, dass sich an den freien Enden des Blechpakets 80b eine alternierende Polarisierung ausbildet. Im Rotor 58b sind die Magnete 62b, 62b' fest angeordnet und mittels der Abdeckungen 70b, 70b' montiert, die das von den Magneten 62b, 62b' ausgebildete Feld optimieren. Der Rotor 58b ist innerhalb des Blechpakets 80b drehbar gelagert. Durch die Polarisierung der freien Enden des Blechpakets 80b will sich der Rotor 58b mit den Magneten 62b, 26b' im Feld neu ausrichten, wodurch eine Bewegung entsteht. Werden die Enden des Blechpakets 80b umpolarisiert, so will sich der Rotor 58b in die andere Richtung ausrichten. Dadurch entsteht eine oszillierende Hin- und Her-Bewegung des Rotors 58b. Die Rückstelleinheit auf der Rotationsachse stellt die Rückführung des Rotors 58b in eine Nullposition sicher, des Weiteren sorgt sie für sanftere Bewegungsübergänge wenn die Polarisierung wechselt. Insgesamt ist die Rückstelleinheit notwendig, damit die Bewegungen überhaupt möglich sind, da die Kräfte durch die Polarisierung ansonsten so groß wären, dass keine Oszillation möglich wäre.

Was mittels der Leiterplatte 56b gesteuert wird, sind die Energie-Pulse die der Antriebseinheit 48b zugeführt werden. Diese Größen sind spezifisch auf den vorliegenden Antrieb bzw. das Produkt angepasst. Damit ein ruhiger Lauf der Antriebseinheit 48b erreicht wird, wird die Antriebseinheit 48b sinusförmig angesteuert und nicht mit Pulsen und Pausen.

Ferner ist die Leiterplatte 56b mit der Ladespule 54b gekoppelt. Die Leiterplatte 56b ist zu einer Steuerung eines Ladevorgangs des Energiespeichers 50b.1; 50.2 vorgesehen. Des Weiteren weist die Leiterplatte 56b ein sich durch einen Grundkörper 112b des Gehäuses 46b hindurch betätigbares Betätigungselement 136b auf, welches zu einer Aktivierung und/oder Deaktivierung des Zahnbürstenhandteils 12b dient. Das Betätigungselement 136b ist dazu vorgesehen, durch eine Umspritzung 114b des Gehäuses 46b hindurch, betätigt zu werden. Ferner sind auf der Leiterplatte 56b weitere Elemente vorgesehen, wie insbesondere Leitungen, Widerstände, LED's und/oder eine Steuereinheit. Die Leiterplatte 56b ist ferner teilweise formschlüssig durch die Rahmeneinheit 52b aufgenommen und erstreckt sich über einen Großteil einer axialen Erstreckung der Rahmeneinheit 52b. Die Leiterplatte 56b erstreckt sich zumindest über den Energiespeicher 50b.1; 50.2 und die Antriebseinheit 48b des Zahnbürstenhandteils 12b. Zu einer formschlüssigen Aufnahme der Leiterplatte 56b weist die Rahmeneinheit 52b mehrere hakenförmige Formschlusselemente 138b auf, welche dazu vorgesehen sind, die Leiterplatte 56b in einem montierten Zustand teilweise zu übergreifen. Die Leiterplatte 56b weist für eine Montage an einer Außenkante zu den Formschlusselementen 138b korrespondierende Ausnehmungen 140b auf, über welche die Leiterplatte 56b zu einer Montage an den Formschlusselementen 138b vorbei in eine Endlage bewegt werden kann. Vorzugsweise wird die Leiterplatte 56b bei einer Montage zu einer Endlage versetzt auf die Rahmeneinheit 52b aufgesetzt, wobei die Leiterplatte 56b mittels der Ausnehmungen 140b an den Formschlusselementen 138b vorbeigeführt werden kann. Anschließend wird die Leiterplatte 56b unter die Formschlusselemente 138b geschoben und dadurch fixiert. Die Leiterplatte 56b weist dazu nicht weiter sichtbare, separate, kleine Aussparungen zum Einrasten in der Endposition auf. Zusätzlich dienen die Formschlusselemente 138b als Niederhalter, welche die Leiterplatte 56b kraftschlüssig halten. An einem unteren Ende der Leiterplatte 56b weist die Rahmeneinheit 52b zudem einen Anschlag mit Rampe auf, welcher zu einer exakten Positionierung der Leiterplatte 56b dient.

Toleranzen zwischen der Rahmeneinheit 52b und ihren Bauteilen und dem Gehäuse 46b müssen aufgefangen werden, damit einerseits das Betätigungselement 136b im montierten Zustand an der korrekten Position für die Betätigung durch das Gehäuse 46b hindurch ist und andererseits aber auch die Ladespule 54b optimal liegt, damit der induktive Ladevorgang einen optimalen Wirkungsgrad erreicht. Weiter müssen Toleranzen aufgefangen werden, damit die Rahmeneinheit 52b und die Rahmeneinheit 144b der Ladespule 54b fest, insbesondere spielfrei, im Gehäuse 46b sitzt und im Betrieb keine Geräusche entstehen. Der Längenausgleich zum Auffangen von Toleranzen passiert erfindungsgemäß durch das Ausgleichelement, beispielsweise eines komprimierbaren Kunststoffs, wie er erfindungsgemäß zwischen Ladespule 54b und Energiespeicher 50b.1, 50.2 angebracht ist. Weiter könnten aber auch elastische Elemente an der Rahmeneinheit 52b integriert sein, um den Längenausgleich sicherzustellen. Beispielsweise biegbare Elemente, die beim Montieren eines Deckels 113b gespannt d.h. verbogen werden.

Insgesamt kann die Rahmeneinheit 52b mit montierter Rahmeneinheit 144b der Ladespule 54b in mehrere Zonen unterteilt werden. Die Rahmeneinheit 144b der Ladespule 54b weist eine Spulenzone auf. Die Spulenzone bildet von unten her gesehen die erste Zone und dient zu einer direkten Aufnahme und Montage der Ladespule 54b. Ferner weist die Rahmeneinheit 52b eine Akkuzone auf. Die Akkuzone schließt direkt an die Spulenzone an und ist zu einer Aufnahme des Energiespeichers 50b.1; 50.2 vorgesehen. Des Weiteren weist die Rahmeneinheit 52b eine Federzone auf. Die Federzone schließt auf einer der Spulenzone abgewandten Seite direkt an die Akkuzone an und ist zu einer Aufnahme der Rückstelleinheit vorgesehen. Zudem weist die Rahmeneinheit 52b eine Schwingankerzone auf. Die Schwingankerzone schließt auf einer der Spulenzone abgewandten Seite direkt an die Federzone an und ist zu einer Aufnahme der Antriebseinheit 48b vorgesehen. Die Rahmeneinheit 52b ist im Bereich der Schwingankerzone durchgängig geöffnet. Zudem weist die Rahmeneinheit 52b eine Achszone auf. Die Achszone schließt auf einer der Spulenzone abgewandten Seite direkt an die Schwingankerzone an und ist zu einer Aufnahme der Schnittstelle 24b bzw. der Achse 110b der Schnittstelle 24b vorgesehen. Des Weiteren weist die Rahmeneinheit 52b eine Print-Zone auf. Die Print-Zone ist auf einer Vorderseite der Rahmeneinheit angeordnet und ist zu einer Aufnahme der Leiterplatte 56b vorgesehen.

Eine Bestückung der Rahmeneinheit 52b erfolgt im Wesentlichen über eine Rückseite. Von vorne werden lediglich die Leiterplatte 56b und der Stator 76b montiert. Ferner werden entlang der Längsachse die Ladespule 54b und eine Verbindungskappe montiert. Die Antriebseinheit 48b und der Energiespeicher 50b.1; 50.2 werden von einer Rückseite der Rahmeneinheit 52b her montiert.

Bei einer Montage des elektrischen Zahnbürstenhandteils 12b wird erfindungsgemäß in einem ersten Schritt das gesamte Innenleben über die Rahmeneinheit 52b und die Rahmeneinheit 144b der Ladespule 54b montiert und anschließend in einem zweiten Schritt in das Gehäuse 46b eingeschoben. Die Rahmeneinheit 52b mit montierter Rahmeneinheit 144b der Ladespule 54b wird dabei im Gehäuse 46b verklemmt. Die Rahmeneinheit 52b weist dazu Rastnasen auf, welche in Rastausnehmungen des Gehäuses 46b eingreifen. Darauffolgend wird in einem dritten Schritt der Deckel 113b an dem Gehäuse 46b fixiert und fixiert und verschließt damit das Innenleben. Der Deckel 113b kann sowohl mit dem Gehäuse 46b verschraubt als auch beispielsweise mittels eines Bajonettverschlusses verriegelt werden.

In den Figuren 57 bis 59 werden weitere Details zum Wellenflügel 146b und zum Feder- und Dämpfungselement 148b ersichtlich.

Der Wellenflügel 146b ist in seiner Draufsicht kreuzförmig aufgebaut. Im Zentrum ist ein zylindrischer Körper ausgeformt, der in axialer Richtung mit einem Sackloch 150b mit schwalbenschwanzförmigem Querschnitt ausgestattet ist. Diese Geometrie dient später zur Aufnahme des Achsfortsatzes 66b des Rotors 58b. Weiter sind seitlich, einander 180° gegenüber der Achse entgegenliegend (symmetrisch) Flügel 152b, 152b' ausgebildet. Die Flügel 152b, 152b' sind mit einem Durchgangsloch 154b, 154b' ausgestattet. In axialer Richtung, dem Sackloch 150b entgegengesetzt, ist ein Fortsatz 156b gebildet, der im montierten Zustand die axiale Verschiebung innerhalb der Baugruppe unterbindet. Zur Sicherung des Wellenflügels 146b auf dem Achsfortsatz 66b des Rotors 58b ist auf dem Rotor 58b eine Schnappnase und auf dem Wellenflügel 146b ein Schnappring 158b ausgebildet.

Der Fortsatz 156b hat einen Durchmesser von 1.5 mm bis 5 mm vorzugsweise von 2.5 mm bis 3.5 mm. Die Länge des Fortsatzes 156b beträgt 1.5 mm bis 5 mm vorzugsweise 2.5 mm bis 3.5 mm. Das Sackloch 150b hat eine Tiefe von 7 mm bis 14 mm vorzugsweise von 9 mm bis 12 mm. Die Breite des Wellenflügels 146b, über die Flügel 152b, 152b' gemessen, beträgt zwischen 14 mm und 22 mm vorzugsweise zwischen 17 mm und 19 mm. Der Außendurchmesser des zylindrischen Körpers beträgt zwischen 7 mm und 11 mm vorzugsweise zwischen 8 mm und 10 mm.

Das Feder- und Dämpfungselement 148b ist im Querschnitt als halbkreisförmiges Element mit seitlichen Flanschen 160b, 160b' geformt. Auf der Unterseite hat das Element an den Flanschen 160b, 160b' zwei Fortsätze, die im montierten Zustand auf der Rahmeneinheit 52b aufliegen. Dadurch dass Fortsätze ausgeformt sind, ist die Elastizität bzw. eine Verformbarkeit gegeben. Auf der Oberseite sind ebenfalls Fortsätze 162b, 162b' gebildet, welche an den Flanschen 160b, 160b' angrenzend an die Geometrie für die Aufnahme des Wellenflügels 146b ausgebildet sind. Diese Fortsätze 162b, 162b' werden in die Durchgangslöcher 154b, 154b' des Wellenflügels 146b montiert und halten die beiden Teile zusammen. Die Fortsätze 162b, 162b' haben Hinterschnitte, die dies bewerkstelligen. Die Innengeometrie des Feder- und Dämpfungselements 148b ist an die Außengeometrie des Wellenflügels 146b angepasst. Die Geometrie ist so gewählt, dass die nötige Teil-Rotation des Wellenflügels 146b möglich ist.

Das Feder- und Dämpfungselement 148b hat eine Länge (Richtung der Antriebsachse im montierten Zustand) von 4 mm bis 8 mm vorzugsweise von 5 bis 6.5 mm. Die Breite senkrecht dazu beträgt zwischen 14 mm und 22 mm vorzugsweise zwischen 17 mm und 19 mm. Die Höhe - von der Rundung zum Fortsatz - beträgt zwischen 6 mm und 11 mm vorzugsweise zwischen 7.5 mm und 9.5 mm. Die Fortsätze der Unterseite haben eine Höhe von 1 mm bis 3 mm vorzugsweise von 1.2 mm bis 1.8 mm. Die Fortsätze 162b, 162b' der Oberseite haben eine Höhe von 1.5 mm bis 4 mm vorzugsweise von 2 mm bis 3.5 mm. Der Innendurchmesser am Feder- und Dämpfungselement 148b beträgt zwischen 7 mm und 11 mm vorzugsweise zwischen 8 mm und 10 mm.

Der Innendurchmesser am Feder- und Dämpfungselement 148b und der Außendurchmesser des zylindrischen Teils des Wellenflügels 146b sind so aufeinander abgestimmt, dass die Teil-Rotation möglich ist, ohne Reibungsverluste zu erzeugen.

Im montierten Zustand in Figur 57 ersichtlich ist, dass das Feder- und Dämpfungselement 148b und der Wellenflügel 146b ineinander montiert sind, dass das Feder- und Dämpfungselement 148b an der Rahmeneinheit 52b aufliegt und eine Vorspannung generiert (dargestellt als Überschneidung). Die an der Rahmeneinheit 52b ausgebildete Auflagefläche ist in der Schnittdarstellung zu sehen.

Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

## Patentansprüche

1. Elektrisches Zahnbürstenhandteil mit zumindest einer Schnittstelle (24a; 24b) zu einer Kopplung mit einer Aufsteckbürste (10a; 10b), mit zumindest einem Gehäuse (46a; 46b), mit zumindest einer in dem Gehäuse (46a; 46b) aufgenommenen Antriebseinheit (48a; 48b) zu einem Antrieb der Schnittstelle (24a; 24b), mit zumindest einem Energiespeicher (50.1a, 50.2a; 50.1b) zu einer Versorgung der Antriebseinheit (48a; 48b) mit Energie, und mit einer, in dem Gehäuse (46a; 46b) angeordneten, festen, einstückig ausgeführten Rahmeneinheit (52a; 52b), welche die Antriebseinheit (48a; 48b) und den Energiespeicher (50.1a, 50.2a; 50.1b) aufnimmt, wobei die Rahmeneinheit (52a; 52b) mehrere Aufnahmebereiche zumindest für die Antriebseinheit (48a; 48b) und den Energiespeicher (50.1a, 50.2a; 50.1b) ausbildet, welche, sowohl in einem montierten Zustand, als auch in einem unmontierten Zustand der Rahmeneinheit (52a; 52b), definiert relativ zueinander positioniert sind, wobei sich die Rahmeneinheit (52a; 52b) axial über die gesamte Antriebseinheit (48a; 48b) und den gesamten Energiespeicher (50.1a, 50.2a; 50.1b) erstreckt, wobei zumindest eine Ladespule (54a; 54b) zu einem Aufladen des Energiespeichers (50.1a, 50.2a; 50.1b) in der festen Rahmeneinheit (52a; 52b) aufgenommen ist, wobei ein komprimierbares Längenausgleichselement (57a) zu einem Längenausgleich zum Auffangen von Toleranzen zwischen der Ladespule (54a) und der Rahmeneinheit (52a) angebracht ist.

2. Elektrisches Zahnbürstenhandteil nach Anspruch 1,
**gekennzeichnet durch**
eine separate Rahmeneinheit (144b) der Ladespule (54a; 54b), welche an der Rahmeneinheit (52a; 52b) montiert ist, wobei die Rahmeneinheit (144b) der Ladespule (54a; 54b) die Ladespule (54a; 54b) sowie ein Längenausgleichselement (57b) in sich trägt, welches von der Ladespule (54a; 54b) gegen den Energiespeicher gedrückt wird.

3. Elektrisches Zahnbürstenhandteil nach Anspruch 2,
**dadurch gekennzeichnet, dass**
die separate Rahmeneinheit (144b) der Ladespule (54a; 54b) durch Anstecken an der Rahmeneinheit (52a; 52b) montiert ist.

4. Elektrisches Zahnbürstenhandteil nach einem der vorhergehenden Ansprüche, **gekennzeichnet durch**
eine Leiterplatte (56a; 56b) zu einer Steuerung der Antriebseinheit (48a; 48b), welche zumindest teilweise formschlüssig durch die Rahmeneinheit (52a; 52b) aufgenommen ist und sich zumindest über einen Großteil einer axialen Erstreckung der Rahmeneinheit (52a; 52b) erstreckt.

5. Elektrisches Zahnbürstenhandteil nach Anspruch 4,
**dadurch gekennzeichnet, dass**
die Rahmeneinheit (52a; 52b) zu einer formschlüssigen Aufnahme der Leiterplatte (56a; 56b) zumindest zwei hakenförmige Formschlusselemente (138a; 138b) aufweist, welche dazu vorgesehen sind, die Leiterplatte (56a; 56b) in einem montierten Zustand teilweise zu übergreifen.

6. Elektrisches Zahnbürstenhandteil nach Anspruch 5,
**dadurch gekennzeichnet, dass**
die Leiterplatte (56a; 56b) für eine Montage an einer Außenkante zu den Formschlusselementen (138a; 138b) korrespondierende Ausnehmungen (140a; 140b) aufweist, über welche die Leiterplatte (56a; 56b) zu einer Montage an den Formschlusselementen (138a; 138b) vorbei in eine Endlage bewegt werden kann.

7. Elektrisches Zahnbürstenhandteil nach einem der vorhergehenden Ansprüche, **dadurch gekennzeichnet, dass**
der Energiespeicher (50.1a; 50.2a; 50.1b) radial durch seitliche Haltearme der Rahmeneinheit (52a; 52b) verklemmt ist.

8. Elektrisches Zahnbürstenhandteil nach einem der vorhergehenden Ansprüche, **gekennzeichnet durch**
zumindest eine Rotorabdeckung (88a; 88b), welche fest mit der Rahmeneinheit (52a; 52b) verbunden ist und zusammen mit der Rahmeneinheit (52a; 52b) zu einer Lagerung und/oder Fixierung eines Rotors (58a; 58b) der Antriebseinheit (48a; 48b) vorgesehen ist.

9. Elektrisches Zahnbürstenhandteil nach Anspruch 8,
**dadurch gekennzeichnet, dass**
die Rotorabdeckung (88a; 88b) mit der Rahmeneinheit (52a; 52b) verschraubt ist.

10. Elektrisches Zahnbürstenhandteil nach Anspruch 8 oder 9,
**dadurch gekennzeichnet, dass**
der Rotor (58a; 58b) zwischen der Rahmeneinheit (52a; 52b) und der Rotorabdeckung (88a; 88b) gelagert ist.

11. Elektrisches Zahnbürstenhandteil nach einem der Ansprüche 8 bis 10,
**gekennzeichnet durch**
eine Abdeckkappe (126a; 126b), welche dazu vorgesehen ist, über ein achsseitiges Ende der Rotorabdeckung (88a; 88b) und der Rahmeneinheit (52a; 52b) geschoben zu werden, wobei die Abdeckkappe (126a; 126b) in einem montierten Zustand jeweils das achsseitige Ende der Rotorabdeckung (88a; 88b) und der Rahmeneinheit (52a; 52b) umgreift.

12. Elektrisches Zahnbürstenhandteil nach Anspruch 11,
**dadurch gekennzeichnet, dass**
die Schnittstelle (24a; 24b) eine Achse (110a; 110b) aufweist, wobei die Abdeckkappe (126a; 126b) zu einer Achsführung der Achse (110a; 110b) der Schnittstelle (24a; 24b) vorgesehen ist, wobei die Achse (110a; 110b) dazu durch die Abdeckkappe (126a; 126b) hindurch geführt ist.

13. Elektrisches Zahnbürstenhandteil zumindest nach Anspruch 11,
**dadurch gekennzeichnet, dass**
die Abdeckkappe (126a; 126b) zu einer Abdichtung eines Gehäuseinneren gegenüber der Schnittstelle (24a; 24b) dient.

14. Verfahren zur Herstellung des elektrischen Zahnbürstenhandteils (12a; 12b) nach einem der vorhergehenden Ansprüche, wobei bei einer Montage des elektrischen Zahnbürstenhandteils (12a; 12b) in einem ersten Schritt das gesamte Innenleben über die Rahmeneinheit (52a; 52b) montiert und anschließend in einem zweiten Schritt in das Gehäuse (46a; 46b) eingeschoben wird.

15. Elektrische Zahnbürste mit einem elektrischen Zahnbürstenhandteil (12a; 12b) nach einem der Ansprüche 1 bis 13 und mit einer Aufsteckbürste (10a; 10b).

## Claims

1. An electric toothbrush handpiece having at least one interface (24a; 24b) for coupling to a brush attachment (10a; 10b), having at least one housing (46a; 46b), having at least one drive unit (48a; 48b) for driving the interface (24a; 24b), which is received in the housing (46a; 46b), having at least one energy store (50.1a, 50.2a; 50.1b) for supplying energy to the drive unit (48a; 48b), and having a fix frame unit (52a; 52b) which is arranged in the housing (46a; 46b) and which is implemented as a single piece and which receives the drive unit (48a; 48b) and the energy store (50.1a, 50.2a; 50.1b), wherein the frame unit (52a; 52b) forms multiple receptacle regions at least for the drive unit (48a; 48b) and the energy store (50.1a, 50.2a; 50.1b), which receptacle regions are positioned in a defined manner relative to one another in particular both in an assembled state and in an unassembled state of the frame unit (52a; 52b), wherein the frame unit (52a; 52b) extends axially over the entire drive unit (48a; 48b) and the entire energy store (50.1a, 50.2a; 50.1b), wherein at least one charging coil (54a; 54b) for charging the energy store (50.1a, 50.2a; 50.1b) is received in the fix frame unit (52a; 52b), wherein a compressible length compensation element (57a) for a length compensation for a compensation of tolerances is fitted between the charging coil (54a) and the frame unit (52a).

2. The electric toothbrush handpiece according to claim 1,
**characterized by**
a separate frame unit (144b) of the charging coil (54a; 54b), which is installed on the frame unit (52a; 52b), wherein the frame unit (144b) of the charging coil (54a; 54b) carries within the charging coil (54a; 54b) and also a length compensation element (57b), which is pressed by the charging coil (54a; 54b) against the energy store.

3. The electric toothbrush handpiece according to claim 2,
**characterized in that**
the separate frame unit (144b) of the charging coil (54a; 54b) is installed on the frame unit (52a; 52b) by a plugging-on process.

4. The electric toothbrush handpiece according to any one of the preceding claims, **characterized by**
a circuit board (56a; 56b) for control of the drive unit (48a; 48b), which circuit board is at least partially received in positively locking fashion by the frame unit (52a; 52b) and extends at least over a large part of an axial extent of the frame unit (52a; 52b).

5. The electric toothbrush handpiece according to claim 4,
**characterized in that,**
to receive the circuit board (56a; 56b) in positively locking fashion, the frame unit (52a; 52b) has at least two hook-shaped positive-locking elements (138a; 138b), which are configured for partially engaging over the circuit board (56a; 56b) in an installed state.

6. The electric toothbrush handpiece according to claim 5,
**characterized in that,**
for an installation process, the circuit board (56a; 56b) has, on an outer edge, recesses (140a; 140b) which correspond to the positive-locking elements (138a; 138b) and via which the circuit board (56a; 56b) can, for installation thereof, be moved past the positive-locking elements (138a; 138b) into an end position.

7. The electric toothbrush handpiece according to any one of the preceding claims, **characterized in that**
the energy store (50.1a; 50.2a; 50.1b) is clamped radially by lateral holding arms of the frame unit (52a; 52b).

8. The electric toothbrush handpiece according to any one of the preceding claims, **characterized by**
at least one rotor cover (88a; 88b) which is connected fixedly to the frame unit (52a; 52b) and which, together with the frame unit (52a; 52b), is configured for a support and/or fixing of the rotor (58a; 58b) of the drive unit (48a; 48b).

9. The electric toothbrush handpiece according to claim 8,
**characterized in that**
the rotor cover (88a; 88b) is screwed to the frame unit (52a; 52b).

10. The electric toothbrush handpiece according to claim 8 or 9,
**characterized in that**
the rotor (58a; 58b) is supported between the frame unit (52a; 52b) and the rotor cover (88a; 88b).

11. The electric toothbrush handpiece according to any one of claims 8 to 10, **characterized by**
a covering cap (126a; 126b) which is configured for being pushed over a spindle-side end of the rotor cover (88a; 88b) and of the frame unit (52a; 52b), wherein, in an assembled state, the covering cap (126a; 126b) engages around in each case the spindle-side end of the rotor cover (88a; 88b) and of the frame unit (52a; 52b).

12. The electric toothbrush handpiece according to claim 11,
**characterized int hat**
the interface (24a; 24b) comprises a spindle (110a; 110b), wherein the covering cap (126a; 126b) is configured for spindle guidance of the spindle (110a; 110b) of the interface (24a; 24b), wherein, for this purpose, the spindle (110a; 110b) is guided through the covering cap (126a; 126b).

13. The electric toothbrush handpiece at least according to claim 11,
**characterized in that**
the covering cap (126a; 126b) serves for sealing off a housing interior with respect to the interface (24a; 24b).

14. A method for producing the electric toothbrush handpiece (12a; 12b) according to any one of the preceding claims, wherein, during a process of assembly of the electric toothbrush handpiece (12a; 12b), in a first step, all of the internal parts are installed via the frame unit (52a; 52b) and are subsequently, in a second step, pressed into the housing (46a; 46b).

15. An electric toothbrush having an electric toothbrush handpiece (12a; 12b) according to any one of claims 1 to 13 and having a brush attachment (10a; 10b).

## Revendications

1. Partie poignée électrique de brosse à dents avec au moins une interface (24a; 24b) pour un accouplement avec une brosse enfichable (10 ; 10b), avec au moins un boîtier (46a; 46b), avec au moins une unité d'entraînement (48a; 48b), accueillie dans le boîtier (46a; 46b), pour un entraînement de l'interface (24a; 24b), avec au moins un réservoir d'énergie (50.1a, 50.2a; 50.1b) pour un fournissement de l'unité d'entraînement (48a; 48b) de l'énergie,
et avec une unité de cadre (52a; 52b) fixe, réalisée d'une seule pièce, disposée dans le boîtier (46a; 46b), qui accueille l'unité d'entraînement (48a; 48b) et le réservoir d'énergie (50.1a, 50.2a; 50.1b), l'unité cadre (52a; 52b) formant plusieurs zones d'accueil au moins pour l'unité d'entraînement (48a; 48b) et le réservoir d'énergie (50.1a, 50.2a; 50.1b), qui sont positionnées de manière définie les unes par rapport aux autres aussi bien dans un état monté que dans un état non monté de l'unité cadre (52a; 52b), l'unité cadre (52a; 52b) s'étendant axialement sur toute l'unité d'entraînement (48a; 48b) et tout le réservoir d'énergie (50.1a, 50.2a; 50.1b), au moins une bobine à chargement (54a; 54b) pour une charge du réservoir d'énergie (50.1a, 50.2a; 50.1b) étant accueillie dans l'unité cadre fixe (52a; 52b), un élément de compensation de longueur compressible (57a) étant monté pour une compensation de longueur pour la compensation de tolérances entre la bobine à chargement (54a) et l'unité cadre (52a).

2. Partie poignée électrique de brosse à dents selon la revendication 1, **caractérisée par**
une unité cadre séparée (144b) de la bobine à chargement (54a; 54b), qui est montée sur l'unité cadre (52a; 52b), l'unité cadre (144b) de la bobine à chargement (54a; 54b) portant la bobine à chargement (54a; 54b) ainsi qu'un élément de compensation de longueur (57b), qui est pressé par la bobine à chargement (54a; 54b) contre le réservoir d'énergie.

3. Partie poignée électrique de brosse à dents selon la revendication 2, **caractérisée en ce que**
l'unité cadre séparée (144b) de la bobine à chargement (54a; 54b) est montée par enfichage sur l'unité cadre (52a; 52b).

4. Partie poignée électrique de brosse à dents selon l'une quelconque des revendications précédentes,
**caractérisée par**
une plaque de circuit (56a; 56b) pour une commande de l'unité d'entraînement (48a; 48b), laquelle est accueillie au moins partiellement par complémentarité de forme par l'unité cadre (52a; 52b) et s'étend au moins sur une grande partie d'une étendue axiale de l'unité cadre (52a; 52b).

5. Partie poignée électrique de brosse à dents selon la revendication 4, **caractérisée en ce que**
l'unité cadre (52a; 52b) présente, pour un accueil par complémentarité de forme de la plaque de circuit (56a; 56b), au moins deux éléments à complémentarité de forme en forme de crochet (138a; 138b), qui sont prévus pour venir en prise partiellement par-dessus la plaque de circuit (56a; 56b) dans un état monté.

6. Partie poignée électrique de brosse à dents selon la revendication 5, **caractérisée en ce que**
la plaque de circuit (56a; 56b) présente, pour un montage sur un bord extérieur, des évidements (140a; 140b) correspondant aux éléments à complémentarité de forme (138a; 138b), par le biais desquels la plaque de circuit (56a; 56b) peut être déplacée dans une position finale pour un montage devant les éléments à complémentarité de forme (138a; 138b).

7. Partie poignée électrique de brosse à dents selon l'une quelconque des revendications précédentes,
**caractérisée en ce que**
le réservoir d'énergie (50.1a ; 50.2a; 50.1b) est serré radialement par des bras de retenue latéraux de l'unité cadre (52a; 52b).

8. Partie poignée électrique de brosse à dents selon l'une quelconque des revendications précédentes,
**caractérisée par**
au moins un recouvrement de rotor (88a; 88b), lequel est relié fixement à l'unité cadre (52a; 52b) et est prévu conjointement avec l'unité cadre (52a; 52b) pour un support et/ou une fixation d'un rotor (58a; 58b) de l'unité d'entraînement (48a; 48b).

9. Partie poignée électrique de brosse à dents selon la revendication 8, **caractérisée en ce que**
le recouvrement de rotor (88a; 88b) est vissé à l'unité cadre (52a; 52b).

10. Partie poignée électrique de brosse à dents selon la revendication 8 ou 9, **caractérisée en ce que**
le rotor (58a; 58b) est supporté entre l'unité cadre (52a; 52b) et le recouvrement de rotor (88a; 88b).

11. Partie poignée électrique de brosse à dents selon l'une quelconque des revendications 8 à 10,
**caractérisée par**
un capuchon de recouvrement (126a; 126b), qui est prévu pour être poussé sur une extrémité côté axe du recouvrement de rotor (88a; 88b) et de l'unité cadre (52a; 52b), le capuchon de recouvrement (126a; 126b) venant en prise dans un état monté à chaque fois autour de l'extrémité côté axe du recouvrement de rotor (88a; 88b) et de l'unité cadre (52a; 52b).

12. Partie poignée électrique de brosse à dents selon la revendication 11, **caractérisée en ce que**
l'interface (24a; 24b) présente un axe (110a; 110b), le capuchon de recouvrement (126a; 126b) étant prévu pour un guidage axial de l'axe (110a; 110b) de l'interface (24a; 24b), l'axe (110a; 110b) étant guidé à cet effet à travers le capuchon de recouvrement (126a; 126b).

13. Partie poignée électrique de brosse à dents au moins selon la revendication 11, **caractérisée en ce que**
le capuchon de recouvrement (126a; 126b) sert à une étanchéification d'un intérieur de boîtier par rapport à l'interface (24a; 24b).

14. Procédé de fabrication de la partie poignée électrique de brosse à dents (12a; 12b) selon l'une quelconque des revendications précédentes, où lors d'un montage de la partie poignée électrique de brosse à dents (12a; 12b), dans une première étape, toute la vie intérieure est montée sur l'unité cadre (52 ; 52b) et ensuite, dans une deuxième étape, est poussée dans le boîtier (46a; 46b).

15. Brosse à dents électrique avec une partie poignée électrique de brosse à dents (12a; 12b) selon l'une quelconque des revendications 1 à 13 et avec une brosse enfichable (10a; 10b).
